(19) Europäisches Patentamt
European Patent Office
Office européen des brevets

(11) Veröffentlichungsnummer: **0 109 355**
**B1**

(12) # EUROPÄISCHE PATENTSCHRIFT

(45) Veröffentlichungstag der Patentschrift: **13.08.86**

(51) Int. Cl.⁴: **C 08 F 299/08**, B 29 D 11/00

(21) Anmeldenummer: **83810461.0**

(22) Anmeldetag: **06.10.83**

(54) **Hochfeste silikonhaltige Polymere mit hoher Sauerstoffdurchlässigkeit.**

(30) Priorität: **12.10.82 US 433743**

(43) Veröffentlichungstag der Anmeldung: **23.05.84 Patentblatt 84/21**

(45) Bekanntmachung des Hinweises auf die Patenterteilung: **13.08.86 Patentblatt 86/33**

(84) Benannte Vertragsstaaten: **AT BE CH DE FR GB IT LI LU NL SE**

(56) Entgegenhaltungen:
**US-A-4 260 725**
**US-A-4 341 889**

(73) Patentinhaber: **CIBA-GEIGY AG, Klybeckstrasse 141, CH-4002 Basel (CH)**

(72) Erfinder: **Mueller, Karl Friedrich, 119 West 77th Street, New York New York 10024 (US)**
Erfinder: **Heiber, Sonia Jaworiw, 48 David's Lane, Bedford Hills New York 10507 (US)**
Erfinder: **Plankl, Walter L., 26-47th Loretta Street, Yorktown Heights New York 10598 (US)**

**EP 0 109 355 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Vorliegende Erfindung betrifft klare, hochfeste, vernetzte Polymere, die man durch Copolymerisation von (A) einem linearen oder verzweigten Polysiloxanmakromeren, das mindestens zwei end- oder seitenständige polymerisierbare, über eine Urethan-, Thiourethan-, Harnstoff- oder Amidfunktion an das Polysiloxan gebundene Vinylgruppen enthält, und (B) einem Vinyl- oder Divinylmonomeren bzw. einem Monomerengemisch erhält, wobei diese Monomeren zu 85 bis 100% aus wasserunlöslichen Monomeren bestehen; diese Polymeren sind zur Herstellung weicher oder harter Kontaktlinsen, insbesondere harter Linsen, verwendbar.

Kontaktlinsen gehören zu zwei Hauptgruppen, die überlicherweise als "hart" und "weich" bezeichnet werden, sich aber besser nach der Art und Weise unterscheiden lassen, in der sie auf das Auge aufgesetzt werden. Harte Linsen werden ziemlich lose aufgesetzt, um den Auslausch von Tränenflüssigkeit zwischen der Linse und der Hornhaut zu erleichtern; sie erreichen dies durch ihre "Schaukelstunl"-Bewegung, wodurch sie kontinuierlich Tränenflüssigkeit aus dem Raum zwischen der Linse und der Augenoberfläche herauspumpen. Ein solcher Tränenflüssigkeitsaustausch ist der einzige Weg, auf dem der überaus wichtige Sauerstoff der Hornhaut von Trägern herkömmlicher, aus Polymethylmethacrylat (PMMA) hergestellter Kontaktlinsen zugeführt wird. Obwohl harte PMMA-Linsen zumindest anfänglich unangenehm und reizend für den Träger sind, weil beim Blinzeln das Augenlid auf eine harte Kante trifft, sind sie trotzdem verbreitet, da sie durch Drehen und Polieren mit hoher Genauigkeit hergestellt werden können. Dies ist besonders bei der Korrektur von Astigmatismus mit Linsen asymmetrischer Gestallt bedeutsam. Ein weiterer Vorteil besteht darin, dass sie sehr leicht sauberzu halten sind und keine Sterilisierung erfordern.

Weiche Kontaktlinsen haften dagegen dicht an der Hornhaut und sind deshalb angenehmer zu tragen; da sie nur einen begrenzten Austausch der Tränenflüssigkeit zulassen, müssen sie eine genügend hohe Sauerstoffdurchlässigkeit besitzen, um Ausgenschaden zu verhindern, selbst wenn sie nur für einige Stunden getragen werden. Bei allen im Handel erhältlichen weichen Linsen ist diese $O_2$— Durchlässigkeit abhängig von ihrem Wassergehalt, d.h. ihrer Hydrogelnatur. Zusätzlich wirkt Wasser als ein Weichmacher, welcher der Linse ihre Weichheit und den erforderlichen hydrophilen Charakter verleiht, der es der Linse ermöglicht, auf der Hornhaut zu schwimmen und zu drehen, Statt daren zu kleben. Das Ankleben an der Hornhaut ist das Hauptproblem bei wasserabstossenden weichen Linse, wie den im übrigen sehr anziehenden Silikonkautschuklinsen. Weiche Linsen aus Hydrogel bleten zwar höheren Tragekomfort, doch wird die Genauigkeit in Frage gestellt, da gewisse Verzerrungen durch Wasserquellung unvermeidlich sind; da die Linsen dazu neigen, sich auf dem Auge zu drehen, wird auch die Lösung des Astigmatismusproblems noch weiter erschwert. Zudem bestehen erhebliche Bedenken im Hinblick auf Proteinadsorption und Desinfektion, und die erhöhte Bequemlichkeit wird weitgehend durch die grösseren Unannehmlichkeiten der anspruchsvolleren Linsenpflegemethoden aufgewogen.

Die nächste wichtige Entwicklung in der Kontaklinsentechnik war die Herstellung von ständig, bei Tag und bei Nacht, bis zu mehreren Wochen lang zu tragenden Linsen. Dafür ist eine vielfache Erhöhung der Sauerstoffdurchlässigkeit der Linse erforderlich, weil während des Schlafs im geschlossenen Zustand der Augen der gesamte Sauerstoff durch den Blutstrom im Augenlid der Hornhaut zugeführt wird. In dieser Hinsicht nicht befriedigende Versuche sind unter anderem: (1) hochwasserhaltige Hydrogele mit bis zu 70% Wasser, deren Nachteil die geringe mechanische Festigkeit ist, wegen der sie dicker gemacht werden müssen und die $O_2$-Durchlässigkeit entsprechend verringert ist, und (2) Silikonkautschuklinsen, die stets wegen ihres extrem hydrophoben Charakters zum Misserfolg führten—sie haften wie ein Saugnapf an der Hornhaut und haben zu ernsthaften Augenschäden geführt. Versuche, die Oberfläche von Silikonkautschuklinsen genügend hydrophil zu machen, um dies zu verhindern, waren nich sehr erfolgreich, hauptsächlich da der behandelte Oberflächenbereich zu dünn ist, um bestehen zu bleiben. Beispeilsweise werden die von DOW CORNING under den Handelsnamen SILCON und SILSOFT hergestellten Linsen unter Bildung einer —Si—OH-Oberflächenschicht behandelt, die jedoch so dünn ist, dass sie sich leicht abreibt, insbesonders bei einer harten Linse. Gegenstand einer Ausführungsform dieser Erfindung ist eine silikonhaltige harte Linse, deren Oberfläche permanent benetzbar ist. Ein weiterer Nachteil von Kontaktlinsen aus 100% Silikonkautschuk liegt in der Schwierigkeit, die Kanten Fertigzustellen und zu polieren und sie dadurch für den Träger bequemer zu machen; dies ist eine Eigenschaft sämtlicher zu kautschukartiger Materialien. Gegenstand einer weiteren Ausführungsform dieser Erfindung sind silikonhaltige polymere Materialien im Bereich von "weich" bis "hart"—gemäss Kontaktlinsenbegriffen—die aber trotzdem sämtlich leicht polierbar sind.

Neuere Beispiele für silikonhaltige hydrophobe Polymere sind in den U.S. Patentschriften Nr. 4 153 641, 4 189 546 und 4 195 030 beschrieben, die aus polymerisierten oder copolymerisierten hochmolekularen Polysiloxan- oder Polyparaffinsiloxandiacrylaten und -methacrylaten bestehen. Die so gebildeten Polymeren sind hydrophob. Die U.S. Patentschrift Nr. 4 217 038 beschreibt eine Oberflächenbehandlung, um deren Oberfläche hydrophil zu machen. Weitere polysiloxanhaltige Kontaktlinsenmaterialien sind aus U.S. Patentschriften Nr. 4 208 362, 4 208 506, 4 254 248, 4 259 467, 4 277 595, 4 260 725 und 4 276 402 bekannt. Alle diese Patente beruben auf Bis-methacrylatestern linearer Polysiloxandiole. Wegen der weichen Beschaffenheit linearer Polysiloxane sind sie zur Herstellung der harten steifen, für harte Kontaktlinsen erforderlichen Materialien ungeeignet. Neben den oben erwähnten Bis-methacrylaten Linearer Polysiloxandiole offenbart die U.S. Patentschrift Nr. 4 136 250 ferner Bis- bzw.

Tris-methacrylate von Diolen bzw. Triolen, in denen die funktionellen Gruppen auf der Polysiloxanhauptkeite seitenständig anstatt endständig sind, sowie Verbindungen, die über Bis-urethanbindungen mit dem Polysiloxan verknüpft sind. Alle diese Zusammensetzungen sind jedoch Hydrogele und als solche nur für weiche Kontaktlinsen geeignet.

Eine steife silikonhaltige harte Linse ist in der U.S. Patentschrift Nr. 4 152 508 beschrieben; diese besteht aus einem Copolymer eines Oligosiloxanyl-alkylacrylats mit verschiedenen Comonomeren wie Dimethylitaconat und Methylmethacrylat. Obwohl Sauerstoffdurchlässigkeiten von

$$3\text{—}50 \cdot 10^{-10} \frac{Ncm^3 \cdot cm}{cm^2 \cdot sek \cdot cm\ Hg}$$

beansprucht werden, machen die erforderlichen hohen Anteile an oligosiloxansubstituiertem Methacrylat (>40%), um $O_2$-Durchlässigkeiten über 9 zu erzielen, das Polymer gleichzeitig zu weich, um als harte Linse nützlich zu sein. Nur wenn das Si-Monomer weniger als 25% des Polymeren ausmacht, ist die Polymerhärte genügend hoch für eine Anwendung in harten Kontaktlinsen. Da der Siloxangehalt ferner die Benetzbarkeit beeinträchtigt, ist es natürlich zweckmässig, im Polymeren so wenig Si wie möglich zu verwenden, um gerade noch die erforderliche $O_2$-Durchlässigkeit zu erzielen.

Zur Herstellung von strahlungshärtbaren Ueberzugszusammensetzungen verwendbare Siloxan-urethan-acrylatverbindungen sind in der U.S. Patentschrift Nr. 4 130 708 beschrieben. Diese Siloxan-urethan-acrylatverbindungen lassen sich mit weiteren, üblicherweise in Ueberzugszusammensetzungen vorhandenen Bestandteilen vermischen und mit UV-Licht strahlungshärten. Die Verwendung solcher Materialien für Kontaktlinsen ist in diesem Patent weder beschrieben noch nahegelegt. Die darin beschriebenen Ueberzugszusammensetzungen enthalten keine hydrophilen Monomerkomponenten.

Ferner beschreibt die britische Patentschrift Nr. 2 067 213 bei der Herstellung von photohärtbaren Ueberzugszusammensetzungen verwendbare Siloxan-urethan-acrylatverbindungen. Die Verwendung solcher Materialien für Kontaktlinsen wird nicht offenbart. Die dort beschriebenen Ueberzugszusammensetzungen enthalten weder hydrophile Monomerkomponenten noch die in der vorliegenden Erfindung beschriebenen hydrophoben Comonomeren. In der U.S. Patentschrift No. 4,260,725 sind vernetzte Polysiloxane beschrieben, die in der Siloxankette hydrophile Seitengruppen enthalten und sich zur Herstellung von Kontaktlinsen eignen. Die U.S. Patentschrift No. 4,341,889 offenbart vernetzte Polymere aus Polysiloxanen mit polymerisierbaren Endgruppen, Tertiäbutylstyrol und einem hydrophilen Vinylmonomer. Diese Polymeren eignen sich für biomedizinische Anwendungen, z.B. zur Herstellung von Kontaktlinsen.

Es ist bekannt, das $SiO(CH_3)_2$ ein wirksamerer Sauerstoffüberträger ist, wenn es in Form eines Siloxanpolymers vorliegt, als wenn es nur einen Teil einer niedermolekularen Seitengruppe darstellt. Die in Zusammensetzungen nach U.S. Patent Nr. 4 153 641 und verwandten Patenten vorhandenen langen Polysiloxanketten führen zu einer drastischen Verringerung der Steifheit und somit zu kautschukartigen und weichen Materialien. Zudem sind sie mit so andersartigen Polymeren wie Polymethacrylaten schlecht verträglich, und die für Gemenge hochmolekularer Polymerer typische Phasentrennung ergibt mehr oder weniger undurchsichtige Produkte.

Es wurde nun unerwarteterweise gefunden, dass man bei Einarbeitung polyfunktioneller hochmolekularer Polysiloxane, deren Aequivalentgewicht z.B. 5 000 nicht übersteigt und die über Bis-urethanbrücken mit mindestens zwei endständigen oder seitenständigen polymerisierbaren Vinylgruppen verknüpft sind, in ein vernetztes Vinylcopolymer harte, steife und klare Produkte erhält, die eine ausgezeichnete $O_2$-Durchlässigkeit aufweisen, welche bis viermal höher als bei der besten Zusammensetzung des Standes der Technik ist, und die sogar bei >50% Siloxangehalt genügend steif sind, um die Erfordernisse an eine harte Kontaktlinse zu erfüllen. Ganz unerwartet wurde ferner gefunden, dass die erfindungsgemässen siloxanhaltigen Polymeren trotz ihres hohen Polysiloxangehalts mit besserer Benetzbarkeit als herkömmliche harte Linsen aus PMMA hergestellt werden können.

Bevorzugte Polysiloxanmakromere zur Synthese von Materialien für harte Kontaktlinsen sind solche, die (a) mindestens eine Urethanbrückengruppe auf zwölf $+SiO(CH_3)_2+$-Einheiten, (b) mindestens zwei polymerisierbare, an die Polysiloxanhauptkette gebundene Vinylseitengruppen und somit mindestens zwei endständige $+Si(CH_3)_3+$-Einheiten sowie (c) sich von voluminösen cycloaliphatischen Diisocyanaten ableitende Urethangruppen enthalten. Als mit den Polysiloxanmakromeren zu kombinierende Comonomere werden Acrylate und Methacrylate bevorzugt, die bei der Polymerisation für sich harte Homopolymer mit einem hohen Glasübergangspunkt ergeben, wie Methylmethacrylat, isopropyl-, Isobutyl-, tert.-Butyl-, Cyclohexyl- oder Isobornylmethacrylat.

Diese Erfindung ist zwar hauptsächlich auf Materialien für harte Kontaktlinsen gerichtet, doch wurde gefunden, dass klare, hochfeste, jedoch kautschukartige Polymere ebenfalls herstellbar sind. Solche Polymere, die für verschiedene Anwendungen wie als bioverträgliche Implantate, Wundverbände oder als welche Kontaktlinsen geeignet sind, stellen somit eine weitere Ausführungsform dieser Erfindung dar. Es liegt somit im Rahmen dieser Erfindung, Comonomere einzusetzen, die hochfeste, doch biegsame und kautschukartige Polymere ergeben.

Gegenstand vorliegender Erfindung sind Polymers, die aus dem vernetzten Copolymerisationsprodukt

von (A) etwa 8 bis etwa 70 Gew.-%, bezogen auf ein solches Polymer, eines linearen oder verzweigten Polysiloxanmakromeren oder Gemischen solcher Makromerer mit einem Molekulargewicht von etwa 400 bis etwa 100 000, gemessen durch Endgruppenanalyse oder Gelpermeationschromatographie, wobei dieses Makromer mindestens zwei end- oder seitenständige polymerisierbare olefinische Gruppen auf je eine Polysiloxaneinheit vom Molekulargewicht 5 000 enthält, wobei diese Gruppen über mindestens zwei Urethan-, Thiourethan-, Harnstoff- oder Amidbrükken mit dem Polysiloxan verknüpft sind, wobei diese Makromer die (unten im einzelnen beschriebene) Formel $A_1$ oder $A_2$ besitzt, und

(B) etwa 92 bis etwa 30 Gew.-%, bezogen auf ein solches Polymer, wasserlöslicher und wasserunlöslicher Monomerer bzw. wasserunlöslicher Monomerer, wobei diese Monomeren monoolefinisch oder diolefinisch sind oder ein Gemisch aus monoolefinischen und diolefinischen Monomeren darstellen und wobei 85 bis 100 Gew.-% der Gesamtmonomeren wasserunlöslich sind, bestehen.

1. Das Polysiloxanmakromer (A)

Das erfindungsgemässe lineare oder verzweigte Polysiloxanmakromer besitzt eine der folgenden allgemeinen Formeln $A_1$ oder $A_2$:

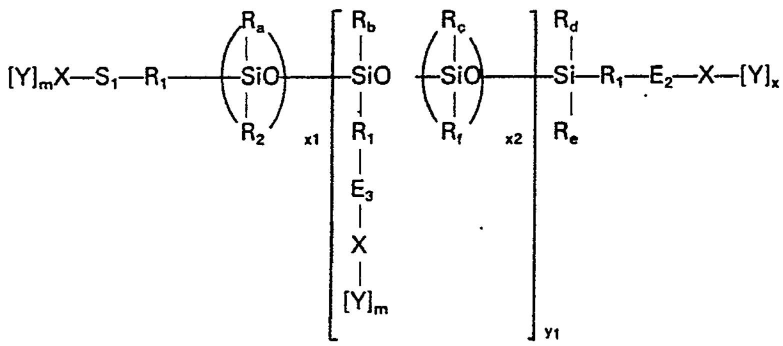

$(A_1)$

oder

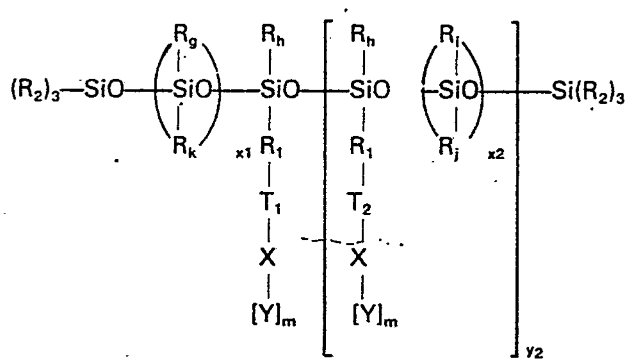

$(A_2)$

worin $R_1$ für eine lineare oder verzweigte Alkylengruppe mit 2—6 Kohlenstoffatomen oder eine Polyoxyalkylengruppe der Formel 6

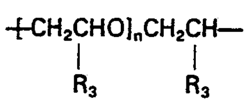

(G)

steht, worin $R_5$ Wasserstoff oder Methyl bedeutet und n eine ganze Zahl von 1—50 ist und $R_2$, $R_a$, $R_b$, $R_c$, $R_d$, $R_e$, $R_f$, $R_g$, $R_h$, $R_i$, $R_j$ und $R_k$ unabhängig voneinander für Methyl oder Phenyl stehen, $x_1$ und $x_2$ ganze Zahlen von 1 bis 500 sind, mit der Massgabe, dass die Summe $x_1+x_2$ 7 bis 1 000 beträgt, $y_1$ 0 bis 14 und $y_2$ 1 bis 13 sind, mit der Massgabe, dass das Verhältnis

$$\frac{x_1+x_2}{y_1+2}$$

bzw.

$$\frac{x_1+x_2}{y_2+1}$$

70 nicht übersteigt, $E_1$, $E_2$, $E_3$, $T_1$ und $T_2$ eine direkte eindung darstellen, X einen zwei- oder dreiwertigen Rest

$$—Z_1—CO—NH—R_4—(NH—CO—)_v$$

bedeutet, worin v=1 oder 2, $Z_1$ Sauerstoff, Schwefel oder $NR_5$ ist, wobei $R_5$ für Wasserstoff oder $C_1$—$C_4$-Niederalkyl steht, $Z_1$ an $R_1$ gebunden ist und $R_4$ für einen zwei- oder dreiwertigen, durch wegnahme der NCO-Gruppen aus einem aliphatischen, cycloaliphatischen oder aromatischen Di- oder Triisocyanat erhaltenen Rest steht, Y

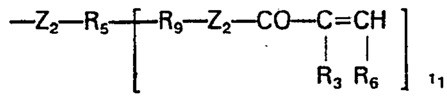 (I)

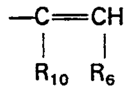 (II)

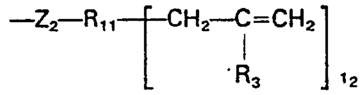 (III)

oder

$$—O—R_7—O—CH=CH_2 \qquad (IV)$$

darstellt, worin $R_6$ für Wasserstoff, Methyl, —$COOR_5$ oder —$COOR_7OH$ steht, mit der Massgabe, dass, wenn $R_6$ von Wasserstoff verschieden ist, m und $l_1$=1 und $R_8$ eine direkte Bindung ist, $Z_2$ für Sauerstoff oder —$NR_5$— und $R_7$ für lineares oder verzweigtes Alkylen mit 2 bis 10 Kohlenstoffatomen, Phenylen oder Phenylalkylen mit 2 bis 10 Kohlenstoffatomen im Alkylen oder für Polyoxyalkylen der Formel G stehen, $R_8$ die Bedeutung von $R_7$ hat oder einen drei- oder vierwertigen Rest mit 2—4 Kohlenstoffatomen darstellt, $l_1$ 1 bis 3 ist, $R_9$ eine Alkylengruppe mit 2 bis 4 Kohlenstoffatomen oder eine direkte Bindung darstellt, mit der Massgabe, dass bei $l_1$=1 $R_9$ eine direkte Bindung bedeutet und folglich $R_8$ ein zweiwertiger Rest ist, $R_{10}$ für Wasserstoff, Methyl oder —$CH_2COOH$, mit der Massgabe, dass bei $R_{10}$= —$CH_2COOH$ $R_6$ Wasserstoff bedeutet, und $R_{11}$ für eine direkte Bindung oder einen zwei-, drei- oder vierwertigen aliphatischen Rest mit 1—6 Kohlenstoffatomen stehen und $l_2$ 1 bis 3 ist, mit der Massgabe, dass bei einer direkten Bindung als $R_{11}$ $l_2$ 1 ist.

Die Verbindungen der Formeln ($A_1$) und ($A_2$) sind somit Polysiloxane, die über Diisocyanatbrücken mit Vinylgruppen verknüpft sind, die dem Acryl- oder Methacryl-, Fumar-, Malein- oder Itacon- (Y-Struktur I und II), Allyl- (III) sowie Vinyläthertyp (IV) angehören können.

Bei bevorzugten Ausführungsformen der vorliegenden Erfindung sind
$R_1$=Alkylen mit 3 oder 4 Kohlenstoffatomen,
$R_2$, $R_a$, $R_b$, $R_c$, $R_d$, $R_e$, $R_f$, $R_g$, $R_h$, $R_i$, $R_j$ und $R_k$=Methyl,
$x_1+x_2$=10 bis 100,
$y_1$=0 bis 2,
$y_2$=1 bis 3,
m=1,
X= —$Z_1$—CO—NH—$R_4$—NH—CO—,
wobei $E_1$, $E_2$, $E_3$, $T_1$ und $T_2$ eine direkte Bindung sind, worin $Z_1$ für Sauerstoff oder —NH— und $R_4$ für den zweiwertigen Rest eines aliphatischen oder cycloaliphatischen Diisocyanats mit 6 bis 10 Kohlenstoffatomen stehen und Y der Formel I entspricht, worin $R_6$ Wasserstoff, $R_8$ —$CH_2CH_2$—, $R_9$ eine direkte Bindung, $l_1$ 1 und $Z_2$ Sauerstoff oder

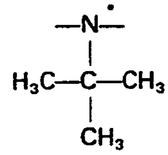

bedeuten.

Zu besonders bevorzugten Ausführungsformen gehört das Polysiloxan der Formel ($A_2$) mit $R_4$=zweiwertiger Rest von Isophorondiisocyanat, $Z_1$ und $Z_2$=Sauerstoff und $y_2$=1 oder 2.

2. Das Vinylmonomer (B)

Die erfindungsgemäss verwendeten wasserunlöslichen Vinylmonomeren ($B_1$) sind vorzugsweise: Acrylate und Methacrylate der allgemeinen Formel:

$$\begin{array}{l} \quad\;\; R_3 \\ \quad\;\;\, | \\ H_2C=C-COOR_{12} \end{array}$$

Acrylamide und Methacrylamide der Formel:

$$\begin{array}{l} \quad\;\; R_3 \\ \quad\;\;\, | \\ H_2C=C-CONH-R_{12} \end{array}$$

Maleinate und Fumarate der Formeln:

$$\begin{array}{l} HC-COOR_{12} \\ \;\;\| \\ HC-COOR_{12} \end{array}$$

Itaconate:

$$\begin{array}{l} \qquad\quad COOR_{12} \\ \qquad\; / \\ H_2C=C \\ \qquad\; \backslash \\ \qquad\quad CH_2-COOR_{12} \end{array}$$

Vinylester

$$R_{12}-COO-CH=CH_2$$

Vinyläther

$$H_2C=CH-O-R_{12}$$

worin $R_{12}$ für eine lineare oder verzweigte aliphatische, cycloaliphatische oder aromatische, gegebenenfalls Aether- oder Thioätherbrücken oder eine —CO-Gruppe enthaltende Alkylgruppe mit 1 bis 21 Kohlenstoffatomen steht, wobei als $R_{12}$ auch eine Sauerstoff-, Schwefel- oder Stickstoffatome enthaltende heterocyclische Alkylgruppe oder eine Polypropylenoxyd- oder Poly-n-butylenoxydgruppe mit 2 bis 50 wiederkehrenden Alkoxyeinheiten in Frage kommen.

Zudem kann die $R_{12}$-Gruppe auch Halogenatome, insbesondere Fluor in Form perfluorierter Alkylgruppen mit 1—12 Kohlenstoffatomen, oder Siloxangruppen mit ein bis sechs Si-Atomen sowie —SO— und —$SO_2$-Gruppen enthalten.

Zu den verwendbaren Monomeren gehören: Methyl-, Aethyl-, Propyl-, Isopropyl-, Butyl-, Isobutyl-, tert.-Butyl-, Aethoxyäthyl-, Methoxyäthyl-, Benzyl-, Phenyl-, Cyclohexyl-, Trimethylcyclohexyl-, Isoburnyl-, Dicyclopentadienyl-, Norbornylmethyl-, Cyclododecyl-, 1,1,3,3-Tetramethylbutyl-, n-Butyl-, n-Octyl-, 2-Aethylhexyl-, Decyl-, Dodecyl-, Tridecyl-, Octadecyl-, Glycidyl-, Aethylthioäthyl-, Furfuryl-, Hexafluorisopropyl-, 1,1,2,2-Tetrahydroperfluordodecyl- und Tri-, Tetra- oder Penta-siloxanylpropyl-acrylate und -methacrylate sowie die entsprechenden Amide; N-(1,1-Dimethyl-3-oxobutyl)-acrylamid; Mono- und Dimethylfumarat, -maleinat und -itaconat; Diäthylfumarat; Isopropyl- und Diisopropylfumarat und -itaconat; Mono- und Diphenyl- und Methylphenylfumarat und -itaconat; Methylvinyläther und Methoxyäthylvinyläther; Vinylacetat, Vinylpropionat, Vinylbenzoat, Acrylnitril, Styrol und alpha-Methylstryol.

Um die für Kontaktlinsenanwendungen erforderliche hohe Klarheit zu erzielen, ist es besonders zweckmässig, Comonomere oder Comonomergemische einzusetzen, deren entsprechende Polymere in ihrem Löslichkeitsfaktor (δ) und/oder Brechungsindex (RI) nahe mit den Werten für Polydimethylsiloxan ($\delta=15$; RI=1,43) übereinstimmen. Beispiele für solche Monomere sind Isobornylmethacrylat, tert.-Butylmethacrylat und Gemische von Kohlenwasserstoffmethacrylaten (RI 1,46) mit fluorhaltigen Monomeren wie Hexafluorisopropylmethacrylat, Trifluoräthylmethacrylat, 1,1,2,2-Tetrahydroperfluoralkylmethacrylat oder 4-Thia-6-perfluoralkylhexylmethacrylat, wobei Alkyl eine Kohlenstoffkette mit 5—12 C-Atomen ist (Brechungsindices von 1,38—1,40) ($\delta<15$). Zudem führen Perfluoralkylgruppen enthaltende Monomere zu stark erhöhter Sauerstoffdurchlässigkeit der Polymeren in einer mit dem Polysiloxan synergistischen Art und Weise; demnach sind dies besonders bevorzugt Comonomere.

Zur Herstellung harter Linsen beträgt der bevorzugte Comonomergehalt 50—85 Gew.-% des Gesamtpolymeren, wobei als bevorzugtes Comonomer Methylmethacrylat, Cyclohexylmethacrylat, Isobornylmethacrylat, Isopropylmethacrylat, Isobutylmethacrylat, tert.-Butylmethacrylat oder Hexafluorisopropylmethacrylat bzw. Gewmische davon vorliegen.

Als Comonomer besonders bevorzugt sind Methylmethacrylat, Isobornylmethacrylat, Isopropylmethacrylat, Isobutylmethacrylat oder Cyclohexylmethacrylat bzw. Gemische davon. Ferner sind

Gemische aus Methylmethacrylat und/oder Isobornylmethacrylat mit 1 bis 25 Gew.-%, bezogen auf Gesamtmonomer, eines kurzkettigen Vernetzungsmittels wie Neopentylglykoldiacrylat, Aethylenglykoldimethacrylat oder das Reaktionsprodukt von einem Mol Isophorondiisocyanat mit zwei Mol 2-Hydroxyäthylmethacrylat besonders bevorzugt.

Ein weiteres besonders bevorzugtes Comonomersystem zur Herstellung harter Linsen ist Vinylacetate/Dimethylmaleinat (Molverhältnis 2/1 bis 5/1) plus eines der oben angeführten bevorzugten Methacrylatmonomer1n.

Das zur Herstellung weicher Linsen bevorzugte Comonomer ist 2-Aethylhexylacrylat, 2-Aethylhexylmethacrylat, n-Butylacrylat, n-Butylmethacrylat, n-Octylacrylat, n-Octylmethacrylat, n-Decylacrylat, n-Decylmethacrylat, $C_6$—$C_{10}$-perfluoralkylsubstituiertes Alkylacrylat oder -methacrylat, bzw. Gemische davon.

Die aus den erfindungsgemässen Polymeren hergestellten Kontaktlinsen enthalten keinen Füllstoff und sind hydrolytisch stabil, biologisch inert, transparent und genügend sauerstoffdurchlässig, um einen für die Erfordernisse der menschlichen Hornhaut ausreichenden Sauerstoffübergang zuzulassen.

Die erfindungsgemäss verwendbaren wasserlöslichen Vinylmonomeren ($B_2$) sind vorzugsweise Acrylate und Methacrylate der allgemeinen Formel:

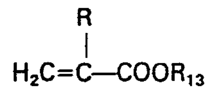

$R_{13}$ bedeutet einen durch wasserlöslichmachende Gruppen wie Carboxyl, Hydroxyl oder tert.-Amino, eine Polyäthylenoxydgruppe mit 2—100 wiederkehrenden Einheiten oder eine Sulfat-, Phosphat-, Sulfonat- oder Phosphonatgruppen enthaltende Gruppe einfach oder mehrfach substituierten Kohlenwasserstoffrest mit 1 bis 10 Kohlenstoffatomen.

Dies sind

Acrylamide und Methacrylamide der Formel

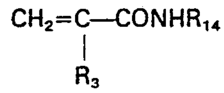

worin $R_{14}$ die Bedeutung von $R_{13}$ oder $R_5$ hat;

Acrylamide und Methacrylamide der Formel

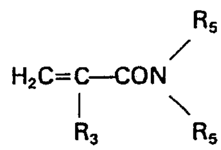

Maleinate und Fumarate der Formel:

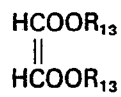

Vinyläther der Formel:

$$H_2C=CH—OR_{13}$$

und N-Vinyllactame, wie N-Vinyl-2-pyrrolidon.

Zu den verwendbaren wasserlöslichen Monomeren gehören:

2-Hydroxyäthyl-, 2- und 3-Hydroxypropyl-, 2,3-Dihydroxypropyl-, Polyäthoxyäthyl- und Polyäthoxypropylacrylate und -methacrylate sowie die entsprechenden Acrylamide und Methacrylamide, und Saccharose-, Mannose-, Glucose- und Sorbitacrylate und -methacrylate.

Acrylamid und Methacrylamid, N-Methylacrylamid und -methacrylamid, Bisaceton-acrylamid, 2-Hydroxyäthylacrylamid, Dimethylacrylamid und -methacrylamid sowie Methylolacrylamid und -methacrylamid.

N,N-Dimethyl- und N,N-Diäthylaminoäthylacrylat und -methacrylat sowie die entsprechenden Acrylamide und Methacrylamide, N-tert.-Butylaminoäthylmethacrylat und -methacrylamid, 2- und 4-Vinylpyridin, 4- und 2-Methyl-5-vinylpyridin, N-Methyl-4-vinylpiperidin, 1-Vinyl- und 2-Methyl-1-vinyl-imidazol, Dimethylallylamin und Methyldiallylamin sowie para- und ortho-Aminostyrol, Dimethylaminoäthylvinyläther, N-Vinylpyrrolidon und 2-Pyrrolidinoäthylmethacrylat.

Acryl- und Methacrylsäure, Itaconsäure, Zimtsäure, Crotonsäure, Fumarsäure, Maleinsäure und deren

Hydroxyniederalkylmono- und -diester, wie 2-Hydroxyäthyl- und Di-(2-hydroxy)-äthylfumarat, -maleinat und -itaconat, sowie 3-Hydroxypropyl-butylfumarat und Di-polyalkoxyalkyl-fumarate, -maleinate und -itaconate.

Mateinsäureanhydrid, Natriumacrylat und -methacrylat, 2-Methacryloyloxyäthylsulfonsäure, 2-Acrylamido-2-methylpropansulfonsäure, 2-Phosphatoäthylmethacrylat, Vinylsulfonsäure, Natriumvinylsulfonat, p-Styrolsulfonsäure, Natrium-p-styrolsulfonat und Allylsulfonsäure.

Dazu zählen ferner die quartärisierten Derivate kationischer Monomerer, welche man durch Quartärisierung mit ausgewählten Alkylierungsmitteln, z.B. halogenierten Kohlenwasserstoffen wie Methyliodid, Benzylchlorid oder Hexadecylchlorid, Epoxiden wie Glycidol, Epichlorhydrin oder Aethylenoxyd, Acrylsäure, Dimethylsulfat, Methylsulfat und Propansulton erhält.

Eine vollständigere Liste im Zusammenhang mit dieser Erfindung verwendbarer, wasserlöslicher Monomerer findet sich in:

R.H. Vocum und E.B. Nyquist, Functional Monomers [Funktionelle Monomere], Band 1, S. 424—440 (M. Dekker, N.Y. 1973).

Die bevorzugten Monomeren sind:

$(B_1)$=Methylmethacrylat, Cyclohexylmethacrylat, Isobornylmethacrylat, t-Butyl- und Isobutylmethacrylat, Isopropylmethacrylat und Hexafluorisopropylmethacrylat.

$(B_2)$=2-Hydroxyäthylmethacrylat, N,N-Dimethylacrylamid, Acryl- und Methacrylsäure sowie N-Vinyl-2-pyrrolidon. Zusätzlich zu den Monovinylverbindungen kann man als Vernetzungsmittel eine ganze Reihe Divinylverbindungen einsetzen. In der Tat können 1 bis 25 Gew.-% des Gesamtmonomeren B aus einem diolefinischen Monomeren $(B_x)$ bestehen. Beispiele für diolefinische Monomere sind:

Allylacrylat und -methacrylat, Aethylenglykol-, Diäthylenglykol-, Triäthylenglykol-, Tetraäthylenglykol- und allgemein Polyäthylenoxydglykoldiacrylate und -dimethacrylate, 1,4-Butandiol- und Poly-n-butylenoxydglykoldiacrylate und -dimethacrylate, Propylenglykol- und Polypropylenoxydglykoldiacrylate und -dimethacrylate, Thiodiäthylenglykoldiacrylat und -dimethacrylat, Di-(2-hydroxyäthyl)-sulfondiacrylat und -dimethacrylate, Neopentylglykoldiacrylat und -dimethacrylat, Trimethylolpropan-tri- und -tetraacrylat, Pentaerythrit-tri- und -tetraacrylat, Divinylbenzol, Divinyläther, Divinylsulfon, Disiloxanyl-bis-3-hydroxypropyldiacrylat oder -methacrylat und verwandte Verbindungen.

Bisphenol-A-diacrylat oder -dimethacrylat, äthoxyliertes Bis-phenol-A-diacrylat oder -dimethacrylat, Methylen-bisacrylamid oder -methacrylamid, Dimethylen-bisacrylamid oder -methacrylamid, N,N'-Dihydroxyäthylen-bisacrylamid oder -methacrylamid, Hexamethylen-bisacrylamid oder -methacrylamid, Decamethylen-bisacrylamid oder -methacrylamid, Allyl- und Dialkylmaleinat, Triallylmelamin, Diallylitaconat, Diallylphthalat, Triallylphosphit, Polyallylsaccharose, Saccharosediacrylat, Glucosedimethacrylat sowie ungesättigte Polyester wie Poly-(alkylenglykolmaleinate) und Poly-(alkylenglykolfumarate), z.B. Poly-(propylenglykolmaleinat) und Poly-(polyalkylenoxydglykolmaleinat).

Ferner kommen als Vernetzungsmittel die Reaktionsprodukte in Betracht, die man durch Umsetzung von 1 Mol Di- oder Triisocyanat der Formel $OCN—R_4—(NCO)_1$ oder 2, worin $R_4$ die unten angegebene Bedeutung hat, mit 2 oder 3 Mol eines Hydroxyalkylacrylats oder -methacrylats, eines Hydroxyalkylvinyläthers, des Allylalkohols, N-tert.-Butylaminoäthylmethacrylats, Bis-hydroxyäthylmaleinats oder eines der unten angegebenen, aktiven Wasserstoff enthaltenden Verbindungen erhält.

Vorzugsweise ist das diolefinische Monomer $(B_x)$ das Acrylat oder Methacrylat des Allylalkohols, eines geradkettigen oder verzweigten Alkylenglykols mit 2 bis 6 Kohlenstoffatomen, des Poly(äthylenoxyd)-glykols, des Poly-(propylenoxyd)-glykols, des Poly-(n-butylenoxyd)-glykols, des Thiodiäthylenglykols, Neopentylglykols, Trimethylolpropans oder Pentaerythrits oder das Reaktionsprodukt, das man durch Umsetzung von einem Mol eines Di- oder Triisocyanats der Formel $OCN—R_4—(NCO)_v$, worin $R_4$ die oben angegebene Bedeutung hat und v 1 oder 2 ist, mit 2 oder 3 Mol eines Hydroxyalkylacrylats oder -methacrylats erhält.

Als difunktionelles Comonomer $(B_x)$ werden 1 bis 25 Gew.-%, bezogen auf das Gesamtmonomer, von Neopentylglykoldiacrylat, dem Reaktionsprodukt aus 1 Mol Isophorondiisocyanat und 2 Mol 2-Hydroxyäthylmethacrylat oder Aethylenglykoldimethacrylat besonders bevorzugt.

Die Monomeren können für sich allein oder miteinander kombiniert verwendet werden, wobei deren Copolymerisationsparameter zu beachten sind, um sicherzustellen, dass eine statistische Copolymerisation stattfindet. Wenn die Polymeren für Kontaktlinsen verwendet werden sollen, ist ferner ein hoher Grad an Klarheit und Farblosigkeit unerlässlich bei der Auswahl einer entsprechenden Monomerenkombination.

Ein bevorzugter Gegenstand der vorliegenden Erfindung ist ein Polymer, worin als Komponente A ein Polysiloxan der Formel $A_1$ oder $A_2$ vorliegt, $R_1$ für Alkylen mit 3 oder 4 Kohlenstoffatomen sowie $R_2$, $R_a$, $R_b$, $R_c$, $R_d$, $R_e$, $R_f$, $R_g$, $R_h$, $R_i$, $R_j$ und $R_k$ je für Methyl stehen, $x_1+x_2$ 10 bis 100 beträgt, $y_1$ 0 bis 2, $y_2$ 1 bis 3 und m 1 sind, $E_1$, $E_2$, $E_3$, $T_1$ und $T_2$ eine direkte Bindung sind, X $—Z_1—CONH—R_4—NHCO—$ bedeutet, wobei $Z_1$ für —O— oder —NH— und $R_4$ für einen zweiwertigen aliphatischen oder cycloaliphatischen Diisocyanatrest mit 6 bis 10 Kohlenstoffatomen stehen, und Y

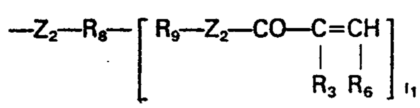

darstellt, worin

$R_6$ für Wasserstoff, $R_8$ für Aethylen und $R_9$ für eine direkte Bindung stehen, $l_1$ 1 ist und $Z_2$ —O— oder —$NC(CH_3)_3$— bedeutet, und die Komponente B als vernetzendes diolefinisches Monomer ($B_x$) 1 bis 25%, bezogen auf das Gesamtmonomer, des Acrylats oder Methacrylats von Alkylalkohol, einem geradkettigen oder verzweigten Alkylenglykol mit 2 bis 6 Kohlenstoffatomen, einem Poly(äthylenoxyd)-glykol, Poly-(propylenoxyd)-glykol, Poly-(n-butylenoxyd)-glykol, Thiodiäthylenglykol, Neopentylglykol, Trimethylolpropan oder Pentaerythrit oder des Reaktionsprodukts, das man durch Umsetzung von einem Mol eines Di- oder Triisocyanats der Formel OCN—$R_4$—$(NCO)_v$, wobei $R_4$ die oben angegebene Bedeutung hat und v 1 oder 2 ist, mit 2 oder 3 Mol eines Hydroxyalkylacrylats oder -methacrylats herstellt, enthält.

Als Ausgangsstoffe für das Makromer (A) verwendbare *polyfunktionelle Polysiloxane* entsprechen der Formel I oder II

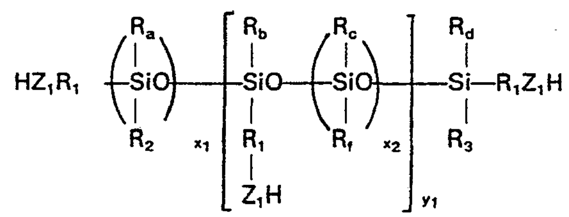

(I)

oder

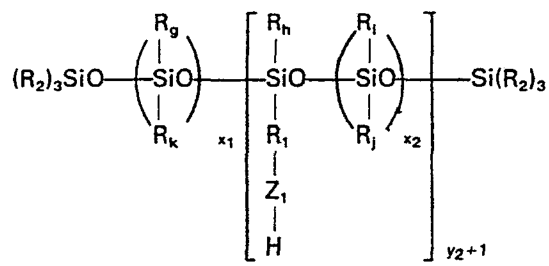

(II)

worin $R_1$, $R_2$, $R_a$, $R_b$, $R_c$, $R_d$, $R_e$, $R_f$, $R_g$, $R_h$, $R_i$, $R_j$, $R_k$, $Z_1$, $x_1$, $x_2$, $y_1$ und $y_2$ die oben angegebenen Bedeutungen haben.

Die zur Bildung des Präpolymerzwischenprodukts geeigneten *Di- oder Triisocyanate* sind aliphatische, cycloaliphatische oder aromatische Polyisocyanate der Formeln

$$OCN—R_4(NCO)_{1 \text{ oder } 2};$$

dazu gehören Aethylendiisocyanat, 1,2-Diisocyanatopropan, 1,3-Diisocyanatopropan, 1,6-Diisocyanatohexan, 1,2-Diisocyanatocyclohexan, 1,3-Diisocyanatocyclohexan, 1,4-Diisocyanatocyclohexan, o-Diisocyanatobenzol, m-Diisocyanatobenzol, p-Diisocyanatobenzol, Bis-(4-isocyanatocyclohexyl)-methan, Bis-(4-isocyanatocyclohexenyl)-methan, Bis-(4-isocyanatophenyl)-methan, Toluylendiisocyanat, 3,3-Dichlor-4,4'-diisocyanatobisphenyl, Tris-(4-isocyanatophenyl)-methan, hydriertes Toluylendiisocyanat, 1-Isocyanatomethyl-5-isocyanato-1,3,3-trimethylcyclohexan (=Isophorondiisocyanat), 1,3,5-Tris-(6-isocyanatohexyl)-biuret, 1,6-diisocyanato-(2,2,4)-trimethylhexan, 2,2'-Diisocyanatodiäthyl-fumarat, 1,5-Diisocyanato-1-carboxypentan, 1,2-, 1,3-, 1,5-, 1,6-, 1,7-, 1,8-, 2,7- und 2,3-Diisocyanato-naphthalin, 2,4- und 2,7-Diisocyanato-1-methylnaphthalin, 1,4-Diisocyanato-methylcyclohexan, 1,3-Diisocyanat-6(7)-methylnaphthalin, 4,4'-Diisocyanatobiphenyl, 4,4'-Diisocyanato-3,3'-dimethoxybiphenyl 3,3'- und 4,4'-Diisocyanato-2,2'-dimethylbiphenyl, Bis-(4-isocyanatophenyl)-äthan und Bis-(4-isocyanatophenyl)-äther.

Die Diisocyanate können für sich oder in Kombination miteinander eingesetzt werden.

Zur Endmaskierung des Polysiloxanpolyisocyanats geeignete, *aktiven Wasserstoff enthaltende Monomere* sind unter anderem Verbindungen der Formel:

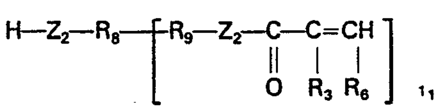

worin $R_3$, $R_6$, $R_8$, $R_9$ und $Z_2$ die oben angegebenen Bedeutungen haben, und somit aktiven Wasserstoff enthaltende Acrylate, Methacrylate sowie Di- und Triacrylate und -methacrylate, Fumarate, Maleinate und die entsprechenden Amide, wie 2-Hydroxyäthyl-, 2- und 3-Hydroxypropyl- 2,3-Dihydroxypropyl-, Polyäthoxyäthyl-, Polyäthoxypropyl-, Polypropoxypropylacrylate und -methacrylate sowie die entsprechenden Acryl- und Methacrylamide, 2-hydroxyäthyl- und Bis-(2-hydroxyäthyl)-fumarat und -itaconat, Hydroxypropylbutylfumarat, N-(2-Hydroxyäthyl)-maleinimid, N-(2-Hydroxyäthoxyäthyl)-maleinimid, tert.-Butylaminoäthylmethacrylat und Pentaerythrit-mono-, -di- und -triacrylat, darstellen.

Weitere verwendbare Verbindungsklassen sind Allylmonomere wie Allylalkohol, Methallylalkohol und Diallylamin sowie Vinyläther der formel:

$H_2C{=}CH{-}O{-}R_7{-}OH$

worin $R_7$ die oben angegebene Bedeutung hat, zum Beispiel 4-Hydroxybutylvinyläther.

Eine Liste von im Zusammenhang mit dieser Erfindung verwendbaren Monomeren findet sich in R.H. Yocum und E.B. Nyquist, Functional Monomers [Funktionelle Monomere], Band 1, S. 424—440 (M. Dekker, N.Y. 1973).

Das Polysiloxan-polyisocyanatpräpolymer kann auch unter Verwendung eines Basen- oder Metallkatalysators mit ungesättigten Säuren maskiert werden, was zu einer Amidbindung unter Entwirklung von $CO_2$ führt. Dabei verwendbare Säuren sind unter anderem Acrylsäure, Methacrylsäure, Fumarsäure, Maleinsäure, Itaconsäure und Zimtsäure.

Die Monomeren $B_1$ und $B_2$, die Diisocyanate und die polyfunktionellen Polysiloxanausgangsstoffe für A sind grösstenteils handelsüblich.

Die Polysiloxanmakromeren erhält man zweckmässig durch eine zweistufige Synthese aus den entsprechenden polyfunktionellen Polysiloxanen. Im besonders bevorzugten Fall sind dies Diole oder Polyole, doch kommen auch aminofunktionelle oder mercaptofunktionelle Polysiloxane in Frage. In der ersten Stufe wird das Polysiloxan entweder unverdünnt oder in Lösung in Gegenwart eines der herkömmlichen Katalysatoren mit einer gegebenen Menge Di- oder Triisocyanat umgesetzt. Als Katalysatoren dafür kommen tertiäre Aminogruppen enthaltende Verbindungen wie Triäthylamin, Pyridin oder Diaminobicyclooctan sowie Katalysatoren auf Metallgrundlage, wie Dibutylzinndilaurat oder Zinn-IIoctoat in Betracht. Die Reaktion wird entweder bei Raumtemperatur oder erhöhter Temperatur unter trockenem Stickstoff durchgeführt und zweckmässig durch NCO-Titration oder IR-Analyse verfolgt. Im Fall eines Diisocyanats nehmen die % NCO auf einen berechneten Prozentsatz des Anfangswerts ab, und das Reaktionsprodukt der ersten Stufe besteht aus einem Polysiloxandiisocyanat. Das Molverhältnis der OH- und NCO-Gruppen in der ersten Reaktionsstufe kann zwischen 1:1,5 und 1:3 und vorzugsweise im Bereich 1:2,05—1:2,1 liegen.

Die zweite Reaktionsstufe besteht aus der Endmaskierung dieses Polyisocyanats mit einer hydroxy- oder aminofunktionellen Vinylverbindung, meistens 2-Hydroxyäthylmethacrylat. Es ist ratsam, mindestens einen geringen Ueberschuss des endmaskierenden Monomeren einzusetzen, typischerweise mit einem OH-, SH-, NH/NCO-Molverhältnis von 1,05/1 oder grösser. Da es in der Praxis vorzuziehen ist, eine geringe Menge eines wasserlöslichen Monomeren in das fertige Polymer einzuarbeiten, um gute Benetzungseigenschaften zu erzielen, ist ein höherer Ueberschuss des hydroxy- oder aminofunktionellen Monomeren nicht schädlich. Die Reaktion verläuft bei Raumtemperatur oder erhöhter Temperatur über mehrere Stunden, wobei kein weiterer Katalysator zugesetzt zu werden braucht. Da normalerweise keine Inhibitoren vorhanden sind, ist eine sauerstofffreie Stickstoffschutzatmosphäre unerlässlich. Die Vollständigkeit der Reaktion lässt sich leicht durch Verfolgen der -NCO-Gruppen mittels IR-Spektrokopie bestimmen.

Manchmal ist es zweckmässig, beispielsweise in Fällen sehr hochviskoser Materialien, die zweite Stufe der Makromersynthese in einer der endgüttig erwünschten Polymerzusammensetzung entsprechenden Monomerenlösung durchzuführen.

Obwohl es vorzustehen ist, ein Aequivalent reaktives Polysiloxan mit nahezu zwei Aequivalenten Diisocyanat umzusetzen und dadurch ein mit Isocyanat endmaskiertes Polysiloxan zu erhalten, kann wegen der Gesetze der Polykondensationskinetik dabei eine gewisse Menge kettenverlängertes Produkt entstehen, in dem das endmaskierte Polymer zwei durch eine Diisocyanateinheit verknüpfte Polysiloxanketten enthält; darauf kann man beispielsweise mittels Gelpermeationschromatographie analysieren.

Die erfindungsgemässen transparenten, harten und sauerstoffdurchlässigen Polymeren werden in der letzten Synthesestufe durch Radikalcopolymerisation, entweder in der Masse oder in Gegenwart geringer Mengen Lösungsmittel, erzeugt. Die Polymerisation wird zweckmässig in der Wärme durchgeführt, verzugsweise in Gegenwart eines freie Radikale bildenden Initiators, beispielsweise bei einer Temperatur im Bereich von etwa 40°C bis etwa 105°C, wobei der bevorzugte Temperaturbereich zwischen etwa 50°C und etwa 100°C liegt. Diese Initiatoren sind vorzugsweise Peroxyde oder Azokatalysatoren mit einer Halbwertszeit von mindestens 20 Minuten bei der Polymerisationstemperatur. Typische Beispiele für verwendbare Peroxyverbindungen sind Isopropylpercarbonat, tert.-Butylperoctoat, Benzoylperoxyd, Lauroylperoxyd, Decanoylperoxyd, Acetylperoxyd, Bernsteinsäureperoxyd, Methyläthylketonperoxyd, tert.-Butylperoxyacetat, Propionylperoxyd, 2,4-Dichlorbenzoylperoxyd, tert.-Butylperoxypivalat, Pelargonylperoxyd, 2,5-Dimethyl-2,5-bis-(2-äthylhexanoylperoxy)-hexan, p-Chlorbenzoylperoxyd, tert.-Butylperoxybutyrat, tert.-Butylperoxymaleinsäure, tert.-Butylperoxyisopropylcarbonat und Bis-(1-hydroxycyclohexyl)-peroxyd; zu Azoverbindungen gehören 2,2-Azo-bis-isobutyronitril, 2,2'-Azo-bis-(2,4-dimethylvaleronitril), 1,1'-Azo-bis-(cyclohexancarbonitril) und 2,2'-Azo-bis-(2,4-dimethyl-4-methoxyvaleronitril).

Man kann dabei auch andere, freie Radikale bildende Mechanismen anwenden wie Strahlung mit z.B. Röntgenstrahlen, Elektronenstrahlen und UV-Strahlung. Die Herstellung von Kontaktlinsenrohlingen durch UV-Strahlung in Gegenwart eines Photoinitiators wie Diäthoxyacetophenon, 1-Hydroxycyclohexylphenylketon, 2,2-Dimethoxy-2-phenylacetophenon, Phenothiazin, Diisopropylxanthogendissulfid, Benzoin und Benzoinderivaten stellt eine bevorzugte Methode dar.

Die Initiatormenge kann zwischen 0,002 und 1 Gew.-%, bezogen auf Monomer plus Makromer, schwanken, liegt aber vorzugsweise bei 0,03 bis 0,3 Gew.-%.

Eine bevorzugte Laboratoriumsmethode zur Herstellung des Polymeren in Zylinderform besteht darin,

dass man einen biegsamen Polymerschlauch mit der bevorzugten Zusammensetzung aus Makromer, Monomeren und Katalysator füllt und das Gemisch ungefähr 2 Stunden lang bei 80°C umsetzt. Der fertige Artikel wird entnommen, indem man den Schlauch der Länge nach aufschlitzt und ihn von dem Polymerartikel abzieht.

Eine weitere bevorzugte Methode zur Herstellung des Polymeren beruht auf der Bestrahlung mit Ultraviolettlicht in Gegenwart eines Photoinitiators und der Verwendung UV-transparenter Kunststofformen, wie Formen aus Polypropylen.

Die Reaktion erfolgt vorzugsweise unter einer inerten Atmosphäre, wenn sie in offenen Formen durchgeführt wird. Bekanntlich hemmt Sauerstoff die Polymerisation und führt zu verlängerten Polymerisationszeiten. Werden geschlossene Formen zur Bildung des Artikels verwendet, so bestehen die Formen aus inerten Materialien mit niedriger Sauerstoffdurchlässigkeit und mit nicht-klebenden Eigenschaften. Beispiele für geeignete Formmaterialien sind Polytetrafluoräthylen, wie Teflon®, Silikonkautschuk, Polyäthylen, Polypropylen und Polyester wie Mylar®. Bei Einsatz eines geeigneten Entformungsmittels sind auch Formen aus Glas und Metall verwendbar.

Die erfindungsgemässen transparenten und sauerstoffdurchlässigen Polymeren bestehen zu 8 bis 70% aus dem Makromer (A), das mit 30—92% der Vinylcomonomerkomponente (B) copolymerisiert ist.

Vorzugsweise bestehen die Polymeren aus 15 bis 60% Makromer (A) und 85 bis 40% Vinylverbindungen (B).

Die erfindungsgemässen Polymeren lassen sich gezielt herstellen, so dass sie als Material entweder für harte Kontaktlinsen oder für weiche Kontaktlinsen verwendbar sind. Unterschiedliche Comonomere und Gehalte an Polysiloxanmakromer sind erforderlich, um die optimale Leistung bei dem einen oder anderen Kontaktlinsentyp zu erzielen.

Bei der Auswahl der Polysiloxankomponente und des Vinylmonomeren für eine Zusammensetzung für harte Kontaktlinsen kommt es natürlich darauf an, ein Gemisch zu erhalten, das klare Polymere mit genügender Formbeständigkeit und Sauerstoffdurchlässigkeit ergibt. In manchen Fällen ist ein Comonomerengemisch vorteilhaft, um Phasentrennung und somit Undurchsichtigkeit zu vermeiden. Ferner ist es leichter, klare Produkte mit verhältnismässig niedermolekularen Polysiloxanen zu erhalten als mit nochmolekularen Polyisloxanen. Polysiloxane mit kurzen Ketten zwischen Vernetzungsstellen Liefern auch härtere, formbeständigere Polymere; deren Sauerstoffdurchlässigkeit ist jedoch gegenüber Polysiloxanen grösserer Kettenlänge und somit geringerer Vernetzungsdichte verringert. Sorgfältige Auswahl des bzw. der Monomeren und des Polysiloxanmakromeren ermöglicht es somit, die physikalischen Eigenschaften und die Sauerstoffdurchlässigkeit der vorliegenden Silikonpolymeren in erheblichem Ausmass gezielt einzustellen.

Zur Herstellung harter Kontaktlinsen enthält das bevorzugte Polymer das vernetzte Copolymerisationsprodukt aus (A) etwa 15 bis etwa 35 Gew.-% eines Polysiloxanmakromeren und (B) etwa 85 bis etwa 65 Gew.-% eines Gemischs aus wasserunlöslichen Monomeren ($B_1$), wasserlöslichen Monomeren ($B_2$) und einem diolefinischen Monomer ($B_x$), wobei, bezogen auf die Gew.-% des Gesamtgewichts der Monomeren, $B_1$ etwa 60 bis etwa 95%, $B_2$ etwa 15 bis etwa 0% und $B_x$ etwa 25 bis etwa 5% betragen. Die bevorzugten wasserunlöslichen Monomeren $B_1$ sind Methylmethacrylat, Isopropylmethacrylat, Isobutylmethacrylat, tert.-Butylmethacrylat, Cyclohexylmethacrylat, Isobornylmethacrylat oder deren Gemische. Als wasserlösliche Monomere $B_2$ werden 2-Hydroxyäthylmethacrylat, N,N-Dimethylacrylamid, Acrylsäure, Methacrylsäure, N-Vinyl-2-pyrrolidon oder Gemische von diesen bevorzugt. Als diolefinisches Monomer $B_x$ liegt bevorzugt Neopentylglykoldiacrylat, Aethylenglykoldimethacrylat oder das Reaktionsprodukt aus einem Mol Isophorondiisocyanat mit zwei Mol 2-Hydroxyäthylmethacrylat vor.

Zur Herstellung weicher Kontaktlinsen besteht das bevorzugte Polymer aus dem vernetzten Copolymerisationsprodukt aus (A) etwa 40 bis etwa 60 Gew.-% eines Polysiloxanmakromeren und (B) etwa 60 bis etwa 40 Gew.-% eines Gemischs aus wasserunlöslichem Monomer ($B_1$), wasserlöslichem Monomer ($B_2$) und einem diolefinischen Monomer ($B_x$), wobei, auf Grundlage der Gew.-% im Gesamtgewicht der Monomeren, $B_1$ etwa 75 bis etwa 100%, $B_2$ etwa 25 bis etwa 0% und $B_x$ etwa 5 bis etwa 0% betragen. Die bevorzugten wasserunlöslichen Monomeren ($B_1$) sind Aethylacrylat oder -methacrylat, n-Butylacrylat oder -methacrylat, n-Hexylacrylat oder -methacrylat, 2-Aethylhexylacrylat oder -methacrylat, n-Octylacrylat oder -methacrylat, n-Decylacrylat oder -methacrylat oder deren Gemische untereinander oder mit Methyl- oder Isobornylmethacrylat. Als wasserlösliche Monomere ($B_2$) und diolefinische Monomere ($B_x$) werden die oben bei der Herstellung von harten Kontaktlinsen erwähnten bevorzugt.

Ein bevorzugtes Polymer zur Herstellung einer harten Kontaktlinse besteht beispielsweise aus (A) 30 Gew.-% des Polysiloxans der Formel $A_2$, worin $R_4$ den zweiwertigen, von Isophorondiisocyanat abgeleiteten Rest darstellt, $Z_1$ und $Z_2$ beide —O— und $y_2$ 2 sind, und 70 Gew.-% Monomer (B), worin, auf Grundlage der Gew.-% Gesamtmonomeren, als $B_1$ 71,4% Methylmethacrylat, als $B_2$ 5,7% 2-Hydroxyäthylmethacrylat und als $B_x$ 22,9% Neopentylglykoldiacrylat vorliegen.

Ein Beispiel für ein bevorzugtes Polymer zur Herstellung einer weichen Kontaktlinse enthält (A) 50 Gew.-% des Polysiloxans der Formel $A_2$, worin $R_4$ den zweiwertigen, von Isophorondiisocyanat abgeleiteten Rest darstellt, $Z_1$ und $Z_2$ beide —O— und $y_2$ 2 sind, und 50 Gew.-% Monomeren (B), wobei als $B_1$ 80% eines 50/50-Gemischs von Methylmethacrylat/2-Aethylhexylacrylat und als $B_2$ 20% 2-Hydroxyäthylmethacrylat vorliegen.

Obwohl diese Erfindung vor allem auf die Herstellung harter, formstabiler Kontaklinsen gerichtet ist,

liegt es im Rahmen dieser Erfindung, irgendeines der oben erwähnten Monomeren zur Herstellung hochfester, $O_2$-durchlässiger Polymerer mit einem weiten Bereich physikalischer Eigenschaften von hart und starr bis zu kautschukartig und weich einzusetzen. Solche weichen Polymeren sind beispielsweise als Bandagen oder als weiche Kontaktlinsen verwendbar, insbesondere wenn sie nach einer der allgemein angewandten Methoden zur Erhöhung der Benetzbarkeit hydrophober Oberflächen, wie Plasmabehandlung, Strahlungspropfen und Oxydation, behandelt sind.

Wegen ihrer guten Gewebsverträglichkeit und Sauerstoffdurchlässigkeit sowie Festigkeit und Elastizität sind die erfindungsgemässen Polymeren besonders geeignet zur Verwendung als intramuskuläre und subkutane Implantate in Warmblütern und als Kontaktlinsenmaterial. Aus den gleichen Gründen lassen sich die erfindungsgemässen Materialien zu Ersatzblutgefässen oder extrakorporalen Nebenleitungen verarbeiten.

Die nachfolgenden Beispiele dienen nur der Erläuterung und sind nicht so auszulegen, als ob sie die Art und den Umfang der vorliegenden Erfindung in irgendeiner Weise einschränken.

Bei den nachfolgenden Beispielen wird die spezifische Sauerstoffdurchlässigkeit ($O_2$ . DK) durch Messung der Durchlässigkeit für gelösten Sauerstoff bei 35°C mittels einer Polarographieelektrode in Luftgesättigter wässriger Umgebung bestimmt und in Einheiten

$$O_2DK = \frac{Ncm^3 \cdot cm}{cm^2 \cdot sek \cdot cm\ Hg} \cdot 10^{10}$$

ausgedrückt.

Die Benetzbarkeit wird durch Messung des Kontaktwinkels eines an die Unterfläche einer 1 mm dicken, in 36°C warmem, mit Octan gesättigten destillierten Wasser eingetauchten Probefolie aufgestiegenen n-Octantröpfchens gemessen. Hohe Zahlen bei dieser Messung bedeuten hohe Benetzbarkeit.

Die Härte wird mit einem Shore-D-Durometer an polierten Oberflächen eines aus der Mitte geschnittenen Rundstücks von 10 mm Durchmesser und 8 mm Höhe bestimmt.

Beispiel 1

Herstellung des polysiloxanmakromeren

Man beschickt einen mit einem mechanischen Rührer, Thermometer, Rückflusskühler und Stickstoffeinlass ausgerüsteten 1-Liter-Dreihalskolben mit 186,6 g (0,03 Mol) Polydimethylsiloxantriol (DOW CORNING Oel 1248), aus dem mittels Durchleiten durch einen Verdampfer mit Verteilerbürsten sämtliche flüchtige Bestandteile entfernt worden waren. Dann gibt man 21,0 g (0,0945 Mol) 1-Isocyanatomethyl-5-isocyanato-1,3,3-trimethylcyclohexan (Isophorondiisocyanat, IPDI) zusammen mit 0,025 g Dibutylzinndilaurat als Katalysator dazu. Dann rührt man fünf Stunden unter Stickstoff auf einem auf 50°C regulierten Wasserbad. Nach dieser Zeit ist der durch Titration bestimmte NCO-Gehalt auf 1,94% gefallen (Theorie 2,00%).

Dann verdünnt man 169,4 g des oben hergestellten Polydimethylsiloxan-triisocyanatpräpolymeren mit 10,2 g 2-Hydroxyäthylmethacrylat (HEMA) und rührt unter Stickstoff bei Raumtemperatur, bis sämtliche NCO-Gruppen in Reaktion getreten sind, wie man durch die Abwesenheit der Isocyanatbande im Infrarotspektrum feststellt. Das entstandene Produkt besteht aus >99,9% Polysiloxan mit Methacrylatendgruppen und einer geringen Menge mit HEMA maskiertem IPDI, was zeigt, dass etwas Kettenverlängerung stattgefunden hat. Dies bestätigt sich auch durch Gelpermeationschromatographie.

Beispiele 2—17

Herstellung von polymerproben

Man vermischt je 30 g des gemäss Beispiel 1 hergestellten Polysiloxanmakromeren mit Comonomeren in den in Tabelle 1 angeführten Verhältnissen. Nach Zugabe von 0,06 g (0,2%) 1-Hydroxycyclohexylphenylketon (UV-Initiator A) wird das Gemisch jeweils gründlich entgast und dann unter Stickstoff gelagert. Ein Teil der Gemische wird jeweils zur Herstellung von 0,1 mm dicken Folien zwischen silanbehandelten Glasplatten verwendet; 0,1 mm dickes MYLAR (DuPont-Polyesterfolie) wird als Abstandstück verwendet, und die Form wird durch Klammern zusammengehalten. Man bestrahlt die Formen 3 Stunden mit dem UV-Licht einer Black-Light-Blue-Lampe (SYLVANIA), worauf man das Polymer zur Durchführung der Sauerstoffdurchlässigkeitsmessungen aus der Form entnimmt.

Auf die gleiche Weise wird je eine 1 mm dicke Folie aus jedem Monomer-Makromergemisch gegossen und zur Bestimmung der Benetzbarkeit verwendet.

Je ein weiterer Teil der Monomer-Makromergemische wird mittels einer Spritze festgelegten Inhalts in zylindrische Polypropylenformen von 14 mm Durchmesser und 8 mm Höhe eingefüllt und mit einem lose sitzenden, konvexen Polypropylendeckel abgedichtet. Die Formen werden in eine Schale gestellt und in einem mit Stickstoff durchspülten Kasten unter Verwendung der oben beschriebenen Lampen zuerst nur von unten biz zur Gelierung des Gemischs (15 Minuten) und dann von oben und unten insgesamt drei Stunden lang bestrahlt. Dann öffnet man die Formen und entnimmt das Polymerrundstück. Mehrere Rundstücke werden durch Schneiden entweder parallel oder senkrecht zur runden Fläche halbiert, und die Schnittflächen werden zur Härtemessung poliert.

Die Werte in der nachfolgenden Tabelle zeigen den Effekt der gewählten Comonomeren auf $O_2$ . DK, Benetzung und Härte. Die Werte für den Elastizitätsmodul dieser Polymeren liegen bei >1(GPa).

TABELLE 1

Synthese und Eigenschaften von 4% HEMA, 66% verschiedener Comonomerer und 30% Polysiloxanmakromer aus Beispiel 1 enthaltenden polymeren (die %-Werte sind stets Gew.-%)

| Bsp. Nr. | Das polymer enthält je 66% der nachfolgenden comonomeren | Aus-sehen | $O_2$ . DK | Octan/ Wasser-kontakt-winkel,° | Elasti-zitäts-modul (GPa) | Shore-D-Härte |
|---|---|---|---|---|---|---|
| 2 | Methylmethacrylat | klar | 24,3 | 95 | 2,0 | 78 |
| 3 | Cyclohexylmethacrylat | klar | 31,0 | 120 | 1,5 | 79 |
| 4 | Furfurylmethacrylat | schw, opak | 36,3 | 131 | — | 65 |
| 5 | Isobornylmethacrylat | klar | 33,4 | 119 | 1,4 | 82 |
| 6 | Methoxystyrol | klar | 30,7 | 118 | — | 79 |
| 7 | Styrol | klar | 33,2 | 109 | 1,6 | 75 |
| 8 | Isobutylmethacrylat | klar | 31,3 | 117 | 1,2 | 69 |
| 9 | Benzylmethacrylat | klar | 52,4 | 110 | 1,0 | 71 |
| 10 | Methylenbornenylmethacrylat | klar | 29,1 | 144 | 1,3 | 79 |
| 11 | Dicylopentenylmethacrylat | klar | 33,8 | 123 | 1,6 | 79 |
| 12 | Dicyclopentenyloxyäthyl-methacrylat | klar | 37,7 | 114 | 1,0 | 69 |
| 13 | Allylmethacrylat | klar | 48,4 | 120 | 1,3 | 74 |
| 14 | Tert.-Butylmethacrylat | klar | 32,2 | 115 | 1,4 | 79 |
| 15 | Methylmethacrylat:t.-Octylmethacrylat, 1:1 | klar | 30,5 | 127 | 1,4 | 78 |
| 16 | Isopropylmethacrylat | klar | 41,0 | 112 | 1,2 | 77 |
| 17 | 18% Glycidylmethacrylat, 48% Methylmethacrylat | trüb | 27,3 | 132 | 1,2 | 78 |

Die nachfolgenden Beispiele zeigen den Effekt des Polysiloxanmakromergehalts auf $O_2$DK und Benetzbarkeit.

Beispiele 18—26

Gemäss der in den vorangehenden Beispielen 2—17 beschriebenen Arbeitsweise vermischt man das Makromer aus Beispiel 1 mit verschiedenen Mengen der in Tabelle 2 angegebenen Monomeren und polymerisiert das Gemisch zu 0,1 mm bzw. 1,0 mm dicken Folien. Die Polymeren werden wie beschrieben auf Sauerstoffdurchlässigkeit bzw. Benetzbarkeit geprüft.

TABELLE 2
Effekt des %-Gehalts Polysiloxanmakromer (Si-Mak) auf die physikalischen Eigenschaften

| Bsp. | Zusammensetzung (%)[a] | | | | $O_2DK$ | Octan/Wasser-kontaktwinkel |
|---|---|---|---|---|---|---|
| | Si-Mak | MMA | CYMA | HEMA | | |
| 18 | 8 | 91 | — | 1 | 1,1 | 100 |
| 19 | 16 | 87 | — | 2 | 7,8 | 122 |
| 20 | 24 | 73 | — | 3 | 17 | 122 |
| 21 | 32 | 64 | — | 4 | 21 | 124 |
| 22 | 40 | 55 | — | 5 | 57 | 146 |
| 23 | 48 | 46 | — | 6 | 69 | 146 |
| 24 | 24 | — | 73 | 3 | 8 | 100 |
| 25 | 32 | — | 64 | 4 | 17 | 116 |
| 26 | 40 | — | 55 | 5 | 34 | 121 |

[a] MMA=Methylmethacrylat
CYMA=Cyclohexylmethacrylat
HEMA=2-Hydroxyäthylmethacrylat

Beispiele 27—29

Die nachfolgenden Beispiele zeigen den Effekt der Verwendung eines hydrophilen Comonomeren (Dimethylacrylamid). Man verfährt dabei wie in Beispielen 18—26 beschrieben.

| Bsp. | Zusammensetzung | | | | $O_2DK$ | Octan/Wasser-kontaktwinkel | Wassergehalt bei Gleichgewichtsquellung (%) |
|---|---|---|---|---|---|---|---|
| | Si-Mak % | Comonomer % | HEMA % | DMA % | | | |
| 27 | 32 | MMA 54 | 4 | 10 | 35 | 111 | 5,7 |
| 28 | 32 | CYMA 54 | 4 | 10 | 36 | 120 | 2,0 |
| 29 | 32 | CYMA 54 | 4 | 20 | 34 | 117 | 6,7 |

DMA=Dimethylacrylamid

Beispiele 30—34

Die nachfolgenden Beispiele zeigen den Effekt zusätzlicher Vernetzungsmittel auf $O_2DK$, Benetzbarkeit und Härte.

Gemäss der in Beispielen 2—17 beschriebenen Arbeitsweise vermischt man das Makromer aus Beispiel 1 mit Comonomeren in den in der Tabelle angegebenen Verhältnissen. Die Gemische werden polymerisiert und wie beschrieben untersucht.

| Bsp. | Zusammensetzung[a] Si-Mak % | Comonomere % | | HEMA % | $O_2DK$ | Octan/Wasser-kontaktwinkel | Shore-D-Härte |
|---|---|---|---|---|---|---|---|
| 30 | 30 | MMA 50 | NPDA 16 | 4 | 37,7 | 124 | 78 |
| 31 | 30 | MMA 41 | NPDA 25 | 4 | 34,4 | 131 | 82 |
| 32 | 30 | CYMA 50 | NPDA 16 | 4 | 27,5 | 125 | 78 |
| 33 | 30 | IBMA 50 | NPDA 16 | 4 | 31,8 | 120 | 82 |
| 34 | 30 | IBMA 25 | EDGA 16 | 4 | 33,4 | 122 | 77 |
| | | CYMA 25 | | | | | |

IBMA=Isobutylmethacrylat
NPDA=Neopentylglykoldiacrylat
EGDA=Aethylenglykoldimethacrylat

Beispiele 35—38

Man verfährt wie in Beispiel 1, jedoch unter Erhöhung der Menge Isophorondiisocyanat (IPDI) von 0,0945 Mol (entsprechend einem 5%igen molaren Ueberschuss an NCO/OH) auf

0,105 (16,7% molarer Ueberschuss an NCO) Bsp.: 35
0,166 (84,4% molarer Ueberschuss an NCO) Bsp.: 36
0,243 (170,0% molarer Ueberschuss an NCO) Bsp.: 37
0,335 (272,2% molarer Ueberschuss an NCO) Bsp.: 38

Nach Umsetzung des NCO-Endgruppen tragenden Präpolymeren mit HEMA erhält man ein Gemisch aus 30 Teilen Polysiloxan mit Methacrylatendgruppen, 4 Teilen HEMA und 1, 5, 10 bzw. 16 Teilen des Reaktionsprodukts von 2 Mol HEMA mit 1 Mol IPDI (IPDI-dihema), wie durch Gelpermeationschromatographie bestimmt.

Die Gemische werden mit Methylmethacrylat verdünnt und in Form klarer Rundstücke und Folien verschiedener Dicke vergossen, welche die folgenden Eigenschaften aufweisen:

| Bsp. Nr. | Zusammensetzung, % Si-Mak | MMA | HEMA | IPDI-dihema | $O_2 . DK$ | Octan/Wasser-kontaktwinkel | Shore-D-Härte |
|---|---|---|---|---|---|---|---|
| 33 | 36 | 65 | 4 | 1 | 26,5 | 126 | 79 |
| 36 | 30 | 61 | 4 | 5 | 25,6 | 117 | 81 |
| 37 | 30 | 56 | 4 | 10 | 26,2 | 121 | 79 |
| 38 | 30 | 50 | 4 | 16 | 25,4 | 112 | 77 |

Die nachfolgenden Beispiele zeigen die Eignung des Polysiloxan-urethan-methacrylats zur Herstellung klarer und weicher sauerstoffdurchlässiger Polymerer (mit Elastizitätsmodul <1) zur Verwendung als weiche Kontaktlinsen.

Beispiele 39—44

Man verdünnt das Polysiloxanmakromer aus Beispiel 1 mit verschiedenen Comonomeren und 0,1% UV-Initiator A und polymerisiert durch Belichtung mit UV wie in Beispielen 2—17 beschrieben. Die Zusammensetzungen und Eigenschaften sind unten angegeben.

| | Zusammensetzung (4% HEMA) | | | | | | |
|---|---|---|---|---|---|---|---|
| Bsp. | Si-Mak % | Comonomer Methacrylatester | % | Aussehen, Griff | $O_2$ . DK | Elastizitätsmodul (GPa) | Octan/Wasser-kontaktwinkel |
| 39 | 30 | n-Butyl- | 66 | klar, weich | 39 | 0,7 | 130 |
| 40 | 30 | n-Hexyl- | 66 | klar, weich | 39 | 0,3 | 136 |
| 41 | 30 | n-Octyl- | 66 | klar, weich | 38 | $<10^{-3}$ | 92 |
| 42 | 30 | sek.-Butyl- | 66 | klar, weich | 29 | 0,8 | 124 |
| 43 | 30 | 2-Aethylhexyl- | 66 | klar, weich | 32 | $<10^{-3}$ | 115 |
| 44 | 30 | Pentamethyldisiloxanylpropyl<br>+Methyl (1:1) | 33<br>33 | klar, weich | 43 | 1,0 | 122 |

Beispiele 45—48

Man verdünnt das Polysiloxanmakromer aus Beispiel 1 mit verschiedenen Comonomeren und 0,2% UV-Initiator A und polymerisiert durch Belichtung mit UV wie in Beispielen 2—17 beschrieben. Man erhält klare Polymere mit den folgenden Zusammensetzungen und Eigenschaften:

| | Zusammensetzung (%) | | | | | |
|---|---|---|---|---|---|---|
| Bsp. | Si-Mak | HEMA | Comonomere a) | | $O_2$ . DK | Octan/Wasser kontaktwinkel |
| 45 | 50 | 10 | Methyl-MA | 40 | 66 | 135 |
| 46 | 50 | 10 | Methyl-MA | 20 | 99 | 143 |
| | | | 2-Aethylhexyl-A | 20 | | |
| 47 | 50 | 10 | 2-Aethylhexyl-A | 20 | 83 | 138 |
| | | | +Glycidyl-MA | 20 | | |
| 48 | 60 | — | 2-Aethylhexyl-A | 20 | 89 | 141 |
| | | | +Glycidyl-MA | | | |

a) MA=Methacrylat, A=Acrylat

Die nachfolgenden Beispiele zeigen die Eignung von aktiven Wasserstoff enthaltenden Monomeren, die von HEMA verschieden sind, zur Herstellung des Polysiloxanoräpolymeren auf.

Beispiele 49—55

Man verfährt wie in Beispiel 1, jedoch unter Verwendung äquivalenter Mengen anderer aktiven Wasserstoff enthaltender Vinylmonomerer anstelle von HEMA zur Endmaskierung des Polysiloxanpräpolymeren mit NCO-Endgruppen. Die Vollständigkeit der abschliessenden Maskierungsstufe wird durch IR-Spektroskopie bestätigt. Auf diese Weise werden die folgenden Polysiloxane mit Vinylendgruppen als klare viskose Flüssigkeiten hergestellt.

| Bsp. | Aktiven H enthaltendes Vinylmonomer | Abkürzung |
|---|---|---|
| 49 | 2-Hydroxyäthylacrylat | HEA |
| 50 | 2-Hydroxypropylacrylat | HPA |
| 51 | 4-Hydroxybutylvinyläther | HBVE |
| 52 | 3-Hydroxypropyl-butylfumarat | HPBF |
| 53 | t-Butylaminoäthylmethacrylat | BAEM |
| 54 | Allylalkohol | ARA |
| 55 | Methallylalkohol | MALA |

Die nachfolgenden Beispiele zeigen die Eignung der Polysiloxane mit Methacrylat-, Vinyläther- und Fumaratdoppelbindungen zur Herstellung klarer, harter und $O_2$-durchlässiger Polymerer auf.

Beispiele 56—60

Die Polysiloxane mit Vinylendgruppen aus Beispielen 45—47 werden mit Monomeren verdünnt und unter Verwendung von 0,02% UV-Initiator A als Initiator zu klaren Folien und Rundstücken polymerisiert. Die Zusammensetzungen und ihre physikalischen Eigenschaften sind in der nachfolgenden Tabelle angeführt.

| Bsp. | Polydimethylsiloxan Maskiert mit[1] | % | Comonomere | % | $O_2$DK | Shore-D-Härte |
|---|---|---|---|---|---|---|
| 56 | BAEM (Bsp. 53) | 33 | Cyclohexylmethacrylat | 67 | 19,4 | 77 |
| 57 | BAEM (Bsp. 53) | 33 | Methylmethacrylat | 67 | 31,3 | 79 |
| 58 | BAEM (Bsp. 53) | 33 | Vinylacetat | 67 | 92,0 | 60 |
| 59 | HBVE (Bsp. 51) | 33 | Vinylacetat | 67 | 20,6 | 83 |
| 60 | HPBF (Bsp. 52) | 16 | Vinylacetat | 40 | 10,5 | 80 |
| | | | Dimethylmaleinal | 30 | | |
| | | | Cyclohexylmethacrylat | 7 | | |
| | | | HPBF | 7 | | |

[1] Für die Abkürzungen siehe Bsp. 49—55.

Beispiel 61

Nach der Arbeitsweise von Beispiel 1 wird Polydimethylsiloxantriol (DOW CORNING-Oel "1248") mit Isophorondiisocyanat endmaskiert. Man gibt einen 10%igen molaren Ueberschuss Methacrylsäure sowie 0,05% Cobaltnaphthenat dazu. Es entwickelt sich $CO_2$, und das Gemisch wird 6 Stunden bei 50°C gehalten, wonach der NCO-Prozentwert fast auf null gefallen ist. Das Gemisch wird mit 70% Methylmethacrylat verdünnt unt mit 0,1% UV-Initiator A versetzt, und Polymerfolien verschiedener Dicke werden wie in Beispiel 2 beschrieben hergestellt. Das Polymer ist trüb-weiss und besitzt eine $O_2$DK von 68 und einen Octan/Wasser-kontaktwinkel von 103°.

Beispiel 62

Nach der Arbeitsweise von Beispielen 1 und 2 stellt man unter Verwendung von 2,2,4(2,4,4)-Trimethylhexan-1,6-diisocyanat anstelle von IPDI ein Polymer her. Man erhält ein Polymer mit im wesentlichen identischen Eigenschaften wie in Beispiel 2.

Die nachfolgenden Beispiele zeigen die Eignung fluorierter Monomerer zur Herstellung der erfindungsgemässen klaren, sauerstoffdurchlässigen Polymeren auf.

Beispiele 63—68

Nach der Arbeitsweise von Beispielen 1 und 2 werden die folgenden Polymeren hergestellt und ihre Sauerstoffdurchlässigkeit gemessen. Die Abkürzung MA bei dem fluorierten Comonomer bedeutet Methacrylat.

| Bsp. | % Si-Mak aus Bsp.1 | Fluoriertes Comonomer | % | % Weitere Comonomere | $O_2$ . DK . $10^{-10}$ |
|---|---|---|---|---|---|
| 63 | 30 | Hexafluorisopropyl-MA | 66 | HEMA 4% | 59,6 |
| 64 | 8 | Hexafluorisopropyl-MA | 27,8 | HEMA 0,6% | 28,0 |
| | | $C_8F_{17}(CH_2)_2S(CH_2)_3$-MA | 27,2 | CYMA 36,4% | |
| 65 | 30 | Hexafluorisopropyl-MA | 32 | HEMA 4% | 71,7 |
| | | $C_8F_{17}(CH_2)_2S(CH_2)_3$-MA | 32 | | |
| 66 | 26 | Hexafluorisopropyl-MA | 19 | HEMA 4% | 40,6 |
| | | $C_8F_{17}(CH_2)_2S(CH_2)_3$-MA | 19 | CYMA 30% | |
| 67 | 30 | $C_8F_{17}(CH_2)_2S(CH_2)_3$-MA | 33 | HEMA 4% | 62,7 |
| | | Trifluoräthyl-MA | 33 | | |
| 68 | 30 | $C_8F_{17}(CH_2)_2S(CH_2)_3$-MA | 16,5 | HEMA 4% | 41,8 |
| | | Trifluoräthyl-MA | 16,5 | CYMA 33% | |

Sämtliche Proben sind völlig klar.

Das nachfolgende Beispiel zeigt, dass die Klarheit der Polymeren aus Beispielen 63—68 ein unerwartetes Ergebnis darstellt, da analoge Zusammensetzungen, die kein Silikon enthalten, unverträgliche Gemische und schwache, undurchsichtige Polymere ergeben:

Beispiel 69

Man wiederholt Beispiel 63, jedoch unter Ersatz das Siloxanmakromeren aus Beispiel 1 durch ein analoges Makromer, das man durch Umsetzung von 1 Mol Polytetramethylenoxyddiol (MG 2 000) mit 2 Mol Isophorodiisocyanat und nachfolgende Endmaskierung mit ueberschüssigem HEMA erhält. Es entsteht ein unverträgliches Gemisch, mit dem beim Stehen und während der Polymerisation Phasentrennung auftritt. Die erhaltene Polymerfolie mit undurchsichtig, spröde und sehr schwach.

Die nachfolgenden Beispiele Legen die Verwendung weiterer Polysiloxane zur Herstellung der vorliegenden Polymeren der.

Beispiel 70

Gemäss der Arbeitsweise von Beispiel 1 setzt man 21,7 g (0,025 Mol) Polydimethylsiloxandiol (DOW CORNING-Oel Q4-3557) mit 11,7 g (0,0526 Mol) Isophorondiisocyanat um. Nach 5 Stunden Rühren unter Stickstoff bei 50°C fällt der NCO-Gehalt auf 6,80% (Theorie 6,90%).

Dann verdünnt man 22,3 g dieses Polydimethylsiloxandiisocyanatpräpolymeren mit 5,2 g 2-Hydroxyäthylmethacrylat (HEMA) und rührt unter Stickstoff bei Raumtemperatur bis zur vollständigen Umsetzung der NCO-Gruppen. Das klare, mit Methacrylat maskierte Polysiloxan wird in der Kälte unter Stickstoff gelagert. Es besteht aus 98,2% Polysiloxan mit Methacrylatendgruppen und 1,8% nicht umgesetztem HEMA.

Anschliessend verdünnt man 20 g des so hergestellten Polysiloxan-dimethacrylatpräpolymeren mit 20 g Methylmethacrylat, vermischt mit 0,04 g UV-Initiator A und entgast das Gemisch im Vakuum. Gamäss der in Beispiel 2 beschriebenen Arbeitsweise werden Proben als 0,1 bzw. 1,0 mm dicke Folien sowie in Form zylindrischer Rundstücke von 14 mm Durchmesser gegossen. Das klare Polymer besitzt die folgenden Eigenschaften.

| | |
|---|---|
| $O_2$ . DK: | 8 |
| Shore-D-Härte: | 95 |
| Octan/Wasser-kontaktwinkel: | 125 |

Beispiel 71

Gemäss der Arbeitsweise nach Beispiel 1 setzt man 28,98 g (0,015 Mol) eines Polydimethylsiloxan(PDMS)-polyäthylenoxyd(PEO)-blockcopolymeren der Struktur PEO-PDMS-PEO mit einem Aequivalentgewicht von 966 (DOW CORNING-Oel Q4-3667) mit 6,80 g (0,0306 Mol) Isophorondiisocyanat

(IPDI) µm. Nach 1 Stunde Rühren unter Stickstoff bei 50°C fällt der NCO-Gehalt auf 3,87% (Theorie 3,65%) (bzw. 0,330 val-NCO).

Dann vermischt man 28,72 g dieses mit NCO maskierten Präpolymeren mit 6,10 g (0,033 Mol) t-Butylaminoäthylmethacrylat (BAEM) und rührt unter Stickstoff bei Raumtemperatur bis zur vollständigen Umsetzung der NCO-Gruppen. Die Vollständigkeit der Reaktion wird durch IR-Spektroskopie festgestellt. Das klare viskose, mit Methacrylat maskierte PDMS-Präpolymer wird mit 35,2 g Methylmethacrylat verdünnt und mit 0,14 g UV-Initiator A versetzt. Nach gründlicher Durchmischung wird die Masse zu Folien verschiedener Dicke gegossen und durch Belichtung mit UV-Licht polymerisiert.

Das klare und zähe Polymer besteht aus 50% mit Methacrylat maskiertem Polysiloxanpräpolymer und 50% Methylmethacrylat; wenn bis zum Gleichgewicht gequollen enthält es 9% Wasser und besitzt die folgende Sauerstoffdurchlässigkeit: $O_2$ . DK=12,3 (9% $H_2O$); 24,3 (trocken).

Beispiel 72

Gemäss der Arbeitsweise von Beispiel 1 setzt man 41,0 g (0,015 Mol) eines Polydimethylsiloxan(PDMS)-dithiols vom Aequivalentgewicht 1367 (DOW CORNING X2-8024) unter verwendung von 0,02 mg Triäthylamin als Katalysator mit 6,80 g (0,0306 Mol) IPDI um. Nach 1 1/2 Stunden Rühren unter Stickstoff bei 24—28°C fällt der NCO-Gehalt auf 2,83% (Theorie 2,74%).

Dann vermischt man 44,22 g dieses mit NCO maskierten Präpolymeren mit 5,96 g t-Butylaminoäthylmethacrylat und rührt unter Stickstoff bei Raumtemperatur bis zur vollständigen Umsetzung der NCO-Gruppen. Die Vollständigkeit der Reaktion wird durch IR-Spektroskopie festgestellt. Das klare viskose, mit Methacrylat maskierte PDMS-Präpolymer wird mit 0,5 g HEMA und 115 g Methylmethacrylat verdünnt und mit 0,1 g UV-Initiator A versetzt. Nach gründlichem Durchmischen vergiesst man zu Folien verschiedener Dicke und polymerisiert durch Belichtung mit UV-Licht.

Das klare, aus 69% mit Methacrylat maskiertem Polysiloxanpräpolymer, 30,7% MMA und 0,3% HEMA bestehende Polymer besitzt die folgenden Eigenschaften:

| | |
|---|---|
| $O_2$ . DK: | 23 |
| Shore-D-Härte: | 75 |
| Octan/Wasser-kontaktwinkel: | 110 |

Das nachfolgende Beispiel erläutert die Synthese eines Polymeren mit einem kettenverlängerten Polysiloxan.

Beispiel 73

Gemäss der Arbeitsweise von Beispiel 1 setzt man 54,66 g (0,02 Mol) eines Polydimethylsiloxan(PDMS)-dithiols vom Aequivalentgewicht 1367 (DOW CORNING X8024) unter Verwendung von 0,020 g Triäthylamin als Katalysator mit 2,10 g (0,01 Mol) 2,2,4-Trimethylhexan-1,6-diisocyanat (TMDI) um. Nach Rühren über Nacht bei Raumtemperatur (24°C) und unter $N_2$ zeigt eine IR-Aufnahme, dass sämtliche Isocyanatgruppen in Reaktion getreten sind, was darauf hinweist, dass eine Kettenverlängerung von zwei Molekülen Polydimethylsiloxandithiol mit einem Molekül TMDI stattgefunden hat. 56,8 g (0,01 Mol) dieses kettenverlängerten Dithiols werden mit 4,53 g (0,0204 Mol) IPDI umgesetzt. Man rührt das Reaktionsgemisch 1 1/2 Stunden bei 24°C, nach welcher Zeit der NCO-Gehalt auf 1,49% (Theorie 1,43%) gefallen ist. 57,2 g dieses NCO-maskierten Präpolymeren werden mit 3,75 g t-Butylaminoäthylmethacrylat vermischt und bei 24°C gerührt, bis alle NCO-Gruppen umgesetzt sind, wie durch IR-Spektroskopie bestätigt.

15 g des mit Methacrylat maskierten PDMS-Präpolymeren werden mit 35 g Methylmethacrylat und 0,05 g UV-Initiator A vermischt. Das Gemisch wird in Form von Folien verschiedener Dicke oder Rundstücken gegossen und wie in Beispiel 2 beschrieben durch Belichtung mit UV-Licht polymerisiert. Das schwach trübe Polymer besitzt die folgenden Eigenschaften:

| | |
|---|---|
| $O_2$ . DK: | 34 |
| Shore-D-Härte: | 67 |
| Octan/Waser-kontaktwinkel: | 110° |

Die nachfolgenden Beispiele zeigen die Ueberlegenheit der Urethangruppen enthaltenden Polymeren über Polymere ohne Urethangruppen auf.

Beispiele 74—76

Polydimethylsiloxanmethacrylate, die Methacrylatseitengruppen auf der Hauptkette tragen und daran über Carbinolesterbrücken gebunden sind, und die von PETRARCH Chem. Co. unter der Bezeichnung

| Beispiel | Bezeichnung | Aequivalentgewicht |
|---|---|---|
| 74 | PS-486 | 1058 |
| 75 | PS-429 | 2735 |

erhältlich sind, werden mit 4% HEMA und 66% Cyclohexylmethacrylat auf 30% verdünnt. Je 0,1% UV-Initiator A werden dazugegeben, und die Gemische werden in Form 0,1 mm bzw. 1,0 mm dicker Folien durch Belichtung mit UV polymerisiert. Die Ergebnisse sind in der nachfolgenden Tabelle angeführt.

Methacrylatester, die durch Veresterung des Polydimethylsiloxantriols (1248) mit Methacryloylchlorid hergestellt und deshalb mit Ausnahme der Abwesenheit von Urethangruppen dem Polysiloxanmethacrylat aus Beispiel 1 ähnlich sind, ergeben bei der Formulierung und Polymerisation in der oben beschriebenen Art und Weise ebenfalls undurchsichtige und schwache Polymere (Bsp. 76).

| Bsp. | Aussehen | $O_2DK$ | Shore-D-Härte |
|---|---|---|---|
| 74 | trüb, spröde | 25 | 78 |
| 75 | ausgesprochene Phasentrennung; käseartig; schlecht polymerisiert | nicht messbar | |
| 76 | undurchsichtig, spröde; schlecht polymerisiert | 40 | — |

Das nachfolgende Beispiel legt die Eignung sowie die Ueberlegenheit aus erfindungsgemässen Polymeren hergestellter harter Kontaktlinsen gegenüber Materialien des Standes der Technik dar.

Beispiel 77

Auf die in Beispiel 2 beschriebene Art und Weise gegossene, runde Polymerstücke nach Beispielen 30 und 33 mit 15 mm Durchmesser und 8 mm Höhe werden durch Drehen und Polieren unter Anwendung der herkömmlichen Methoden zur Herstellung harter Kontaktlinsen zu der Gestalt harter Kontaktlinsen verarbeitet. Die Bearbeitbarkeit, der Oberflächenglanz, die härte, die Kratzfestigkeit sowie die Formbeständigkeit und Klarheit sämtlicher Proben sind ausgezeichnet, und bei Hydratation ist keine Veränderung der unteren Krümmung zu beobachten.

Ein Polymerrundstück aus Beispiel 30 wird zu einer Gestalt bearbeitet, welche auf die Elektrode eines Sauerstoffdurchlässigkeitsgeräts passt. Die $O_2$-Durchlässigkeit wird gemessen und mit Materialien des Standes der Technik verglichen, die ebenfalls gute Formbeständigkeit aufweisen und als sauerstoffdurchlässige, harte Kontaktlinsenmaterialien angeboten werden:

| Material | $O_2DK$ | Struktur der Silikoneinheiten |
|---|---|---|
| Polymer aus Bsp. 30 | 27 | wie gemäss diesem Patent definiert |
| Polycon[1] | 4 | von Oligosiloxanylalkylmethacrylaten abgeleitete Oligosiloxanseitengruppen |
| SILCON[2] | 8 | auf Silikonkautschukgrundlage |
| Cellulose-acetobutyrat | 8 | kein Silikon vorhanden |

[1] von SYNTEX Corp.
[2] von DOW CORNING Corp.

Keiner der anderen Synthesewege zur Herstellung Sihaltiger Kontaktlinsen liefert Materialien mit einer so hohen Sauerstoffdurchlässigkeit, wie mit erfindungsgemässen Polymeren erreicht werden kann, während gleichzeitig die zur Bearbeitung und zum Polieren erforderliche Härte beibehalten bleibt.

**Patentansprüche für die Vertragsstaaten: BE, CH, DE, FR, GB, IT, LI, LU, NL, SE**

1. Polymere, dadurch gekennzeichnet, dass sie aus dem vernetzten Copolymerisationsprodukt von (A) etwa 8 bis etwa 70 Gew.-%, bezogen auf ein solches Polymer, eines linearen oder verzweigten Polysiloxanmakromeren mit einem Molekulargewicht von etwa 400 bis etwa 100 000, gemessen durch Endgruppenanalyse oder Gelpermeationschromatographie, wobei dieses Makromer mindestens zwei end- oder seitenständige polymerisierbare olefinische Gruppen auf je eine Polysiloxaneinheit vom Molekulargewicht 5 000 enthält, wobei diese Gruppen über mindestens zwei Urethan-, Thiourethan-, Harnstoff- oder Amidbrücken mit dem Polysiloxan verknüpft sind, wobei dieses Makromer die Formel $A_1$ oder $A_2$

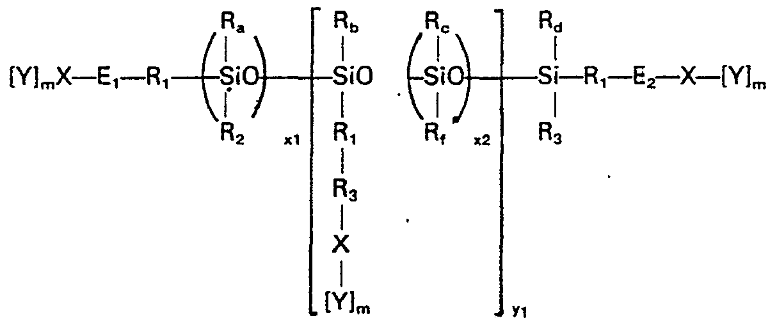 (A₁)

oder

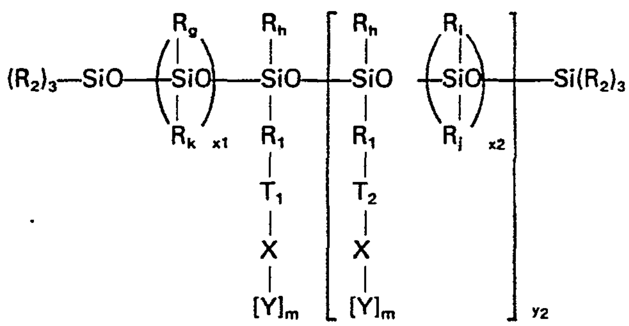 ($A_2$)

besitzt, worin $R_1$ für eine lineare oder verzweigte Alkylengruppe mit 2—6 Kohlenstoffatomen oder eine Polyoxyalkylengruppe der Formel G

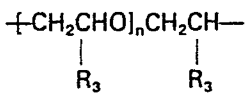 (6)

steht, worin $R_3$ Wasserstoff oder Methyl bedeutet und n eine ganze Zahl von 1—50 ist und $R_2$, $R_a$, $R_b$, $R_c$, $R_d$, $R_e$, $R_f$, $R_g$, $R_h$, $R_i$, $R_j$ und $R_k$ unabhängig voneinander für Methyl oder Phenyl stehen, $x_1$ und $x_2$ ganze Zahlen von 1 bis 500 sind, mit der Massgabe, dass die Summe $x_1+x_2$ 7 bis 1 000 beträgt, $y_1$ 0 bis 14 und $y_2$ 1 bis 13 sind, mit der Massgabe, dass das Verhältnis

$$\frac{x_1+x_2}{y_1+2}$$

bzw.

$$\frac{x_1+x_2}{y_2+1}$$

70 nicht übersteigt, $E_1$, $E_2$, $E_3$, $T_1$ und $T_2$ eine direkte Bindung sind,

X einen zwei- oder dreiwertigen Rest

$$—Z_1—CO—NH—R_4—(NH—CO—)_v$$

bedeutet, worin v=1 oder 2, $Z_1$ Sauerstoff, Schwefel oder $NR_5$ ist, wobei $R_5$ für Wasserstoff oder $C_1$—$C_4$-Niederalkyl steht, $Z_1$ an $R_1$ gebunden ist und $R_4$ für einen zwei- oder dreiwertigen, durch Wegnahme der NCO-Gruppen aus einem aliphatischen, cycloaliphatischen oder aromatischen Di- oder Triisocyanat erhaltenen Rest steht, und Y

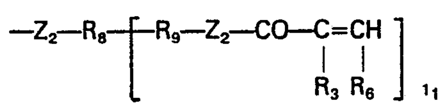 (I)

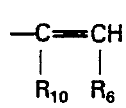 (II)

$$-Z_2-R_{11}-\left[-CH_2-\underset{\displaystyle R_3}{\underset{|}{C}}=CH_2\right]_{l_2} \qquad \text{(III)}$$

oder

$$-O-R_7-O-CH=CH_2 \qquad \text{(IV)}$$

darstellt, worin $R_6$ für Wasserstoff, Methyl, $-COOR_5$ oder $-COOR_7OH$ steht, mit der Massgabe, dass, wenn $R_6$ von Wasserstoff verschieden ist, m und $l_1=1$ und $R_8$ eine direkte Bindung ist, $Z_2$ für Sauerstoff oder $-NR_5-$ und $R_7$ für lineares oder verzweigtes Alkylen mit 2 bis 10 Kohlenstoffatomen, Phenylen oder Phenylalkylen mit 2 bis 10 Kohlenstoffatomen im Alkylen oder für Polyoxyalkylen der Formel G stehen, $R_8$ die Bedeutung von $R_7$ hat oder einen drei- oder vierwertigen Rest mit 2—4 Kohlenstoffatomen darstellt, $l_1$ 1 bis 3 ist, $R_9$ eine Alkylengruppe mit 2 bis 4 Kohlenstoffatomen oder eine direkte Bindung darstellt, mit der Massgabe, dass bei $l_1=1$ $R_9$ eine direkte Bindung bedeutet und folglich $R_8$ ein zweiwertiger Rest ist, $R_{10}$ für Wasserstoff, Methyl oder $-CH_2COOH$, mit der Massgabe, dass bei $R_{10}=-CH_2COOH$ $R_6$ Wasserstoff bedeutet, und $R_{11}$ für eine direkte Bindung oder einen zwei-, drei- oder vierwertigen aliphatischen Rest mit 1—6 Kohlenstoffatomen stehen und $l_2$ 1 bis 3 ist, mit der Massgabe, dass bei einer direkten Bindung als $R_{11}$ $l_2$ 1 ist, und

(B) etwa 92 bis etwa 30 Gew.-%, bezogen auf ein solches Polymer, eines Gemischs wasserlöslicher und wasserunlöslicher Monomerer bzw. wasserunlöslicher Monomerer, wobei diese Monomeren monoolefinisch oder diolefinisch sind oder ein Gemisch aus monoolefinischen und diolefinischen Monomeren darstellen und wobei 85 bis 100 Gew.-% der Gesamtmonomeren wasserunlöslich sind, bestehen.

2. Polymere nach Anspruch 1, dadurch gekennzeichnet, dass im Polysiloxan der Formel $A_1$ oder $A_2$ $R_1$ für Alkylen mit 3 oder 4 Kohlenstoffatomen sowie $R_2$, $R_a$, $R_b$, $R_c$, $R_d$, $R_e$, $R_f$, $R_g$, $R_h$, $R_i$, $R_j$ und $R_k$ je für Methyl stehen, $x_1+x_2$ 10 bis 100 beträgt, $y_1$ 0 bis 2, $y_2$ 1 bis 3 und m 1 sind, $E_1$, $E_2$, $E_3$, $T_1$ und $T_2$ je eine direkte Bindung darstellen und X $-Z_1-CONH-R_4-NHCO-$ bedeutet, wobei $Z_1$ für $-O-$ oder $-NH-$ und $R_4$ für einen zweiwertigen aliphatischen oder cycloaliphatischen Diisocyanatrest mit 6 bis 10 Kohlenstoffatomen stehen, und Y

$$-Z_2-R_8-\left[R_9-Z_2-CO-\underset{\displaystyle R_3}{\underset{|}{C}}=\underset{\displaystyle R_6}{\underset{|}{CH}}\right]_{l_1}$$

darstellt, worin $R_6$ rür Wasserstoff, $R_8$ für Aethylen und $R_9$ für eine direkte Bindung stehen, $l_1$ 1 ist und $Z_2$ $-O-$ oder $-NC(CH_3)_3-$ bedeutet.

3. Polymere nach Anspruch 2, dadurch gekennzeichnet, dass das Polysiloxan der Formel $A_2$ entspricht, $R_4$ den zweiwertigen, von Isophorodiisocyanat abgeleiteten Rest sowie $Z_1$ und $Z_2$ je $-O-$ bedeuten und $y_2$ 1 oder 2 ist.

4. Polymere nach Anspruch 1, dadurch gekennzeichnet, dass die Komponente (B) zu 85 bis 50 Gew.-% des Gesamtpolymeren vorliegt.

5. Polymere nach Anspruch 1, dadurch gekennzeichnet, dass das Monomer B ein wasserunlösliches Monomer $B_1$ ist, das ein Acrylat oder Methacrylat der Formel $CH_2=CR_3COOR_{12}$, ein Acrylamid oder Methacrylamid der Formel $CH_2=CR_3CONHR_{12}$, ein Maleinat oder Fumarat der Formel $R_{12}OCOCH=CHCOOR_{12}$, ein Itaconat der Formel $R_{12}OCOC(=CH_2)CH_2COOR_{12}$, einen Vinylester der Formel $R_{12}COOCH=CH_2$, einen Vinyläther der Formel $CH_2=CHOR_{12}$ oder ein Gemisch solcher Monomeren darstellt, worin $R_3$ für Wasserstoff oder Methyl und $R_{12}$ für eine lineare oder verzweigte aliphatische, cycloaliphatische oder aromatische, gegebenenfalls Aether- oder Thioätherbrücken oder eine —CO-Gruppe enthaltende Alkylgruppe mit 1 bis 21 Kohlenstoffatomen, eine Sauerstoff-, Schwefel- oder Stickstoffatome enthaltende heterocyclische Alkylgruppe, eine Polypropylenoxyd- oder Poly-n-butylenoxydgruppe mit 2 bis 50 wiederkehrenden Alkoxyeinheiten, perfluorierte Alkylgruppen mit 1—12 Kohlenstoffatomen, alkylhaltige Siloxangruppen mit 1 bis 6 Si-Atomen oder —SO— und $-SO_2$-Gruppen stehen.

6. Polymere nach Anspruch 5, dadurch gekennzeichnet, dass das wasserunlösliche Monomer $B_1$ aus der Methylmethacrylat, Isopropylmethacrylat, Isobutylmethacrylat, tert.-Butylmethacrylat, Isobornylmethacrylat, Cyclohexylmethacrylat, Hexafluorisopropylmethacrylat und deren Gemische umfassenden Gruppe ausgewählt ist.

7. Polymere nach Anspruch 6, dadurch gekennzeichnet, dass das wasserunlösliche Monomer $B_1$ aus der Methylmethacrylat, Isopropylmethacrylat, Isobutylmethacrylat, Isobornylmethacrylat und deren Gemische umfassenden Gruppe ausgewählt ist.

8. Polymere nach Anspruch 1, dadurch gekennzeichnet, dass die Komponente (B) 1 bis 25%, bezogen auf das Gesamtmonomérengewicht, eines diolefinischen Monomeren als Vernetzungsmittel enthält.

9. Polymere nach Anspruch 1, dadurch gekennzeichnet, dass als diolefinisches Monomer ($B_x$) der Komponente B das Acrylat oder Methacrylat von Allylalkohol, einem geradkettigen oder verzweigten Alkylenglykol mit 2 bis 6 Kohlenstoffatomen, einem Poly-(äthyenoxyd)-glykol, Poly-(propylenoxyd)-glykol,

Poly(n-butylenoxyd)-glykol, Thiodiäthylenglykol, Neopentylglykol, Trimethylolpropan oder Pentaerythrit oder das Reaktionsprodukt, das man durch Umsetzung von einem Mol eines Di- oder Triisocyanats der Formel $OCN-R_4-(NCO)_v$, wobei $R_4$ die in Anspruch 1 angegebene Bedeutung hat und v 1 oder 2 ist, mit 2 oder 3 Mol eines Hydroxyalkylacrylats oder -methacrylats erhält, vorliegt.

10. Polymere nach Anspruch 1, dadurch gekennzeichnet, dass als Komponente B ein Gemisch von Methylmethacrylat und 1 bis 25 Gew.-%, bezogen auf Gesamtmonomer, von Neopentylglykoldiacrylat, Aethylenglykoldimethacrylat oder dem Reaktionsprodukt aus einem Mol Isophorondiisocyanat und zwei Mol 2-Hydroxyäthylmethacrylat vorliegt.

11. Polymere nach Anspruch 5, dadurch gekennzeichnet, dass als wasserunlösliches Monomer $B_1$ ein Gemisch aus Vinylacetat und Dimethylmaleinat im Molverhältnis 2/1 bis 5/1 plus Methylmethacrylat, Isopropylmethacrylat, Isobutylmethacrylat, tert.-Butylmethacrylat, Cyclohexylmethacrylat oder Hexafluorisopropylmethacrylat oder Gemische von diesen vorliegt.

12. Polymere nach Anspruch 5, dadurch gekennzeichnet, dass das wasserunlösliche Monomer $B_1$ aus der 2-Aethylhexylacrylat, 2-Aethylhexylmethacrylat, n-Butylacrylat, n-Butylmethacrylat, n-Octylacrylat, n-Octylmethacrylat, n-Decylacrylat, n-Decylmethacrylat, $C_6-C_{10}$-perfluoralkylsubstituiertes Alkylacrylat bzw. -methacrylat sowie deren Gemische umfassenden Gruppe ausgewählt ist.

13. Polymere nach Anspruch 1, dadurch gekennzeichnet, dass im Monomeren B das wasserlösliche Monomer $B_2$ ein Acrylat oder Methacrylat der Formel $CH_2=COOR_{13}$, ein Acrylamid oder Methacrylamid der Formel $CH_2=CR_3CONHR_{14}$ oder $CH_2=CR_3CON(R_5)_2$, ein Maleinat oder Fumarat der Formel $R_{13}OCOCH=CHCOOR_{13}$, einen Vinyläther der Formel $CH_2=CHOR_{13}$, ein N-Vinyllactam oder ein Gemisch solcher Monomerer darstellt, worin $R_3$ für Wasserstoff oder Methyl, $R_5$ für Wasserstoff oder $C_1-C_4$-Niederalkyl und $R_{13}$ für einen durch wasserlöslichmachende Gruppen wie Carboxyl, Hydroxyl oder tert.-Amino, eine Polyäthylenoxydgruppe mit 2—100 wiederkehrenden Einheiten oder eine Sulfat-, Phosphat-, Sulfonat- oder Phosphonatgruppen enthaltende Gruppe einfach oder mehrfach substituierten Kohlenwasserstoffrest mit 1 bis 10 Kohlenstoffatomen stehen und $R_{14}$ die für $R_{13}$ oder $R_5$ angegebene Bedeutung hat.

14. Polymere nach Anspruch 113, dadurch gekennzeichnet, dass das wasserlösliche Monomer $B_2$ aus der 2-Hydroxyäthylmethacrylat, N,N-Dimethylacrylamid, Acrylsäure, Methacrylsäure und N-Vinyl-2-pyrrolidon umfassenden Gruppe ausgewählt ist.

15. Polymere nach Anspruch 1, dadurch gekennzeichnet, dass als Komponente A ein Polysiloxan der Formel $A_1$ oder $A_2$ vorliegt, $R_1$ für Alkylen mit 3 oder 4 Kohlenstoffatomen sowie $R_2$, $R_a$, $R_b$, $R_c$, $R_d$, $R_e$, $R_f$, $R_g$, $R_h$, $R_i$, $R_j$ und $R_k$ je für Methyl stehen, $x_1+x_2$ 10 bis 100 beträgt, $y_1$ 0 bis 2, $y_2$ 1 bis 3 und m 1 sind, $E_1$, $E_2$, $E_3$, $T_1$ und $T_2$ je eine direkte Bindung darstellen, X $-Z_1-CONH-R_4-NHCO-$ bedeutet, wobei $Z_1$ für $-O-$ oder $-NH-$ und $R_4$ für einen zweiwertigen aliphatischen oder cycloaliphatischen Diisocyanatrest mit 6 bis 10 Kohlenstoffatomen stehen, und Y

$$-Z_2-R_8-\left[R_9-Z_2-CO-\underset{\displaystyle R_3}{\underset{|}{C}}=\underset{\displaystyle R_6}{\underset{|}{CH}}\right]_{t_1}$$

darstellt, worin $R_6$ für Wasserstoff, $R_8$ für Aethylen und $R_9$ für eine direkte Bindung, und die Komponente B als Vernetzendes, diolefinisches Monomer ($B_x$) 1 bis 25%, bezogen auf die Gesamtmonomeren, des Acrylats oder Methacrylats von Allylalkohol, einem geradkettigen oder verzweigten Alkylenglykol mit 2 bis 6 Kohlenstoffatomen, einem Poly-äthylenoxyd)-glykol, Poly-(propylenoxyd)-glykol, Poly-(n-butylenoxyd)-glykol, Thiodiäthylenglykol, Neopentylglykol, Trimethylolpropan oder Pentaerythrit oder des Reaktionsprodukts, das man durch Umsetzung von einem Mol eines Di- oder Triisocyanats der Formel $OCN-R_4-(NCO)_v$, wobei $R_4$ die in Anspruch 1 angegebene Bedeutung hat und v 1 oder 2 ist, mit 2 oder 3 Mol eines Hydroxyalkylacrylats oder -methacrylats herstellt, enthält.

16. Polymere nach Anspruch 15, dadurch gekennzeichnet, dass als $B_x$ Neopentylglykoldiacrylat, Aethylenglykoldimethacrylat oder das Reaktionsprodukt von einem Mol Isophorondiisocyanat mit zwei Mol 2-Hydroxyäthylmethacrylat vorliegt.

17. Polymere nach Anspruch 15, dadurch gekennzeichnet, dass die Komponente B ein wasserunlösliches, aus der Methylmethacrylat, Isopropylmethacrylat, Isobutylmethacrylat, tert.-Butylmethacrylat, Isobornylmethacrylat, Cyclohexylmethacrylat, Hexafluorisopropylmethacrylat und deren Gemische umfassende Gruppe ausgewähltes Monomer $B_1$ enthält.

18. Polymere nach Anspruch 17, dadurch gekennzeichnet, dass die Komponente B ein wasserunlösliches, aus der Methylmethacrylat, Isopropylmethacrylat, Isobutylmethacrylat, Cyclohexylmethacrylat, Isobornylmethacrylat und deren Gemische umfassenden Gruppe ausgewähltes Monomer $B_1$ enthält.

19. Polymere nach Anspruch 18, dadurch gekennzeichnet, dass die Komponente B als wasserunlösliches Monomer $B_1$ Methylmethacrylat, Isobornylmethacrylat oder deren Gemische enthält.

20. Polymere nach Anspruch 15, dadurch gekennzeichnet, dass die Komponente B ein wasserunlösliches Monomer $B_1$ enthält, das ein Gemisch aus Vinylacetat und Dimethylmaleinat im Molverhältnis 2/1 bis 5/1 plus Methylmethacrylat, Isopropylmethacrylat, Isobutylmethacrylat, tert.-Butylmethacrylat, Cyclohexylmethacrylat oder Hexafluorisopropylmethacrylat oder deren Gemischen darstellt.

21. Polymere nach Anspruch 15, dadurch gekennzeichnet, dass die Komponente B ein wasserunlösliches, aus der 2-Aethylhexylacrylat, n-Butylacrylat, n-Butylmethacrylat, n-Octylacrylat, n-Octylmethacrylat,

n-Decylacrylat, n-Decylmethacrylat, $C_6$—$C_{10}$-perfluoralkylsubstituiertes Alkylacrylat oder -methacrylat sowie deren Gemische umfassenden Gruppe ausgewähltes Monomer $B_1$ enthält.

22. Polymere nach Anspruch 15, dadurch gekennzeichnet, dass die Komponente B ein wasserlösliches, aus der 2-Hydroxyäthylmethacrylat, N,N-Dimethylacrylamid, Acrylsäure, Methacrylsäure und N-Vinyl-2-pyrrolidon umfassenden Gruppe ausgewähltes Monomer $B_2$ enthält.

23. Polymere nach Anspruch 15, dadurch gekennzeichnet, dass sie (A) etwa 15 bis etwa 35 Gew.-% eines Polysiloxans der Formel $A_2$, wobei $R_4$ der zweiwertige, von Isophorodiisocyanat abgeleitete Rest, $Z_1$ und $Z_2$ je —O— und $y_2$ 1 oder 2 sind, und (B) etwa 85 bis etwa 65 Gew.-% eines Gemischs aus einem wasserunlöslichen Monomeren ($B_1$), einem wasserlöslichen Monomeren ($B_2$) und einem diolefinischen Monomeren ($B_x$) enthalten, wobei als Gewichtsprozent des Monomerengesamtgewichts $B_1$ etwa 60 bis etwa 95% eines wasserunlöslichen, aus der Methylmethacrylat, Isopropylmethacrylat, Isobutylmethacrylat, tert.-Butylmethacrylat, Cyclohexylmethacrylat, Isobornylmethacrylat und deren Gemische umfassenden Gruppe ausgewählten Monomeren, $B_2$ etwa 15 bis etwa 0% eines wasserlöslichen, aus der 2-Hydroxyäthylmethacrylat, N,N-Dimethylacrylamid, Acrylsäure, Methacrylsäure, N-Vinyl-2-pyrrolidon und deren Gemische umfassenden Gruppe ausgewählten Monomeren und $B_x$ etwa 25 bis etwa 5% eines diolefinischen, aus der Neopentylglykoldiacrylat, Aethylenglykoldimethacrylat und das Reaktionsprodukt aus einem Mol Isophorondiisocyanat mit zwei Mol 2-Hydroxyäthylmethacrylat umfassenden Gruppe ausgewählten Monomeren ausmachen.

24. Polymere nach Anspruch 15, dadurch gekennzeichnet, dass sie (A) etwa 40 bis etwa 60 Gew.-% eines Polysiloxans der Formel $A_2$, wobei $R_4$ der zweiwertige, von Isophorondiisocyanat abgeleitete Rest, $Z_1$ und $Z_2$ je —O— und $y_2$ 1 oder 2 sind, und (B) etwa 60 bis etwa 40 Gew.-% eines Gemischs aus einem wasserunlöslichen Monomeren ($B_1$), einem wasserlöslichen Monomeren ($B_2$) und einem diolefinischen Monomeren ($B_x$) enthalten, wobei als Gewichtsprozent des Monomerengesamtgewichts $B_1$ etwa 75 bis etwa 100% eines wasserunlöslichen, aus der Aethylacrylat oder -methacrylat, n-Butylacrylat oder -methacrylat, n-Hexylacrylat oder -methacrylat, 2-Aethylhexylacrylat oder -methacrylat, n-Octylacrylat oder -methacrylat, n-Decylacrylat oder -methacrylat und deren Gemische sowie Gemische von diesen mit Methyl- oder Isobornylmethacrylat umfassenden Gruppe ausgewählten Monomeren, $B_2$ etwa 25 bis etwa 0% eines wasserlöslichen, aus der 2-Hydroxyäthylmethacrylat, N,N-Dimethylacrylamid, Acrylsäure, Methacrylsäure, N-Vinyl-2-pyrrolidon und deren Gemische umfassenden Gruppe ausgewählten Monomeren und $B_x$ etwa 5 bis etwa 0% eines diolefinischen, aus der Neopentylglykoldiacrylat, Aethylenglykoldimethacrylat und das Reaktionsprodukt aus einem Mol Isophorondiisocyanat mit zwei Mol 2-Hydroxyäthylmethacrylat umfassenden Gruppe ausgewählten Monomeren ausmachen.

25. Harte oder weiche Kontaktlinsen, aus dem Polymer nach Anspruch 1 hergestellt.

26. Harte Kontaktlinsen, aus dem Polymer nach Anspruch 23 hergestellt.

27. Weiche Kontaktlinsen, aus dem Polymer nach Anspruch 24 hergestellt.

**Patentansprüche: für den Vertragsstaat: AT**

1. Verfahren zur Herstellung von Polymeren, dadurch gekennzeichnet, dass man

(A) etwa 8 bis etwa 70 Gew.-%, bezogen auf ein solches Polymer, eines linearen oder verzweigten Polysiloxanmakromeren mit einem Molekulargewicht von etwa 400 bis etwa 100 000, gemessen durch Endgruppenanalyse oder Gelpermeationschromatographie, wobei dieses Makromer mindestens zwei end- oder seitenständige polymerisierbare olefinische Gruppen auf je eine Polysiloxaneinheit vom Molekulargewicht 5 000 enthält, wobei diese Gruppen über mindestens zwei Urethan-, Thiourethan-, Harnstoff- oder Amidbrücken mit dem Polysiloxan verknüpft sind, wobei dieses Makromer die Formel $A_1$ oder $A_2$

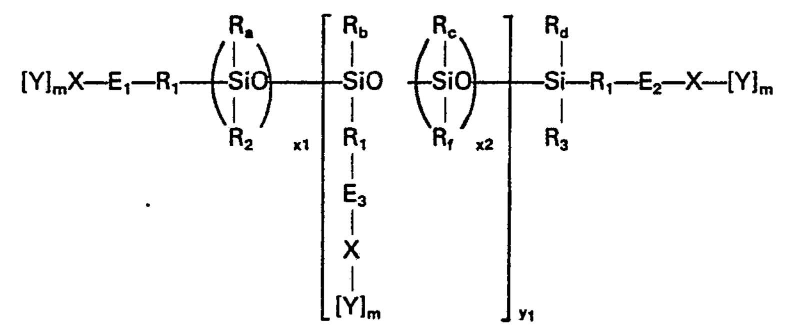

($A_1$)

oder

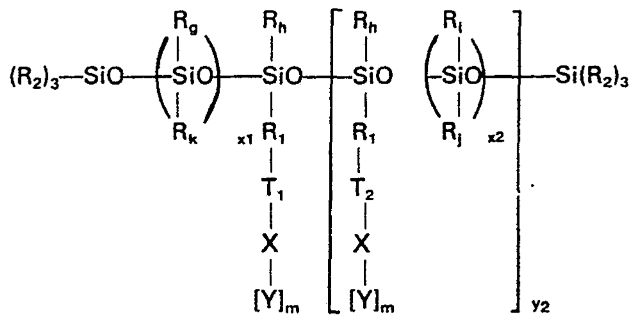 $(A_2)$

besitzt, worin $R_1$ für eine lineare oder verzweigte Alkylengruppe mit 2—6 Kohlenstoffatomen oder eine Polyoxyalkylengruppe der Formel G

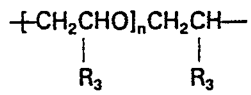 (G)

steht, worin $R_3$ Wasserstoff oder Methyl bedeutet und n eine ganze Zahl von 1—50 ist und $R_2$, $R_a$, $R_b$, $R_c$, $R_d$, $R_e$, $R_f$, $R_g$, $R_h$, $R_i$, $R_j$ und $R_k$ unabhängig voneinander für Methyl oder Phenyl stehen, $x_1$ und $x_2$ ganze Zahlen von 1 bis 500 sind, mit der Massgabe, dass die Summe $x_1+x_2$ 7 bis 1 000 beträgt, $y_1$ 0 bis 14 und $y_2$ 1 bis 13 sind, mit der Massgabe, dass das Verhältnis

$$\frac{x_1+x_2}{y_1+2}$$

bzw.

$$\frac{x_1+x_2}{y_2+1}$$

70 nicht übersteigt, $E_1$, $E_2$, $E_3$, $T_1$ und $T_2$ eine direkte Bindung darstellen,
X einen zwei- oder dreiwertigen Rest

$$-Z_1-CO-NH-R_4-(NH-CO-)_v$$

bedeutet, worin v=1 oder 2, $Z_1$ Sauerstoff, Schwefel oder $NR_5$ ist, wobei $R_5$ für Wasserstoff oder $C_1$—$C_4$-Niederalkyl steht, $Z_1$ an $R_1$ gebunden ist und $R_4$ für einen zwei- oder dreiwertigen, durch Wegnahme der NCO-Gruppen aus einem aliphatischen, cycloaliphatischen oder aromatischen Di- oder Triisocyanat erhaltenen Rest steht, und Y

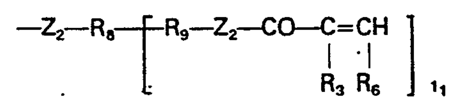 (I)

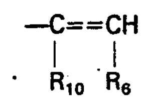 (II)

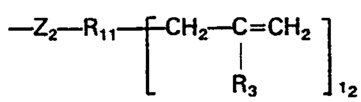 (III)

oder

$$-O-R_7-O-CH=CH_2 \quad (IV)$$

darstellt, worin $R_6$ für Wasserstoff, Methyl, $-COOR_5$ oder $-COOR_7OH$ steht, mit der Massgabe, dass, wenn $R_6$ von wasserstoff verschieden ist, m und $l_1=1$ und $R_8$ eine direkte Bindung ist, $Z_2$ für Sauerstoff oder $-NR_5-$ und $R_7$ für lineares oder verzweigtes Alkylen mit 2 bis 10 Kohlenstoffatomen, Phenylen oder Phenylalkylen mit 2 bis 10 Kohlenstoffatomen im Alkylen oder für Polyoxyalkylen der Formel G stehen, $R_8$ die Bedeutung von $R_7$ hat oder einen drei- oder vierwertigen Rest mit 2—4 Kohlenstoffatomen darstellt, $l_1$ 1

bis 3 ist, $R_9$ eine Alkylengruppe mit 2 bis 4 Kohlenstoffatomen oder eine direkte Bindung darstellt, mit der Massgabe, dass bei $l_1=1$ $R_9$ eine direkte Bindung bedeutet und folglich $R_8$ ein zweiwertiger Rest ist, $R_{10}$ für Wasserstoff, Methyl oder $-CH_2COOH$, mit der Massgabe, dass bei $R_{10}=-CH_2COOH$ $R_6$ Waserstoff bedeutet, und $R_{11}$ für eine direkte Bindung oder einen zwei-, drei- oder vierwertigen aliphatischen Rest mit 1—6 Kohlenstoffatomen stehen und $l_2$ 1 bis 3 ist, mit der Massgabe, dass bei einer direkten Bindung als $R_{11}$ $l_2$ 1 ist, und

(B) etwa 92 bis etwa 30 Gew.-%, bezogen auf ein solches Polymer, eines Gemischs wasserlöslicher und wasserlöslicher Monomerer bzw. wasserunlöslicher Monomerer, wobei diese Monomeren monoolefinisch oder diolefinisch sind oder ein Gemisch aus monoolefinischen und diolefinischen Monomeren darstellen und wobei 85 bis 100 Gew.-% der Gesamtmonomeren wasserunlöslich sind, copolymerisiert.

2. Verfahren nach Anspruch 1, dadurch gekennzeichnet, dass im Polysiloxan der Formel $A_1$ oder $A_2$ $R_1$ für Alkylen mit 3 oder 4 Kohlenstoffatomen sowie $R_2$, $R_a$, $R_b$, $R_c$, $R_d$, $R_e$, $R_f$, $R_g$, $R_h$, $R_i$, $R_j$ und $R_k$ je für Methyl stehen, $x_1+x_2$ 10 bis 100 beträgt, $y_1$ 0 bis 2, $y_2$ 1 bis 3 und m 1 sind, $E_1$, $E_2$, $E_3$, $T_1$ und $T_2$ je eine direkte Bindung darstellen, X $-Z_1-CONH-R_4-NHCO-$ bedeutet, wobei $Z_1$ für $-O-$ oder $-NH-$ und $R_4$ für einen zweiwertigen aliphatischen oder cycloaliphatischen Diisocyanatrest mit 6 bis 10 Kohlenstoffatomen stehen, und Y

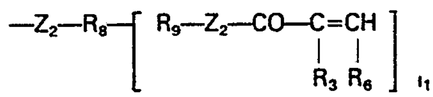

darstellt, worin $R_6$ für Wasserstoff, $R_8$ für Aethylen und $R_9$ für eine direkte Bindung stehen, $l_1$ 1 ist und $Z_2$ $-O-$ oder $-NC(CH_3)_3-$ bedeutet.

3. Verfahren nach Anspruch 2, dadurch gekennzeichnet, dass das Polysiloxan der Formel $A_2$ entspricht, $R_4$ den zweiwertigen, von Isophorondiisocyanat abgeleiteten Rest sowie $Z_1$ und $Z_2$ je $-O-$ bedeuten und $y_2$ 1 oder 2 ist.

4. Verfahren nach Anspruch 1, dadurch gekennzeichnet, dass die Komponente (B) zu 85 bis 50 Gew.-% des Gesamtpolymeren vorliegt.

5. Verfahren nach Anspruch 1, dadurch gekennzeichnet, dass das Monomer B ein wasserunlösliches Monomer $B_1$ ist, das ein Acrylat oder Methacrylat der Formel $CH_2=CR_3COOR_{12}$, ein Acrylamid oder Methacrylamid der Formel $CH_2=CR_3CONHR_{12}$, ein Maleinat oder Fumarat der Formel $R_{12}OCOCH=CHCOOR_{12}$, ein Itaconat der Formel $R_{12}OCOC(=CH_2)CH_2COOR_{12}$, einen Vinylester der Formel $R_{12}COOCH=CH_2$, einen Vinyläther der Formel $CH_2=CHOR_{12}$ oder ein Gemisch solcher Monomeren darstellt, worin $R_3$ für Wasserstoff oder Methyl und $R_{12}$ für eine lineare oder verzweigte aliphatische, cycloaliphatische oder aromatische, gegebenenfalls Aether- oder Thioätherbrücken oder eine —CO-Gruppe enthaltende Alkylgruppe mit 1 bis 21 Kohlenstoffatomen, eine Sauerstoff-, Schwefel- oder Stickstoffatome enthaltende heterocyclische Alkylgruppe, eine Polypropylenoxyd- oder Poly-n-butylenoxydgruppe mit 2 bis 50 wiederkehrenden Alkoxyeinheiten, perfluorierte Alkylgruppen mit 1—12 Kohlenstoffatomen, alkylhaltige Siloxangruppen mit 1 bis 6 Si-Atomen oder —SO— und $-SO_2$-Gruppen stehen.

6. Verfahren nach Anspruch 5, dadurch gekennzeichnet, dass das wasserunlösliche Monomer $B_1$ aus der Methylmethacrylat, Isopropylmethacrylat, Isobutylmethacrylat, tert.-Butylmethacrylat, Isobornylmethacrylat, Cyclohexylmethacrylat, Hexafluorisopropylmethacrylat und deren Gemische umfassenden Gruppe ausgewählt ist.

7. Verfahren nach Anspruch 6, dadurch gekennzeichnet, dass das wasserunlösliche Monomer $B_1$ aus der Methylmethacrylat, Isopropylmethacrylat, Isobutylmethacrylat, Isobornylmethacrylat und deren Gemische umfassenden Gruppe ausgewählt ist.

8. Verfahren nach Anspruch 1, dadurch gekennzeichnet, dass die Komponente (B) 1 bis 25%, bezogen auf das Gesamtmonomerengewicht, eines diolefinischen Monomeren ($B_x$) als Vernetzungsmittel enthält.

9. Verfahren nach Anspruch 1, dadurch gekennzeichnet, dass als diolefinisches Monomer ($B_x$) der Komponente B das Acrylat oder Methacrylat von Allylalkohol, einem geradkettigen oder verzweigten Alkylenglykol mit 2 bis 6 Kohlenstoffatomen, einem Poly-(äthylenoxyd)-glykol, Poly-(propylenoxyd)-glykol, Poly-(n-butylenoxyd)-glykol, Thiodiäthylenglykol, Neopentylglykol, Trimethylolpropan oder Pentaerythrit oder das Reaktionsprodukt, das man durch Umsetzung von einem Mol eines Di- oder Triisocyanats der Formel $OCN-R_4-(NCO)_v$, wobei $R_4$ die in Anspruch 1 angegebene Bedeutung hat und v 1 oder 2 ist, mit 2 oder 3 Mol eines Hydroxyalkylacrylats oder -methacrylats erhält, vorliegt.

10. Verfahren nach Anspruch 1, dadurch gekennzeichnet, dass als Komponente B ein Gemisch von Methylmethacrylat und 1 bis 25 Gew.-%, bezogen auf Gesamtmonomer, von Neopentylglykoldiacrylat, Aethylenglykoldimethacrylat oder dem Reaktionsprodukt aus einem Mol Isophorondiisocyanat und zwei Mol 2-Hydroxyäthylmethacrylat vorliegt.

11. Verfahren nach Anspruch 5, dadurch gekennzeichnet, dass als wasserunlösliches Monomer $B_1$ ein Gemisch aus Vinylacetat und Dimethylmaleinat im Molverhältnis 2/1 bis 5/1 plus Methylmethacrylat, Isopropylmethacrylat, Isobutylmethacrylat, tert.-Butylmethacrylat, Cyclohexylmethacrylat oder Hexafluorisopropylmethacrylat oder Gemische von diesen vorliegt.

12. Verfahren nach Anspruch 5, dadurch gekennzeichnet, dass das wasserunlösliche Monomer $B_1$ aus

der 2-Aethylhexylacrylat, 2-Aethylhexylmethacrylat, n-Butylacrylat, n-Butylmethacrylat, n-Octylacrylat, n-Octylmethacrylat, n-Decylacrylat, n-Decylmethacrylat, $C_6$—$C_{10}$-perfluoralkylsubstituiertes Alkylacrylat bzw. -methacrylat sowie deren Gemische umfassenden Gruppe ausgewählt ist.

13. Verfahren nach Anspruch 1, dadurch gekennzeichnet, dass im Monomeren B das wasserlösliche Monomer $B_2$ ein Acrylat oder Methacrylat der Formel $CH_2{=}CR_3COOR_{13}$, ein Acrylamid oder Methacrylamid der Formel $CH_2{=}CR_3CONHR_{14}$ oder $CH_2{=}CR_3CON(R_5)_2$, ein Maleinat oder Fumarat der Formel $R_{13}OCOCH{=}CHCOOR_{13}$, einen Vinyläther der Formel $CH_2{=}CHOR_{13}$, ein N-Vinyllactam oder ein Gemisch solcher Monomerer darstellt, worin $R_3$ für Wasserstoff oder Methyl, $R_5$ für Wasserstoff oder $C_1$—$C_4$-Niederalkyl und $R_{13}$ für einen durch wasserlöslichmachende Gruppen wie Carboxyl, Hydroxyl oder tert.-Amino, eine Polyäthylenoxydgruppe mit 2—100 wiederkehrenden Einheiten oder eine Sulfat-, Phosphat-, Sulfonat- oder Phosphonatgruppen enthaltende Gruppe einfach oder mehrfach substituierten Kohlenwasserstoffrest mit 1 bis 10 Kohlenstoffatomen stehen und $R_{14}$ die für $R_{13}$ oder $R_5$ angegebene Bedeutung hat.

14. Verfahren nach Anspruch 13, dadurch gekennzeichnet, dass das wasserlösliche Monomer $B_2$ aus der 2-Hydroxyäthylmethacrylat, N,N-Dimethylacrylamid, Acrylsäure, Methacrylsäure, und N-Vinyl-2-pyrrolidon umfassenden Gruppe ausgewählt ist.

15. Verfahren nach Anspruch 1, dadurch gekennzeichnet, dass als Komponente A ein Polysiloxan der Formel $A_1$ oder $A_2$ vorliegt, $R_1$ für Alkylen mit 3 oder 4 Kohlenstoffatomen sowie $R_2$, $R_a$, $R_b$, $R_c$, $R_d$, $R_e$, $R_f$, $R_g$, $R_h$, $R_i$, $R_j$ und $R_k$ je für Methyl stehen, $x_1+x_2$ 10 bis 100 beträgt, $y_1$ 0 bis 2, $y_2$ 1 bis 3 und m 1 sind, $E_1$, $E_2$, $E_3$, $T_1$ und $T_2$ je eine direkte Bindung darstellen, X —$Z_1$—CONH—$R_4$—NHCO— bedeutet, wobei $Z_1$ für —O— oder —NH— und $R_4$ für einen zweiwertigen aliphatischen oder cycloaliphatischen Diisocyanatrest mit 6 bis 10 Kohlenstoffatomen stehen, und Y

$$-Z_2-R_8-\left[R_9-Z_2-CO-\underset{R_3}{C}=\underset{R_6}{CH}\right]_{l_1}$$

darstellt, worin $R_6$ für Wasserstoff, $R_8$ für Aethylen und $R_9$ für eine direkte Bindung stehen, $l_1$ l ist und $Z_2$ —O— oder —$NC(CH_3)_3$— bedeutet, und die Komponente B als vernetzendes, diolefinisches Monomer ($B_x$) 1 bis 25%, bezogen auf die Gesamtmonomeren, des Acrylats oder Methacrylats von Allylalkohol, einem geradkettigen oder verzweigten Alkylenglykol mit 2 bis 6 Kohlenstoffatomen, einem Poly-(äthylenoxyd)-glykol, Poly-(propylenoxyd)-glykol, Poly-(n-butylenoxyd)-glykol, Thiodiäthylenglykol, Neopentylglykol, Trimethylolpropan oder Pentaerythrit oder des Reaktionsprodukts, das man durch Umsetzung von einem Mol eines Di- oder Triisocyanats der Formel $OCN$—$R_4$—$(NCO)_v$, wobei $R_4$ die in Anspruch 1 angegebene Bedeutung hat und v 1 oder 2 ist, mit 2 oder 3 Mol eines Hydroxyalkylacrylats oder -methacrylats herstellt, enthält.

16. Verfarhen nach Anspruch 15, dadurch gekennzeichnet, dass als $B_x$ Neopentylglykoldiacrylat, Aethylenglykoldimethacrylat oder das Reaktionsprodukt von einem Mol Isophorondiisocyanat mit zwei Mol 2-Hydroxyäthylmethacrylat vorliegt.

17. Verfahren nach Anspruch 15, dadurch gekennzeichnet, dass die Komponente B ein wasserunlösliches, aus der Methylmethacrylat, Isopropylmethacrylat, Isobutylmethacrylat, tert.-Butylmethacrylat, Isobornylmethacrylat, Cyclohexylmethacrylat, Hexafluorisopropylmethacrylat und deren Gemische umfassende Gruppe ausgewähltes Monomer $B_1$ enthält.

18. Verfahren nach Anspruch 17, dadurch gekennzeichnet, dass die Komponente B ein wasserunlösliches, aus der Methylmethacrylat, Isopropylmethacrylat, Isobutylmethacrylat, Cyclohexylmethacrylat, Isobornylmethacrylat und deren Gemische umfassenden Gruppe ausgewähltes Monomer $B_1$ enthält.

19. Verfahren nach Anspruch 18, dadurch gekennzeichnet, dass die Komponente B als wasserunlösliches Monomer $B_1$ Methylmethacrylat, Isobornylmethacrylat oder deren Gemische enthält.

20. Verfahren nach Anspruch 15, dadurch gekennzeichnet, dass die Komponente B ein wasserunlösliches Monomer $B_1$ enthält, das ein Gemisch aus Vinylacetat und Dimethylmaleinat im Molverhältnis 2/1 bis 5/1 plus Methylmethacrylat, Isopropylmethacrylat, Isobutylmethacrylat, tert.-Butylmethacrylat, Cyclohexylmethacrylat oder Hexafluorisopropylmethacrylat oder deren Gemische darstellt.

21. Verfahren nach Anspruch 15, dadurch gekennzeichnet, dass die Komponente B ein wasserunlösliches, aus der 2-Aethylhexylacrylat, n-Butylacrylat, n-Butylmethacrylat, n-Octylacrylat, n-Octylmethacrylat, n-Decylacrylat, n-Decylmethacrylat, $C_6$—$C_{10}$-perfluoralkylsubstituiertes Alkylacrylat oder -methacrylat sowie deren Gemische umfassenden Gruppe ausgewähltes Monomer $B_1$ enthält.

22. Verfahren nach Anspruch 15, dadurch gekennzeichnet, dass die Komponente B ein wasserlösliches, aus der 2-Hydroxyäthylmethacrylat, N,N-Dimethylacrylamid, Acrylsäure, Methacrylsäure und N-Vinyl-2-pyrrolidon umfassenden Gruppe ausgewähltes Monomer $B_2$ enthält.

23. Verfahren nach Anspruch 15, dadurch gekennzeichnet, dass man (A) etwa 15 bis etwa 35 Gew.-% eines Polysiloxans der Formel $A_2$, wobei $R_4$ der zweiwertige, von Isophorondiisocyanat abgeleitete Rest $Z_1$ und $Z_2$ je —O— und $y_2$ 1 oder 2 sind, und (B) etwa 85 bis etwa 65 Gew.-% eines Gemischs aus einem wasserunlöslichen Monomeren ($B_1$), einem wasserlöslichen Monomeren ($B_2$) und einem diolefinischen Monomeren ($B_x$), wobei als Gewichtsprozent des Monomerengesamtgewichts $B_1$ etwa 60 bis etwa 95% eines wasserunlöslichen, aus der Methylmethacrylat, Isopropylmethacrylat, Isobutylmethacrylat,

tert.-Butylmethacrylat, Cyclohexylmethacrylat, Isobornylmethacrylat und deren Gemische umfassenden Gruppe ausgewählten Monomeren, $B_2$ etwa 15 bis etwa 0% eines wasserlöslichen, aus der 2-Hydroxyäthylmethacrylat, N,N-Dimethylacrylamid, Acrylsäure, Methacrylsäure, N-Vinyl-2-pyrrolidon und deren Gemische umfassenden Gruppe ausgewählten Monomeren und $B_x$ etwa 25 bis etwa 5% eines diolefinischen, aus der Neopentylglykoldiacrylat, Aethylenglykoldimethacrylat und das Reaktionsprodukt aus einem Mol Isophorondiisocyanat mit zwei Mol 2-Hydroxyäthylmethacrylat umfassenden Gruppe ausgewählten Monomeren ausmachen, copolymerisiert.

24. Verfahren nach Anspruch 15, dadurch gekennzeichnet, dass man (A) etwa 40 bis etwa 60 Gew.-% eines Polysiloxans der Formel $A_2$, wobei $R_4$ der zweiwertige, von Isophorondiisocyanat abgeleitete Rest, $Z_1$ und $Z_2$ je —O— und $y_2$ 1 oder 2 sind, und (B) etwa 60 bis etwa 40 Gew.-% eines Gemischs aus einem wasserunlöslichen Monomeren ($B_1$), einem wasserlöslichen Monomeren ($B_2$) und einem diolefinischen Monomeren ($B_x$), wobei als Gewichtsprozent des Monomerengesamtgewichts $B_1$ etwa 75 bis etwa 100% eines wasserunlöslichen, aus der Aethylacrylat oder -methacrylat, n-Butylacrylat oder -methacrylat, n-Hexylacrylat oder -methacrylat, 2-Aethylhexylacrylat oder -methacrylat, n-Octylacrylat oder -methacrylat, n-Decylacrylat oder -methacrylat und deren Gemische sowie Gemische von diesen mit Methyl- oder Isobornylmethacrylat umfassenden Gruppe ausgewählten Monomeren, $B_2$ etwa 25 bis etwa 0% eines wasserlöslichen, aus der 2-Hydroxyäthylmethacrylat, N,N-Dimethylacrylamid, Acrylsäure, Methacrylsäure, N-Vinyl-2-pyrrolidon und deren Gemische umfassenden Gruppe ausgewählten Monomeren und $B_x$ etwa 5 bis etwa 0% eines diolefinischen, aus der Neopentylglykoldiacrylat, Aethylenglykoldimethacrylat und das Reaktionsprodukt aus einem Mol Isophorondiisocyanat mit zwei Mol 2-Hydroxyäthylmethacrylat umfassenden Gruppe ausgewählten Monomeren ausmachen, copolymerisiert.

25. Verfahren nach Anspruch 1, dadurch gekennzeichnet, dass die Copolymerisation in der Masse oder in Gegenwart eines Lösungsmittels durch Radikalcopolymerisation erfolgt.

26. Verfahren nach Anspruch 25, dadurch gekennzeichnet, dass die Radikalcopolymerisation mittels Wärme oder Strahlung erfolgt.

27. Verfahren nach Anspruch 26, dadurch gekennzeichnet, dass man die Copolymerisation mittels Wärme bei einer Temperatur von 40°C bis 105°C in Gegenwart eines radikalbildenden Initiators durchführt.

28. Verfahren nach Anspruch 26, dadurch gekennzeichnet, dass die Copolymerisation mittels UV-Strahlung in Gegenwart eines Photoinitiators erfolgt.

**Revendications pour les Etats contactants: BE, CH, DE, FR, GB, IT, LI, LU, NL, SE**

1. Polymères, caractérisés en ce qu'ils consistent en le produit de copolymérisation réticulé de (A) environ 8 à 70% en poids, par rapport audit polymère, d'un macromère de polysiloxanne linéaire ou réticulé de poids moléculaire 400 à 100 000 environ, mesuré par analyse des groupes terminaux ou chromatographie de perméation sur gel, ce macromère contenant au moins deux groupes oléfiniques polymérisables en positions terminales ou latérales par motif de polysiloxanne de poids moléculaire 5 000, ces groupes étant reliés avec le polysiloxanne par l'intermédiaire d'au moins deux ponts uréthanne, thiouréthanne, urée ou amide, ce macromère répondant à la formule $A_1$ ou $A_2$

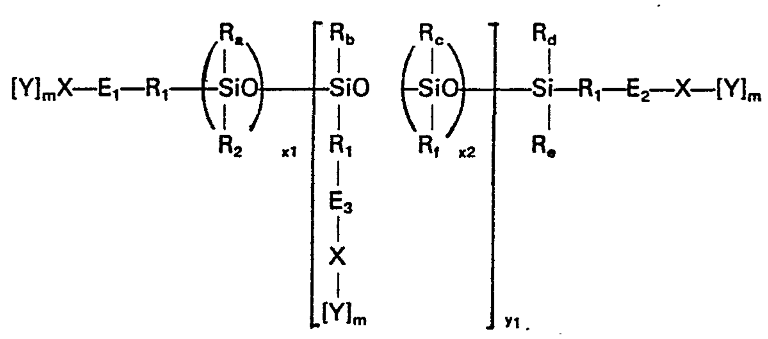

($A_1$)

ou

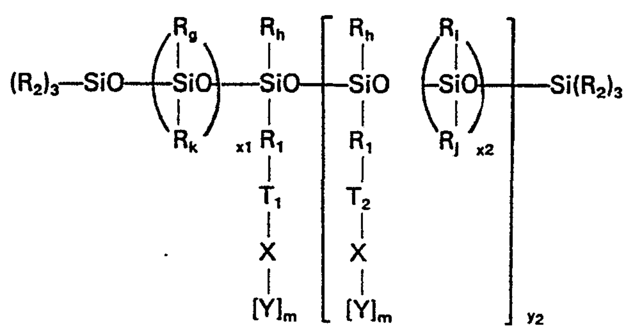

($A_2$)

dans lesquelles $R_1$ représente un groupe alkylène linéaire ou ramifié en C2—C6 ou un groupe polyoxyalkylène de formule G

$$-[CH_2\underset{R_3}{\underset{|}{C}}HO]_nCH_2\underset{R_3}{\underset{|}{C}}H- \qquad (G)$$

dans laquelle $R_3$ représente l'hydrogène ou un groupe méthyle et n est un nombre entier de 1 à 50, $R_2$, $R_a$, $R_b$, $R_c$, $R_d$, $R_e$, $R_f$, $R_g$, $R_h$, $R_i$, $R_j$ et $R_k$ représentant chacun, indépendamment les uns des autres, un groupe méthyle ou phényle, $x_1$ et $x_2$ sont das nombres entiers de 1 à 500, avec les conditions supplémentaires que la somme $x_1+x_2$ est égale à un nombre compris entre 7 et 1 000, $y_1$ a une valeur de 0 à 14 et $y_2$ une valeur de 1 à 13, avec la condition supplémentaire que le rapport respectif

$$\frac{x_1+x_2}{y_1+2}$$

et

$$\frac{x_1+x_2}{y_2+1}$$

ne dépasse pas 70, $E_1$, $E_2$, $E_3$, $T_1$ et $T_2$ représentent des liaisons directes,

X représente un groupe divalent ou trivalent

$$-Z_1-CO-NH-R_4-(NH-CO-)_v$$

dans lequel v est égal à 1 ou 2, $Z_1$ représente l'oxygène, le soufre ou un groupe $NR_5$ dans lequel $R_5$ représente l'hydrogène ou un groupe alkyle inférieur en C1—C4, $Z_1$ est relié à $R_1$ et $R_4$ représente un reste divalent ou trivalent obtenu en éliminant les groupes NCO d'un di- ou tri-isocyanate aliphatique, cycloaliphatique ou aromatique, et Y représente

$$-Z_2-R_8-\left[R_9-Z_2-CO-\underset{R_3}{\underset{|}{C}}=\underset{R_6}{\underset{|}{C}}H\right]_{l_1} \qquad (I)$$

$$-\underset{R_{10}}{\underset{|}{C}}=\underset{R_6}{\underset{|}{C}}H \qquad (II)$$

$$-Z_2-R_{11}-\left[CH_2-\underset{R_3}{\underset{|}{C}}=CH_2\right]_{l_2} \qquad (III)$$

ou

$$-O-R_7-O-CH=CH_2 \qquad (IV)$$

où $R_6$ représente l'hydrogène, un groupe méthyle $-COOR_5$ ou $-COOR_7OH$, avec la condition supplémentaire que, lorsque $R_6$ a une signification autre que l'hydrogène, que m et $l_1$ sont égaux à 1 et que $R_8$ représente une liaison directe, $Z_2$ représente l'oxygène ou un groupe $-NR_5-$ et $R_7$ représente un groupe alkylène linéaire ou ramifié en C2—C10, phénylène ou phénylalkylène contenant 2 à 10 atomes de carbone dans le groupe alkylène, ou polyoxyalkylène de formule G, $R_8$ a la signification de $R_7$ ou représente un reste trivalent ou tétravalent contenant 2 à 4 atomes de carbone, $l_1$ a une valeur de 1 à 3, $R_9$ représente un groupe alkylène en C2—C4 ou une liaison directe, avec la condition supplémentaire que lorsque $l_1=1$, $R_9$ représente une liaison directe et par conséquent $R_8$ est un reste divalent, $R_{10}$ représente l'hydrogène, un groupe méthyle ou $-CH_2COOH$, avec la condition supplémentaire que lorsque $R_{10}=-CH_2COOH$, $R_6$ représente l'hydrogène, et $R_{11}$ représente une liaison directe ou un reste aliphatique di-, tri- ou tétra-valent en C1—C6 et $l_2$ a une valeur de 1 à 3, avec la condition supplémentaire que lorsque $R_{11}$ représente une liaison directe, $l_2$ est égal à 1, et

(B) environ 92 à 30% en poids, par rapport audit polymère, d'un mélange de monomères solubles dans l'eau et insolubles dans l'eau ou de monomères insolubles dans l'eau, ces monomères étant monooléfiniques ou dioléfiniques ou consistant en un mélange de monomères monooléfiniques et dioléfiniques, 85 à 100% en poids des monomères totaux étant insolubles dans l'eau.

2. Polymères selon la revendication 1, caractérisés en ce que, dans le polysiloxanne de formule $A_1$ ou $A_2$, $R_1$ représente un groupe alkylène en C3 ou C4, $R_2$, $R_a$, $R_b$, $R_c$, $R_d$, $R_e$, $R_f$, $R_g$, $R_h$, $R_i$, $R_j$ et $R_k$ représentent chacun un groupe méthyle, lu somme $x_1+x_2$ a une valeur de 10 à 100, $y_1$ est un nombre de 0 à 2, $y_2$ est un nombre de 1 à 3 et m est égal à 1, $E_1$, $E_2$, $E_3$, $T_1$ et $T_2$ représentent chacun une liaison directe et X représente $-Z_1-CONH-R_4-NHCO-$, $Z_1$ représente —O— ou —NH— et $R_4$ représente un reste divalent de diisocyanate aliphatique ou cycloaliphatique en C6—C10, et Y représente

$$-Z_2-R_8-\left[R_9-Z_2-CO-\underset{\displaystyle R_3}{\underset{|}{C}}=\underset{\displaystyle R_6}{\underset{|}{CH}}\right]_{l_1}$$

où $R_6$ représente l'hydrogène, $R_8$ un groupe éthylène et $R_9$ une liaison directe, $l_1$ est égal à 1 et $Z_2$ représente —O— ou $-NC(CH_3)_3-$.

3. Polymères selon la revendication 2, caractérisée en ce que le polysiloxanne répond à la formule $A_2$, $R_4$ représente le reste divalent dérivant de l'isophorone-diisocyanate, $Z_1$ et $Z_2$ représentent chacun —O— et $y_2$ est égal à 1 ou 2.

4. Polymères selon la revendication 1, caractérisés en ce que le composant (B) représente de 85 à 50% du poids du polymère total.

5. Polymères selon la revendication 1, caractérisé en ce que le monomère (B) est un monomère $B_1$ insoluble dans l'eau, consistant en un acrylate ou méthacrylate de formule $CH_2=CR_3COOR_{12}$, un acrylamide ou méthacrylamide de formule $CH_2=CR_3CONHR_{12}$, un maléate ou fumarate de formule $R_{12}OCOCH=CHCOOR_{12}$, un itaconate de formule $R_{12}OCOC(=CH_2)CH_2COOR_{12}$, un ester vinylique de formule $R_{12}COOCH=CH_2$, un éther vinylique de formule $CH_2=CHOR_{12}$ ou en un mélange de tels monomères, dans lesquels $R_3$ représente l'hydrogène ou un groupe méthyle et $R_{12}$ ungroupe alkyle linéaire ou ramifié, aliphatique, cycloaliphatique ou aromatique en C1—C21 contenant éventuellement des ponts éther ou thioéther ou un groupe —CO—, un groupe alkyle hétérocyclique contenant un atome d'oxygène, de soufre ou d'azote, un groupe oxyde de polypropylène ou oxyde de poly-n-butylène contenant 2 à 50 motifs alcoxy répétés, des groupes alkyle perfluorés en C1—C12, des groupes siloxanne contenant des groupes alkyle avec 1 à 6 atomes de silicium ou des groupes —SO— et $-SO_2-$.

6. Polymères selon la revendication 5, caractérisé en ce que le monomère $B_1$ insoluble dans l'eau est choisi dans le groupe formé par le méthacrylate de méthyle, le méthacrylate d'isopropyle, le méthacrylate d'isobutyle, le méthacrylate de tert.-butyle, le méthacrylate d'isobornyle, le méthacrylate de cyclohexyle, le méthacrylate d'hexafluoroisopropyle et leurs mélanges.

7. Polymères selon la revendication 6, caractérisé en ce que le monomère $B_1$ insoluble dans l'eau est choisi dans le groupe formé par le méthacrylate de méthyle, le méthacrylate d'isopropyle, le méthacrylate d'isobutyle, le méthacrylate d'isobornyle et leurs mélanges.

8. Polymères selon la revendication 1, caractérisé en ce que le composant B contient 1 à 25%, par rapport au poids total des monomères, d'un monomère dioléfinique servant d'agent réticulant.

9. Polymères selon la revendication 1, caractérisé en ce que le monomère dioléfinique ($B_x$) du composant B est l'acrylate ou le méthacrylate de l'alcool allylique, l'un alkylène-glycol à chaîne droite ou ramifiée en C2—C6, d'un poly-(oxyde d'éthylène)-glycol, d'un poly-(oxyde de propylène)-glycol, d'un poly-(oxyde de n-butylène)-glycol, du thiodiéthylène-glycol, du glycol néopentylique, du triméthylolpropane ou du pentaérythritol ou le produit de réaction obtenu en faisant réagir 1 mole d'un di- ou tri-isocyanate de formule $OCN-R_4-(NCO)_v$ dans laquelle $R_4$ a les significations indiquées dans la revendication 1 et v est égal à 1 ou 2, avec 2 ou 3 moles d'un acrylate ou méthacrylate d'hydroxyalkyle.

10. Polymères selon la revendication 1, caractérisés en ce que le composant B est un mélange de méthacrylate de méthyle et de 1 à 25% en poids, par rapport aux monomères totaux, de diacrylate du glycol néopentylique, de diméthacrylate de l'éthylène-glycol ou du produit de réaction d'1 mole d'isophorone-diisocyanate et de 2 moles de méthacrylate de 2-hydroxyéthyle.

11. Polymères selon la revendication 5, caractérisés en ce que le monomère $B_1$ insoluble dans l'eau est un mélange d'acétate de vinyle et de maléate de diméthyle dans un rapport molaire de 2:1 à 5:1 plus du méthacrylate de méthyle, du méthacrylate d'isopropyle, du méthacrylate d'isobutyle, du méthacrylate de tert.-butyle, du méthacrylate de cyclohexyle ou du méthacrylate d'hexafluoroisopropyle ou des mélanges de ces monomères.

12. Polymères selon la revendication 5, caractérisés en ce que le monomère $B_1$ insoluble dans l'eau est choisi dans le groupe formé par l'acrylate de 2-éthylhexyle, le méthacrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, des acrylates ou méthacrylates d'alkyle substitués par des groupes perfluoralkyle en C6—C10 et leurs mélanges.

13. Polymères selon la revendication 1, caractérisés en ce que, dans le monomère B, le monomère soluble dans l'eau $B_2$ est un acrylate ou méthacrylate de formule $CH_2=CR_3COOR_{13}$, un acrylamide ou méthacrylamide de formule $CH_2=CR_3CONHR_{14}$ ou $CH_2=CR_3CON(R_5)_2$, un maléate ou fumarate de formule $R_{13}OCOCH=CHCOOR_{13}$, un éther vinylique de formule $CH_2=CHOR_{13}$, un N-vinyllactame ou un mélange de tels monomères, dans lesquels $R_3$ représente l'hydrogène ou un groupe méthyle, $R_5$ représente l'hydrogène ou un groupe alkyle inférieur en C1—C4 et $R_{13}$ représente un reste hydrocarboné en C1—C10

mono- ou poly-substitué par des groupes hydrosolubilisants tels que carboxyle, hydroxy ou tert.-amino, un groupe oxyde de polyéthylène contenant 2 à 100 motifs répétés ou un groupe contenant des groupes sulfate, phosphate, sulfonate ou phosphonate, et $R_{14}$ a les significations indiquées pour $R_{13}$ ou $R_5$.

14. Polymères selon la revendication 13, caractérisés en ce que le monomère $B_2$ soluble dans l'eau est choisi dans le groupe formé par le méthacrylate de 2-hydroxyéthyle, le N,N-diméthylacrylamide, l'acide acrylique, l'acide méthacrylique et la N-vinyl-2-pyrrolidone.

15. Polymères selon la revendication 1, caractérisés en ce que le composant A est un polysiloxanne de formule $A_1$ ou $A_2$, $R_1$ représente un groupe alkylène en C3 ou C4, $R_2$, $R_a$, $R_b$, $R_c$, $R_d$, $R_e$, $R_f$, $R_g$, $R_h$, $R_i$, $R_j$, $R_k$ représentent chacun un groupe méthyle, $x_1+x_2$ a une valeur de 10 à 100, $y_1$ a une valeur de 0 à 2, $y_2$ a une valeur de 1 à 3 et m est égal à 1, $E_1$, $E_2$, $E_3$, $T_1$ et $T_2$ représentent chacun une liaison directe, X représente $-Z_1-CONH-R_4-NHCO-$, $Z_1$ représentant $-O-$ ou $-NH-$ et $R_4$ représente un reste divalent de diisocyanate aliphatique ou cycloaliphatique en C6—C10, et Y représente

$$-Z_2-R_8-\left[R_9-Z_2-CO-\underset{R_3}{\underset{|}{C}}=\underset{R_6}{\underset{|}{CH}}\right]_{L_1}$$

où $R_6$ représente l'hydrogène, $R_8$ un groupe éthylène et $R_9$ une liaison directe, et le composant B contient en tant que monomère dioléfinique réticulant ($B_x$) 1 à 25%, par rapport aux monomères totaux, de l'acrylate ou méthacrylate de l'alcool allylique, d'un alkylène-glycol à chaîne droite ou ramifiée en C2—C6, d'un poly-(oxyde d'éthylène)-glycol, d'un poly-(oxyde de propylène)-glycol, d'un poly-(oxyde de n-butylène)-glycol, du thiodiéthylène-glycol, du glycol néopentylique, du triméthylolpropane ou du pentaérythritol ou du produit de réaction qu'on prépare en faisant réagir 1 mole d'un di- ou triisocyanate de formule $OCN-R_4-(NCO)_v$ dans laquelle $R_4$ a les significations indiquées dans la revendication 1 et v est égal à 1 ou 2, avec 2 ou 3 moles d'un acrylate ou méthacrylate d'hydroxyalkyle.

16. Polymères selon la revendication 15, caractérisés en ce que le monomère $B_x$ est le diacrylate du glycol néopentylique, le diméthacrylate de l'éthylène-glycol ou le produit de réaction d'1 mole d'isophorone-diisocyanate avec 2 moles de méthacrylate de 2-hydroxyéthyle.

17. Polymères selon la revendication 15, caractérisés en ce que le composant B contient un monomère $B_1$ insoluble dans l'eau choisi dans le groupe formé par le méthacrylate de méthyle, le méthacrylate d'isopropyle, le méthacrylate d'isobutyle, le méthacrylate de tert.-butyle, le méthacrylate d'isobornyle, le méthacrylate de cyclohexyle, le méthacrylate d'hexafluoroisopropyle et leurs mélanges.

18. Polymères selon la revendication 17, caractérisés en ce que le composant B contient un monomère $B_1$ insoluble dans l'eau choisi dans le groupe formé par le méthacrylate de méthyle, le méthacrylate d'isopropyle, le méthacrylate d'isobutyle, le méthacrylate de cyclohexyle, le méthacrylate d'isobornyle et leurs mélanges.

19. Polymères selon la revendication 18, caractérisés en ce que le composant B contient en tant que monomère $B_1$ insoluble dans l'eau du méthacrylate de méthyle, du méthacrylate d'isobornyle ou leurs mélanges.

20. Polymères selon la revendication 15, caractérisé en ce que le composant B contient un monomère $B_1$ insoluble dans l'eau consistant en un mélange d'acétate de vinyle et de maléate de diméthyle dans un rapport molaire de 2:1 à 5:1 plus du méthacrylate de méthyle, du méthacrylate d'isopropyle, du méthacrylate d'isobutyle, du méthacrylate et tert.-butyle, du méthacrylate de cyclohexyle ou du méthacrylate d'hexafluoroisopropyle ou leurs mélanges.

21. Polymères selon la revendication 15, caractérisés en ce que le composant B contient un monomère $B_1$ insoluble dans l'eau choisi dans le groupe formé par l'acrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, un acrylate ou méthacrylate d'alkyle à substituants perfluoralkyle en C6—C10 et leurs mélanges.

22. Polymères selon la revendication 15, caractérisés en ce que le composant B contient un monomère $B_2$ soluble dans l'eau choisi dans le groupe formé par le méthacrylate de 2-hydroxyéthyle, le N,N-diméthylacrylamide, l'acide acrylique, l'acide méthacrylique, et la N-vinyl-2-pyrrolidone.

23. Polymères selon la revendication 15, caractérisés en ce qu'ils contiennent (A) environ 15 à 35% en poids d'un polysiloxanne de formule $A_2$ dans laquelle $R_4$ est le reste divalent dérivé de l'isophorone-diisocyanate, $Z_1$ et $Z_2$ représentent chacun $-O-$ et $y_2$ est égal à 1 ou 2, et (B) environ 85 à 65% en poids d'un mélange d'un monomère insoluble dans l'eau $B_1$, d'un monomère soluble dans l'eau $B_2$ et d'un monomère dioléfinique $B_x$, les proportions relatives en poids de chacun de ces monomères, par rapport au poids total des monomères, étant, pour $B_1$, d'environ 60 à 95% d'un monomère insoluble dans l'eau choisi dans le groupe formé par le méthacrylate de méthyle, le méthacrylate d'isopropyle, le méthacrylate d'isobutyle, le méthacrylate de tert.-butyle, le méthacrylate de cyclohexyle, le méthacrylate d'isobornyle et leurs mélanges, pour $B_2$, environ 15 à 0% d'un monomère soluble dans l'eau choisis dans le groupe formé par le méthacrylate de 2-hydroxyéthyle, le N,N-diméthylacrylamide, l'acide acrylique, l'acide méthacrylique, la N-vinyl-2-pyrrolidone et leurs mélanges, et pour $B_x$, environ 25 à 5% d'un monomère dioléfinique choisi dans le groupe formé par le diacrylate du glycol néopentylique, le diméthacrylate de l'éthylène-glycol et le produit de réaction d'1 mole d'isophorone-diisocyanate avec 2 moles de méthacrylate de 2-hydroxyéthyle.

24. Polymères selon la revendication 15, caractérisés en ce qu'ils contiennent (A) environ 40 à 60% en poids d'un polysiloxanne de formule $A_2$ dans laquelle $R_4$ est le reste divalent dérivé de l'isophorone-diisocyanate, $Z_1$ et $Z_2$ représentent chacun —O— et $y_2$ est égal à 1 ou 2, et (B), environ 60 à 40% en poids d'un mélange d'un monomère insoluble dans l'eau $B_1$, d'un monomère soluble dans l'eau $B_2$ et d'un monomère dioléfinique $B_x$, les proportions relatives en poids de chacun de ces monomères, par rapport au poids total des monomères étant, pour $B_1$ d'environ 75 à 100% d'un monomère insoluble dans l'eau choisi dans le groupe formé par l'acrylate ou le méthacrylate d'éthyle, l'acrylate ou le méthacrylate de n-butyle, l'acrylate ou le méthacrylate de n-hexyle, l'acrylate ou le méthacrylate de 2-éthylhexyle, l'acrylate ou le méthacrylate de n-octyle, l'acrylate ou le méthacrylate de n-décyle et leurs mélanges ainsi que les mélanges de ces monomères avec le méthacrylate de méthyle ou d'isobornyle, pour $B_2$, environ 25 à 0% d'un monomère soluble dans l'eau choisi dans le groupe formé par le méthacrylate de 2-hydroxyéthyle, le N,N-diméthylacrylamide, l'acide acrylique, l'acide méthacrylique, la N-vinyl-2-pyrrolidone et leurs mélanges, et pour $B_x$, environ 5 à 0% d'un monomère dioléfinique choisi dans le groupe formé par le diacrylate du glycol néopentylique, le diméthacrylate de l'éthylèneglycol et le produit de réaction d'1 mole d'isophorone-diisocyanate avec 2 moles de méthacrylate de 2-hydroxyéthyle.

25. Lentilles de contact dures ou molles préparées à partir du polymère selon la revendication 1.

26. Lentilles de contact dures préparées à partir du polymère selon la revendication 23.

27. Lentilles de contact molles préparées à partir du polymère selon la revendication 24.

**Revendications pour l'Etat Contractant: AT**

1. Procédé de préparation de polymères, caractérisé en ce que l'on copolymérise

(A) environ 8 à 70% en poids, par rapport audit polymère, d'un macromère de polysiloxane linéaire ou ramifié de poids moléculaire environ 400 à 100 000, mesuré par analyse des groupes terminaux ou par chromatographie de perméation sur gel, ce macromère contenant au moins deux groupes oléfinique polymérisables dans les positions terminales ou latérales par motif de polysiloxanne de poids moléculaire 5 000, ces groupes étant reliés au polysiloxanne par l'intermédiaire d'au moins deux ponts uréthanne, thiouréthanne, urée ou amide, ce macromère répondant à la formule $A_1$ ou $A_2$

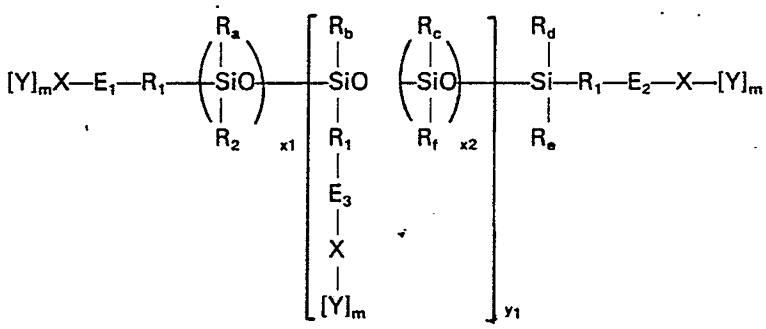

($A_1$)

ou

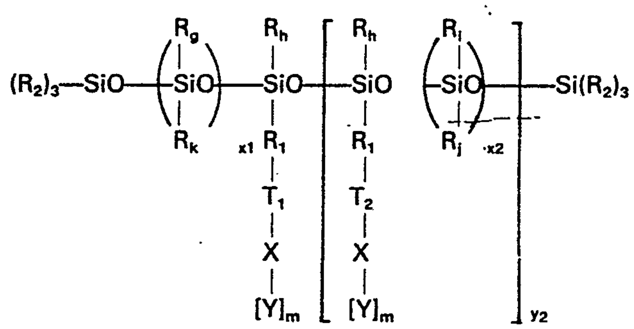

($A_2$)

dans lesquelles $R_1$ représente un groupe alkylène linéaire ou ramifié en C2—C6 ou un groupe polyoxyalkylène de formule G

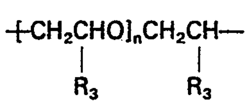

(G)

dans laquelle $R_3$ représente l'hydrogène ou un groupe méthyle et n est un nombre entier de 1 à 50, $R_2$, $R_a$, $R_b$, $R_c$, $R_d$, $R_e$, $R_f$, $R_g$, $R_h$, $R_i$, $R_j$ et $R_k$ représentant chacun, indépendamment les une des autres, un groupe méthyle ou phényle, $x_1$ et $x_2$ sont des nombres entiers de 1 à 500, avec la condition supplémentaire que la somme $x_1+x_2$ a une valeur de 7 à 1 000, $y_1$ une valeur de 0 à 14 et $y_2$ une valeur de 1 à 13, avec la condition supplémentaire que le rapport respectif

$$\frac{x_1+x_2}{y_1+2}$$

ou

$$\frac{x_1+x_2}{y_2+1}$$

ne dépasse pas 70, $E_1$, $E_2$, $E_3$, $T_1$ et $T_2$ représentent chacun une liaison directe,

X représente un reste di- ou tri-valent

$$-Z_1-CO-NH-R_4-(NH-CO-)_v$$

dans lequel v=1 ou 2, $Z_1$ représente l'oxygène, le soufre ou $NR_5$, $R_5$ représentant l'hydrogène ou un groupe alkyle inférieur en C1—C4, $Z_1$ est relié à $R_1$ et $R_4$ représente un reste di- ou tri-valent obtenu en éliminant les groupes NCO d'un di- ou tri-isocyanate aliphatique, cycloaliphatique ou aromatique, et Y représente

$$-Z_2-R_8-\left[-R_9-Z_2-CO-\underset{R_3}{\underset{|}{C}}=\underset{R_6}{\underset{|}{CH}}\right]_{l_1} \qquad (I)$$

$$-\underset{R_{10}}{\underset{|}{C}}=\underset{R_6}{\underset{|}{CH}} \qquad (II)$$

$$-Z_2-R_{11}-\left[-CH_2-\underset{R_3}{\underset{|}{C}}=CH_2\right]_{l_2} \qquad (III)$$

ou

$$-O-R_7-O-CH=CH_2 \qquad (IV)$$

où $R_6$ représente l'hydrogène, un groupe méthyle, $-COOR_5$ ou $-COOR_7OH$, avec la condition supplémentaire que, lorsque $R_6$ a une signification autre que l'hydrogène, que m et $l_1$ sont égaux à 1 et que $R_8$ représente une liaison directe, $Z_2$ représente l'oxygène ou $-NR_5-$ et $R_7$ représente un groupe alkylène linéaire ou ramifié en C2—C10, phénylène ou phénylalkylène contenant 2 à 10 atomes de carbone dans la partie alkylène, ou polyoxyalkylène de formule G, $R_8$ a les significations de $R_7$ ou représente un reste tri- ou têtra-valent en $C_2$—C4, $l_1$ a une valeur de 1 à 3, $R_2$ représente un groupe alkylène en C2—C4 ou une liaison directe, avec la condition supplémentaire que lorsque $l_1=1$, $R_9$ représente une liaison directe et par conséquent $R_8$ est un reste divalent, $R_{10}$ représente l'hydrogène, un groupe méthyle ou $-CH_2COOH$, avec la condition supplémentaire que lorsque $R_{10}=-CH_2COOH$, $R_6$ représente l'hydrogène, et $R_{11}$ représente une liaison directe ou un reste aliphatique di-, tri- ou tétravalent en C1—C6 et $l_2$ a une valeur de 1 à 3, avec la condition supplémentaire que, lorsque $R_{11}$ représente une liaison directe, $l_2$ est égal à 1, et

(B) environ 92 à 30% en poids, par rapport audit polymère, d'un mélange de monomères solubles dans l'eau et insolubles dans l'eau ou de monomères insolubles dans l'eau, ces monomères étant monooléfiniques ou dioléfiniques ou consistant en un mélange de monomères monooléfiniques et dioléfiniques, 85 à 100% en poids des monomères totaux étant insolubles dans l'eau.

2. Procédé selon la revendication 1, caractérisé en ce que, dans le polysiloxanne de formule $A_1$ ou $A_2$, $R_1$ représente un groupe alkylène en C3 ou C4 et $R_2$, $R_a$, $R_b$, $R_c$, $R_d$, $R_e$, $R_f$, $R_g$, $R_h$, $R_i$, $R_j$, $R_k$ représentent chacun un groupe méthyle, $x_1+x_2$ a une valeur de 10 à 100, $y_1$ a une valeur de 0 à 2, $y_2$ a une valeur de 1 à 3 et n est égal à 1, $E_1$, $E_2$, $E_3$, $T_1$ et $T_2$ représentent chacun une liaison directe, X représente $-Z_1-CONH-R_4-NHCO-$, $Z_1$ représentant —O— ou —NH— et $R_4$ représente un reste divalent de diisocyanate aliphatique ou cycloaliphatique en C6—C10, et Y représente

$$-Z_2-R_8-\left[R_9-Z_2-CO-\underset{R_3}{\underset{|}{C}}=\underset{R_6}{\underset{|}{CH}}\right]_{L_1}$$

où $R_6$ représente l'hydrogène, $R_8$ un groupe éthylène et $R_9$ une liaison directe, $l_1$ est égal à 1 et $Z_2$ représente —O— ou $-NC(CH_3)_3-$.

3. Procédé selon la revendication 2, caractérisé en ce que le polysiloxanne répond à la formule $A_2$, $R_4$ est le reste divalent dérivé de l'isophoronediisocyanate, $Z_1$ et $Z_2$ représentent chacun —O— et $y_2$ est égal à 1 ou 2.

4. Procédé selon la revendication 1, caractérisé en ce que le composant B représente de 85 à 50% du poids du polymère total.

5. Procédé selon la revendication 1, caractérisé en ce que le monomère B est un monomère $B_1$ insoluble dans l'eau consistant en un acrylate ou méthacrylate de formule $CH_2=CR_3COOR_{12}$, un acrylamide ou méthacrylamide de formule $CH_2=CR_3CONHR_{12}$, un maléate ou fumarate de formule $R_{12}OCOCH=CHCOOR_{12}$, un itaconate de formule $R_{12}OCOC(=CH_2)CH_2COOR_{12}$, un ester vinylique de formule $R_{12}COOCH=CH_2$, un éther vinylique de formule $CH_2=CHOR_{12}$ ou un mélange de tels monomères, dans lesquels $R_3$ représente l'hydrogène ou un groupe méthyle et $R_{12}$ représente un groupe alkyle aliphatique linéaire ou ramifié, cycloaliphatique ou aromatique, en C1—C21, contenant éventuellement des ponts éther ou thioéther ou un groupe —CO—, un groupe alkyle hétérocyclique contenant un atome d'oxygène, de soufre ou d'azote, un groupe oxyde de polypropylène, ou oxyde de poly-n-butylène contenant 2 à 50 motifs alcoxy répétés, des groupes alkyle perfluorés en C1—C12, des groupes siloxanne contenant des groupes alkyle et 1 à 6 atomes de silicium ou des groupes —SO— et —$SO_2$—.

6. Procédé selon la revendication 5, caractérisé en ce que le monomère $B_1$ insoluble dans l'eau est choisi dans le groupe formé par le méthacrylate de méthyle, le méthacrylate d'isopropyle, le méthacrylate d'isobutyle, le méthacrylate de tert.-butyle, le méthacrylate d'isobornyle, le méthacrylate de cyclohexyle, le méthacrylate d'hexafluoroisopropyle et leurs mélanges.

7. Procédé selon la revendication 6, caractérisé en ce que le monomère $B_1$ insoluble dans l'eau est choisi dans le groupe formé par le méthacrylate de méthyle, le méthacrylate d'isopropyle, le méthacrylate d'isobutyle, le méthacrylate d'isobornyle et leurs mélanges.

8. Procédé selon la revendication 1, caractérisé en ce que le composant B contient en tant qu'agent réticulant, en proportions de 1 à 25% par rapport au poids total des monomères, un monomère dioléfinique $B_x$.

9. Procédé selon la revendication 1, caractérisé en ce que le monomère dioléfinique $B_x$ du composant B consiste en l'acrylate ou le méthacrylate de l'alcool allylique, d'un alkylène-glycol à chaîne droite ou ramifiée en C2—C6, d'un poly-(oxyde d'éthylène)-glycol, d'un poly-(oxyde de propylène)-glycol, d'un poly-(oxyde de n-butylène)-glycol, du thiodiéthylène-glycol, du glycol néopentylique, du triméthylolpropane ou du pentaérythritol ou en le produit de réaction obtenu en faisant réagir 1 mole d'un di- ou tri-isocyanate de formule $OCN—R_4—(NCO)_v$ dans laquelle $R_4$ a les significations indiquées dans la revendication 1 et v est égal à 1 ou 2, avec 2 ou 3 moles d'un acrylate ou méthacrylate d'hydroxyalkyle.

10. Procédé selon la revendication 1, caractérisé en ce que le composant B consiste en un mélange de méthacrylate de méthyle avec 1 à 25% en poids, par rapport au monomère total, de diacrylate du glycol néopentylique, de diméthacrylate de l'éthylèneglycol, ou du produit de réaction d'1 mole d'isophorone-diisocyanate et 2 moles de méthacrylate de 2-hydroxyéthyle.

11. Procédé selon la revendication 5, caractérisé en ce que le monomère $B_1$ insoluble dans l'eau consiste en un mélange d'acétate de vinyle et de maléate de diméthyle dans un rapport molaire de 2:1 à 5:1 plus du méthacrylate de méthyle, du méthacrylate d'isopropyle, du méthacrylate d'isobutyle, du méthacrylate de tert.-butyle, du méthacrylate de cyclohexyle ou du méthacrylate d'hexafluoroisopropyle ou leurs mélanges.

12. Procédé selon la revendication 5, caractérisé en ce que le monomère $B_1$ insoluble dans l'eau est choisi dans le groupe formé par l'acrylate de 2-éthylhexyle, le méthacrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, un acrylate ou méthacrylate d'alkyle à substituants perfluoralkyle en C6—C10 et leurs mélanges.

13. Procédé selon la revendication 1, caractérisé en ce que, dans le monomère B, le monomère $B_2$ soluble dans l'eau consiste en un acrylate ou méthacrylate de formule $CH_2=CR_3COOR_{13}$, un acrylamide ou méthacrylamide de formule $CH_2=CR_3CONHR_{14}$ ou $CH_2=CR_3CON(R_5)_2$, un maléate ou fumarate de formule $R_{13}OCOCH=CHCOOR_{13}$, un éther vinylique de formule $CH_2=CHOR_{13}$, un N-vinyllactame ou un mélange de tels monomères dans lesquels $R_3$ représente l'hydrogène ou un groupe méthyle, $R_5$ représente l'hydrogène ou un groupe alkyle inférieur en C1—C4 et $R_{13}$ représente un reste hydrocarboné en C1—C10 mono- ou poly-substitué par des groupes hydrosolubilisants tels que carboxyle, hydroxyle ou tert.-amino, un groupe oxyde de polyéthylène contenant 2 à 100 motifs répétés ou un groupe contenant des groupes sulfate, phosphate, sulfonate ou phosphonate, et $R_{14}$ a les significations indiquées pour $R_{13}$ ou $R_5$.

14. Procédé selon la revendication 13, caractérisé en ce que le monomère $B_2$ soluble dans l'eau est choisi dans le groupe formé par le méthacrylate de 2-hydroxyéthyle, le N,N-diméthylacrylamide, l'acide acrylique, l'acide méthacrylique et la N-vinyl-2-pyrrolidone.

15. Procédé selon la revendication 1, caractérisé en ce que le composant A est un polysiloxanne de formule $A_1$ ou $A_2$, $R_1$ représente un groupe alkylène en C3 ou C4, $R_2$, $R_a$, $R_b$, $R_c$, $R_d$, $R_e$, $R_f$, $R_g$, $R_h$, $R_i$, $R_j$ et $R_k$ représentent chacun un groupe méthyle, $x_1+x_2$ a une valeur de 10 à 100, $y_1$ a une valeur de 0 à 2, $y_2$ a une valeur de 1 à 3 et n est égal à 1, $E_1$, $E_2$, $E_3$, $T_1$ et $T_2$ représentent chacun une liaison directe, X représente $—Z_1—CONH—R_4—NHCO—$, $Z_1$ représente —O— ou —NH— et $R_4$ représente un reste divalent de diisocyanate aliphatique ou cycloaliphatique en C6—C10, et Y représente

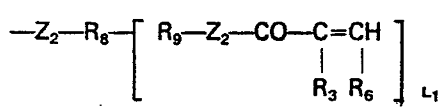

où $R_6$ représente l'hydrogène, $R_8$ un groupe éthylène et $R_9$ une liaison directe, $l_1$ est égal à 1 et $Z_2$ représente —O— ou —$NC(CH_3)_3$—, et le composant B contient en tant que monomère dioléfinique réticulant $B_x$, en proportions de 1 à 25%, par rapport aux monomères totaux, l'acrylate ou le méthacrylate de l'alcool allylique, d'un alkylène-glycol à chaîne droite ou ramifiée en C2—C6, d'un poly-(oxyde d'éthylène)-glycol, d'un poly-(oxyde de propylène)-glycol, d'un poly-(oxyde de n-butylène)-glycol, du thiodiéthylène-glycol, du glycol néopentylique, du triméthylolpropane ou du pentaérylthritol, ou le produit de réaction préparé en faisant réagir 1 mole d'un di- ou tri-isocyanate de formule $OCN—R_4—(NCO)_v$ dans laquelle $R_4$ a les significations indiquées dans la revendication 1 et v est égal à 1 ou 2, avec 2 ou 3 moles d'un acrylate ou méthacrylate d'hydroxyalkyle.

16. Procédé selon la revendication 15, caractérisé en ce que $B_x$ consiste en le diacrylate du glycol néopentylique, le diméthacrylate de l'éthylène-glycol ou le produit de réaction d'1 mole d'isophorone-diisocyanate avec 2 moles de méthacrylate de 2-hydroxyéthyle.

17. Procédé selon la revendication 15, caractérisé en ce que le composant B contient un monomère $B_1$ insoluble dans l'eau choisi dans le groupe formé par le méthacrylate de méthyle, le méthacrylate d'isopropyle, le méthacrylate d'isobutyle, le méthacrylate de tert-butyle, le méthacrylate d'isobornyle, le méthacrylate de cyclohexyle, le méthacrylate d'hexafluoroisopropyle et leurs mélanges.

18. Procédé selon la revendication 17, caractérisé en ce que le composant B contient un monomère $B_1$ insoluble dans l'eau choisi dans le groupe formé par le méthacrylate de méthyle, le methacrylate d'isopropyle, le méthacrylate d'isobutyle, le méthacrylate de cyclohexyle, le méthacrylate d'isobornyle et leurs mélanges.

19. Procédé selon la revendication 18, caractérisé en ce que le composant B contient en tant que monomère $B_1$ insoluble dans l'eau du méthacrylate de méthyle, du méthacrylate d'isobornyle, ou leurs mélanges.

20. Procédé selon la revendication 15, caractérisé en ce que le composant B contient un monomère $B_1$ insoluble dans l'eau qui consiste en un mélange d'acétate de vinyle et de maléate de diméthyle dans un rapport molaire de 2:1 à 5:1 plus du méthacrylate de méthyle, du méthacrylate d'isopropyle, du méthacrylate d'isobutyle, du méthacrylate de tert.-butyle, du méthacrylate de cyclohexyle, ou du méthacrylate d'hexafluoroisopropyle ou leurs mélanges.

21. Procédé selon la revendication 15, caractérisé en ce que le composant B contient un monomère $B_1$ insoluble dans l'eau choisi dans le groupe formé par l'acrylate de 2-éthylhexyle, l'acrylate de n-butyle, le méthacrylate de n-butyle, l'acrylate de n-octyle, le méthacrylate de n-octyle, l'acrylate de n-décyle, le méthacrylate de n-décyle, un acrylate ou méthacrylate d'alkyle à substituents perfluoralkyle en C6—C10 ou leurs mélanges.

22. Procédé selon la revendication 15, caractérisé en ce que le composant B contient un monomère $B_2$ soluble dans l'eau pris dans le groupe formé par le méthacrylate de 2-hydroxyéthyle, le N,N-diméthylacrylamide, l'acide arylique, l'acide méthacrylique et la N-vinyl-2-pyrrolidone.

23. Procédé selon la revendication 15, caractérisé en ce que l'on copolymérise (A) environ 15 à 35% en poids d'un polysiloxanne de formule $A_2$ dans laquelle $R_4$ représente le reste divalent dérivé de l'isophorone-diisocyanate, $Z_1$ et $Z_2$ représentent chacun —O— et $y_2$ est égal à 1 ou 2, et (B) environ 85 à 65% en poids d'un mélange d'un monomère insoluble dans l'eau $B_1$, d'un monomère soluble dans l'eau $B_2$ et d'un monomère dioléfinique $B_x$, les proportions relatives de chacun de ces monomères, en % en poids par rapport au poids des monomères totaux étant, pour $B_1$, d'environ 60 à 95% d'un monomère insoluble dans l'eau choisi dans le groupe formé par le méthacrylate de méthyle, le méthacrylate d'isopropyle, le méthacrylate d'isobutyle, le méthacrylate de tert.-butyle, le méthacrylate de cyclohexyle, le méthacrylate d'isobornyle et leurs mélanges, pour $B_2$, d'environ 15 à 0% d'un monomère soluble dans l'eau choisi dans le groupe formé par le méthacrylate de 2-hydroxyéthyle, le N,N-diméthylacrylamide, l'acide acrylique, l'acide méthacrylique, la N-vinyl-2-pyrrolidone et leurs mélanges, et pour $B_x$, d'environ 25 à 5% d'un monomère dioléfinique choisi dans le groupe formé par le diacrylate du glycol néopentylique, le diméthacrylate de l'éthylène-glycol et le produit de réaction d'1 mole d'isophorone-diisocyanate avec 2 moles de méthacrylate de 2-hydroxyéthyle.

24. Procédé selon la revendication 15, caractérisé en ce que l'on copolymérise (A) environ 40 à 60% en poids d'un polysiloxanne de formule $A_2$ dans laquelle $R_4$ représente le reste divalent dérivé de l'isophorone-diisocyanate, $Z_1$ et $Z_2$ représentent chacun —O— et $y_2$ est égal à 1 ou 2, et (B) environ 60 à 40% en poids d'un mélange d'un monomère insoluble dans l'eau $B_1$, d'un monomère soluble dans l'eau $B_2$ et d'un monomère dioléfinique $B_x$, les proportions relatives en poids de chacun de ces monomères par rapport au poids total des monomères étant, pour $B_1$, d'environ 75 à 100% d'un monomère insoluble dans l'eau pris dans le groupe formé par l'acrylate ou le méthacrylate d'éthyle, l'acrylate ou le méthacrylate de n-butyle, l'acrylate ou le méthacrylate de n-hexyle, l'acrylate ou le méthacrylate de 2-éthylhexyle, l'acrylate ou le méthacrylate de n-octyle, l'acrylate ou le méthacrylate de n-décyle et leurs mélanges ainsi que les mélanges de ces monomères avec le méthacrylate de méthyle ou d'isobornyle, pour $B_2$, d'environ 25 à 0% d'un monomère soluble dans l'eau pris dans le groupe formé par le méthacrylate de 2-hydroxyéthyle, le N,N-diméthylacrylamide,. l'acide acrylique, l'acide méthacrylique, le N-vinyl-2-pyrrolidone et leurs mélanges, et pour $B_x$, environ 5 à 0% d'un monomère dioléfinique pris dans le groupe formé par le diacrylate du glycol néopentylique, le diméthacrylate de l'éthylène-glycol, et le produit de réaction d'1 mole d'isophorone-diisocyanate avec 2 moles de méthacrylate de 2-hydroxyéthyle.

25. Procédé selon la revendication 1, caractérisé en ce que la copolymérisation est effectuée en masse ou en présence d'un solvant par copolymérisation radicalaire.

26. Procédé selon la revendication 25, caractérisé en ce que la copolymérisation radicalaire est effectuée sous l'action de la chaleur ou sous l'action de radiations.

27. Procédé selon la revendication 26, caractérisé en ce que la copolymérisation est effectuée sous l'action de la chaleur, à une température de 40 à 105°C, en présence d'un inducteur radicalaire.

28. Procédé selon la revendication 26, caractérisé en ce que la copolymérisation est effectuée sous l'action de radiations ultraviolettes en présence d'un photo-inducteur.

**Claims for the Contracting States: BE, CH, DE, FR, GB, IT, LI, LU, NL, SE**

1. A polymer comprising the crosslinked copolymerization product of

(A) from about 8 to about 70% by weight, based on said polymer, of a linear or branched polysiloxane macromer having a molecular weight from about 400 to about 100,000, as measured by end group analysis or gel permeation chromatography, said macromer containing at least two terminal or pendant, polymerizable olefinic groups per each 5000 molecular weight unit of polysiloxane, said groups being attached to the polysiloxane through at least two urethane, thiourethane, urea or amide linkages, said macromer having the structure $A_1$ or $A_2$

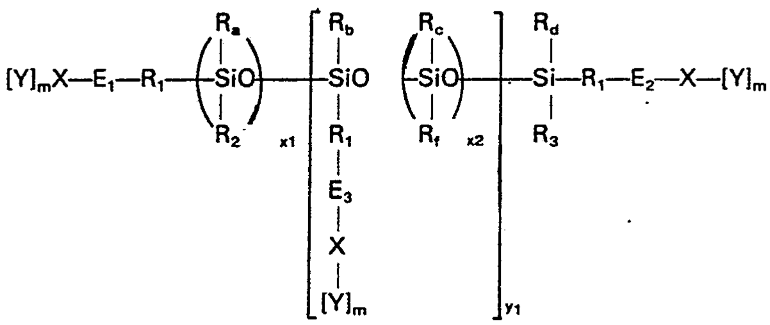

($A_1$)

or

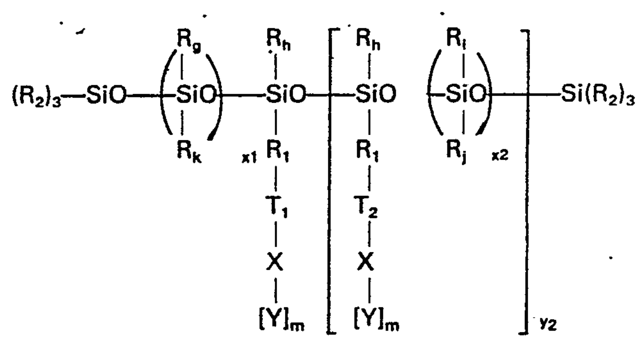

($A_2$)

wherein $R_1$ is a linear or branched alkylene group of 2 to 6 carbon atoms or a polyoxyalkylene group of formula G

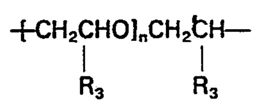

(G)

wherein $R_3$ is hydrogen or methyl and n is an integer from 1—50 and each of $R_2$, $R_a$, $R_b$, $R_c$, $R_d$, $R_e$, $R_f$, $R_g$, $R_h$, $R_i$, $R_j$ and $R_k$ independently of one another is methyl or phenyl, $x_1$ and $x_2$ are integers from 1 to 500, with the proviso that the sum of $x_1+x_2$ is 7 to 1000, $y_1$ is 0 to 14 and $y_2$ is 1 to 13, with the proviso that the ratio of

$$\frac{x_1+x_2}{y_1+y_2}$$

or

$$\frac{x_1+x_2}{y_2+1}$$

is not greater than 70, each of $E_1$, $E_2$, $E_3$, $T_1$ and $T_2$ independently of one another is a direct bond,

X is a di- or trivalent radical

$$-Z_1-CO-NH-R_4-(NH-CO-)_v$$

wherein v=1 or 2, $Z_1$ is oxygen, sulfur or $NR_5$, wherein $R_5$ is hydrogen or lower ($C_1$—$C_4$) alkyl, $Z_1$ is connected to $R_1$; and $R_4$ is a di- or trivalent radical obtained by removing the NCO-groups from an aliphatic, cycloaliphatic or aromatic di- or triisocyanate; Y is

$$-Z_2-R_8-\left[R_9-Z_2-CO-\underset{R_3}{\underset{|}{C}}=\underset{R_6}{\underset{|}{CH}}\right]_{l_1} \qquad (I)$$

$$-\underset{R_{10}}{\underset{|}{C}}=\underset{R_6}{\underset{|}{CH}} \qquad (II)$$

$$-Z_2-R_{11}-\left[CH_2-\underset{R_3}{\underset{|}{C}}=CH_2\right]_{l_2} \qquad (III)$$

or

$$-O-R_7-O-CH=CH_2 \qquad (IV)$$

wherein $R_6$ is hydrogen, methyl, $-COOR_5$ or $-COOR_7OH$, with the proviso that if $R_6$ is other than hydrogen, m and $l_1=1$ and $R_8$ is a direct bond; $Z_2$ is oxygen or $-NR_5-$ and $R_7$ is a linear or branched alkylene of 2 to 10 carbon atoms, phenylene or phenylalkylene with 2 to 10 carbon atoms in the alkylene, or polyoxyalkylene of formula G, $R_8$ is $R_7$ or a tri- or tetravalent radical of 2 to 4 carbon atoms; $l_1$ is 1 to 3; $R_9$ is un alkylene group of 2 to 4 carbon atoms or a direct bond, with the proviso that if $l_1=1$, $R_9$ is a direct bond, and it follows that $R_8$ is a divalent radical; $R_{10}$ is hydrogen, methyl or $-CH_2COOH$, with the proviso that if $R_{10}$ is $-CH_2COOH$, $R_6$ is hydrogen; $R_{11}$ is a direct bond or an aliphatic di-, tri- or tetravalent radical of 1 to 6 carbon atoms, and $l_2$ is 1 to 3, with the proviso that if $R_{11}$ is a direct bond, $l_2$ is 1, and

(B) about 92 to about 30% by weight, based on said polymer, of a mixture of water-soluble and water-insoluble monomers or water-insoluble monomers, said monomers being monoolefinic, diolefinic or a mixture of monoolefinic and diolefinic monomers, with from 85 to 100% by weight of the total monomers being water-insoluble.

2. A polymer according to claim 1, wherein in the polysiloxane of formula $A_1$ or $A_2$, $R_1$ is alkylene of 3 or 4 carbon atoms, each of $R_2$, $R_a$, $R_b$, $R_c$, $R_d$, $R_e$, $R_f$, $R_g$, $R_h$, $R_i$, $R_j$ and $R_k$ is methyl, $x_1+x_2$ is 10 to 100, $y_1$ is 0 to 2, $y_2$ is 1 to 3, m is 1, each of $E_1$, $E_2$, $E_3$, $T_1$ and $T_2$ is a direct bond and X is $-Z_1-CONH-R_4-NHCO-$, where $Z_1$ is $-O-$ or $-NH-$ and $R_4$ is a divalent aliphatic or cycloaliphatic diisocyanate radical of 6 to 10 carbon atoms, and Y is

$$-Z_2-R_8-\left[R_9-Z_2-CO-\underset{R_3}{\underset{|}{C}}=\underset{R_6}{\underset{|}{CH}}\right]_{l_1}$$

wherein $R_6$ is hydrogen, $R_8$ is ethylene, $R_9$ is a direct bond, $l_1$ is 1 and $Z_2$ is $-O-$ or $-NC(CH_3)_3-$.

3. A polymer according to claim 2, wherein the polysiloxane is of formula $A_2$, $R_4$ is the divalent radical derived from isophorone diisocyanate, each of $Z_1$ and $Z_2$ is $-O-$, and $y_2$ is 1 or 2.

4. A polymer according to claim 1, wherein the component (B) is present at the 85 to 50% by weight level of the total polymer.

5. A polymer according to claim 1, wherein monomer B is a water insoluble monomer $B_1$ which is an acrylate or methacrylate of formula $CH_2=CR_3COOR_{12}$, an acrylamide or methacrylamide of formula $CH_2=CR_3CONHR_{12}$, a maleate or fumarate of formula $R_{12}OCOCH=CHCOOR_{12}$, an itaconate of formula $R_{12}OCOC(=CH_2)CH_2COOR_{12}$, a vinyl ester of formula $R_{12}COOCH=CH_2$, a vinyl ether of formula $CH_2=CHOR_{12}$, or a mixture of said monomers, in which formulae $R_3$ is hydrogen or methyl, and $R_{12}$ is a linear or branched aliphatic, cycloaliphatic or aromatic alkyl group of 1 to 21 carbon atoms, which alkyl group may contain ether or thioether linkages or a $-CO-$ group; or is a heterocyclic alkyl group containing oxygen, sulfur or nitrogen atoms, or a polypropylene oxide or poly-n-butylene oxide group with 2 to 50 recurring alkoxy units; or is perfluorinated alkyl groups of 1 to 12 carbon atoms; or is alkyl containing siloxane groups of one to six Si atoms; or $-SO-$ and $-SO_2-$ groups.

6. A polymer according to claim 5, wherein the water insoluble monomer $B_1$ is selected from the group consisting of methyl methacrylate, isopropyl methacrylate, isobutyl methacrylate, tert-butyl methacrylate, isobornyl methacrylate, cyclohexyl methacrylate, hexafluoroisopropyl methacrylate and mixtures thereof.

7. A polymer according to claim 6, wherein the water insoluble monomer $B_1$ is selected from the group consisting of methyl methacrylate, isopropyl methacrylate, isobutyl methacrylate, isobornyl methacrylate and mixtures thereof.

8. A polymer according to claim 1, wherein component (B) contains 1 to 25%, based on the total weight of monomer, of a diolefinic monomer as crosslinking agent.

9. A polymer according to claim 1, wherein diolefinic monomer ($B_x$) of component B is the acrylate or methacrylate of allyl alcohol, of a straight or branched chain alkylene glycol of 2 to 6 carbon atoms, of poly(ethylene oxide)glycol, of poly(propylene oxide)glycol, of poly(n-butylene oxide)glycol, of thiodiethylene glycol, of neopentyl glycol, of trimethylolpropane, or of pentaerthyritol; or the reaction product obtained by reacting one mole of a di- or triisocyanate of formula $OCN-R_4-(NCO)_v$, where $R_4$ is defined as in claim 1 and v is 1 or 2, with 2 or 3 moles of a hydroxyalkyl acrylate or methacrylate.

10. A polymer according to claim 1, wherein component B is a mixture of methyl methacrylate and 1 to 25% by weight, based on the total monomer, of neopentylene glycol diacrylate, ethylene glycol dimethacrylate or the reaction product of one mole of isophorone diisocyanate and two moles of 2-hydroxyethyl methacrylate.

11. A polymer according to claim 5, wherein the water insoluble monomer $B_1$ is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or mixtures thereof.

12. A polymer according to claim 5, wherein the water insoluble monomer $B_1$ is selected from the group consisting of 2-ethylhexyl acrylate, 2-ethylhexyl methacrylate, n-butyl acrylate, n-butyl methacrylate, n-octyl acrylate, n-octyl methacrylate, n-decyl acrylate, n-decyl methacrylate, perfluoroalkyl ($C_6-C_{10}$) substituted alkyl acrylate or methacrylate; and mixtures thereof.

13. A polymer according to claim 1, wherein in monomer B the water soluble monomer $B_2$ is an acrylate or methacrylate of formula $CH_2=CR_3COOR_{13}$, an acrylamide or methacrylamide of formula $CH_2=CR_3CONHR_{14}$ or $CH_2=CR_3CON(R_5)_2$, a maleate or fumarate of formula $R_{13}OCOCH=CHCOOR_{13}$, a vinyl ether of formula $CH_2=CHOR_{13}$, an N-vinyl lactam; or a mixture of said monomers, in which formulae $R_3$ is hydrogen or methyl, $R_5$ is hydrogen or lower ($C_1-C_4$) alkyl, $R_{13}$ is a hydrocarbon radical of 1 to 10 carbon atoms, which radical is substituted by one or more water solubilizing groups such as carboxy, hydroxy or tert-amino, or a polyethylene oxide group with 2 to 100 recurring units, or a group which contains sulfate, phosphate, sulfonate or phosphonate groups, and $R_{14}$ is defined as $R_{13}$ or as $R_5$.

14. A polymer according to claim 13, wherein the water soluble monomer $B_2$ is selected from the group consisting of 2-hydroxyethyl methacrylate, N,N-dimethylacrylamide, acrylic acid, methacrylic acid and N-vinyl-2-pyrrolidone.

15. A polymer according to claim 1, wherein component A is a polysiloxane of formula $A_1$ or $A_2$, $R_1$ is alkylene of 3 or 4 carbon atoms, each of $R_2$, $R_a$, $R_b$, $R_c$, $R_d$, $R_e$, $R_f$, $R_g$, $R_h$, $R_i$, $R_j$ and $R_k$ is methyl, $x_1+x_2$ is 10 to 100, $y_1$ is 0 to 2, $y_2$ is 1 to 3, m is 1, each of $E_1$, $E_2$, $E_3$, $T_1$ and $T_2$ is a direct bond, X is $-Z_1-CONH-R_4-NHCO-$, where $Z_1$ is $-O-$ or $-NH-$ and $R_4$ is a divalent aliphatic or cycloaliphatic diisocyanate radical of 6 to 10 carbon atoms, and Y is

$$-Z_2-R_8-\left[R_9-Z_2-CO-\underset{R_3}{\underset{|}{C}}=\underset{R_6}{\underset{|}{CH}}\right]_{t_1}$$

wherein $R_6$ is hydrogen, $R_8$ is ethylene, $R_9$ is a direct bond, and component B contains as crosslinking diolefinic monomer ($B_x$) from 1 to 25%, based on total monomer, of the acrylate or methacrylate of allyl alcohol, of a straight or branched chain alkylene glycol of 2 to 6 carbon atoms, of poly(ethylene oxide)glycol, of poly(propylene oxide)glycol, of poly(n-butylene oxide)glycol, of thiodiethylene glycol, of neopentyl glycol, of trimethylolpropane, or of pentaerythritol; or the reaction product obtained by reacting one mole of a di- or triisocyanate of formula $OCN-R_4-(NCO)_v$, where $R_4$ is defined as in claim 1 and v is 1 or 2, with 2 or 3 moles of a hydroxyalkyl acrylate or methacrylate.

16. A polymer according to claim 15, wherein $B_x$ is neopentyl glycol diacrylate, ethylene glycol dimethacrylate or the reaction product of one mole of isophorone diisocyanate and two moles of 2-hydroxyethyl methacrylate.

17. A polymer according to claim 15, wherein component B contains a water insoluble monomer $B_1$ selected from the group consisting of methyl methacrylate, isopropyl methacrylate, isobutyl methacrylate, tert-butyl methacrylate, isobornyl methacrylate, cyclohexyl methacrylate, hexafluoroisopropyl methacrylate and mixtures thereof.

18. A polymer according to claim 17, wherein component B contains a water insoluble monomer $B_1$ selected from the group consisting of methyl methacrylate, isopropyl methacrylate, isobutyl methacrylate, cyclohexyl methacrylate, isobornyl methacrylate and mixtures thereof.

19. A polymer according to claim 18, wherein component B contains as the water insoluble monomer $B_1$ methyl methacrylate, isobornyl methacrylate or mixtures thereof.

20. A polymer according to claim 15, wherein component B contains a water insoluble monomer $B_1$ which is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or mixtures thereof.

21. A polymer according to claim 15, wherein component B contains a water insoluble monomer $B_1$

selected from the group consisting of 2-ethylhexyl acrylate, n-butyl acrylate, n-butyl methacrylate, n-octyl acrylate, n-octyl methacryhlate, n-decyl acrylate, n-decyl methacrylate, perfluoroalkyl ($C_6$—$C_{10}$) substituted alkyl acrylate or methacrylate; and mixtures thereof.

22. A polymer according to claim 15, wherein component B contains a water soluble monomer $B_2$ selected from the group consisting of 2-hydroxyethyl methacrylate, N,N-dimethylacrylamide, acrylic acid, methacrylic acid and N-vinyl-2-pyrrolidone.

23. A polymer according to claim 15, which comprises (A) from about 15 to about 35% by weight of a polysiloxane of formula $A_2$, $R_4$ being the divalent radical derived from isophorone diisocyanate, each of $Z_1$ and $Z_2$ being —O—, and $y_2$ being 1 or 2, and (B) from about 85 to about 65% by weight of a mixture of a water-insoluble monomer ($B_1$), of a water-soluble monomer ($B_2$), and of a diolefinic monomer ($B_x$), wherein, based on percent by weight of the total weight of monomers, $B_1$ is from about 60 to about 95% of a water-insoluble monomer selected from the group consisting of methyl methacrylate, isopropyl methacrylate, isobutyl methacrylate, tert-butyl methacrylate, cyclohexyl methacrylate, isobornyl methacrylate and mixtures thereof, $B_2$ is from about 15 to about 0% of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and $B_x$ is from about 25 to about 5% of a diolefinic monomer selected from the group consisting of neopentyl glycol diacrylate, ethylene glycol dimethacrylate and the reaction product of one mole of isophorone diisocyanate and two moles of 2-hydroxyethyl methacrylate.

24. A polymer according to claim 15, which comprises (A) from about 40 to about 60% by weight of a polysiloxane of formula $A_2$, $R_4$ being the divalent radical derived from isophorone diisocyanate, each of $Z_1$ and $Z_2$ being —O—, and $y_2$ being 1 or 2, and (B) from about 60 to about 40% by weight of a mixture of a water insoluble monomer ($B_1$), of a water-soluble monomer ($B_2$), and of a diolefinic monomer ($B_x$), wherein, based on percent by weight of the total weight of monomers, $B_1$ is from about 75 to about 100% of a water-insoluble monomer selected from the group consisting of ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate or methacrylate and mixtures thereof and with mixtures thereof with methyl or isobornyl methacrylate, $B_2$ is from about 25 to about 0% of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and $B_x$ is from about 5 to about 0% of a diolefinic monomer selected from the group consisting of neopentyl glycol diacrylate, ethylene glycol dimethacrylate and the reaction product of one mole of isophorone diisocyanate and two moles of 2-hydroxyethyl methacrylate.

25. A hard or soft contact lens prepared from the polymer according to claim 1.

26. A hard contact lens prepared from the polymer according to claim 23.

27. A soft contact lens prepared from the polymer according to claim 24.

**Claims for the Contracting State: AT**

1. A process for the preparation of a polymer, which process comprises copolymerising

(A) from about 8 to about 70% by weight, based on said polymer, of a linear or branched polysiloxane macromer having a molecular weight from about 400 to about 100,000, as measured by end group analysis or gel permeation chromatography, said macromer containing at least two terminal or pendant, polymerizable olefinic groups per each 5000 molecular weight unit of polysiloxane, said groups being attached to the polysiloxane through at least two urethane, thiourethane, urea or amide linkages, said macromer having the structure $A_1$ or $A_2$

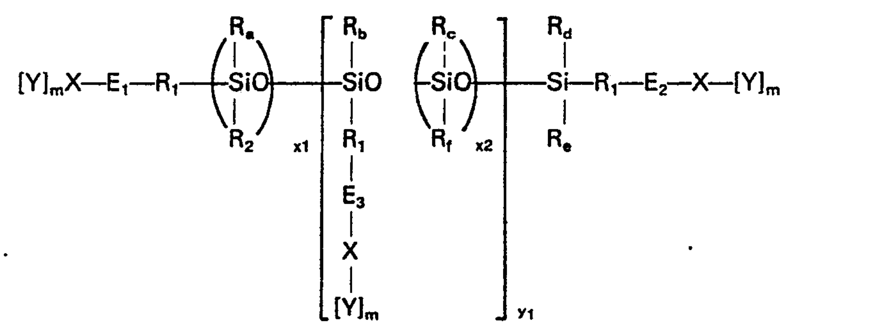

($A_1$)

or

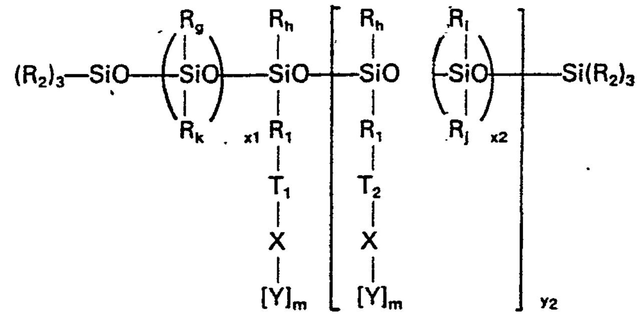

(A₂)

wherein $R_1$ is a linear or branched alkylene group of 2 to 6 carbon atoms or a polyoxyalkylene group of formula G

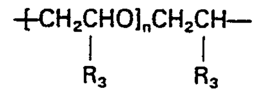

(G)

wherein $R_3$ is hydrogen or methyl and n is an integer from 1—50 and each of $R_2$, $R_a$, $R_b$, $R_c$, $R_d$, $R_e$, $R_f$, $R_g$, $R_h$, $R_i$, $R_j$ and $R_k$ independently of one another is methyl or phenyl, $x_1$ and $x_2$ are integers from 1 to 500, with the proviso that the sum of $x_1+x_2$ is 7 to 1000, $y_1$ is 0 to 14 and $y_2$ is 1 to 13, with the proviso that the ratio of

$$\frac{x_1+x_2}{y_1+y_2}$$

or

$$\frac{x_1+x_2}{y_2+1}$$

is not greater than 70, each of $E_1$, $E_2$, $E_3$, $T_1$ and $T_2$ independently of one another is a direct bond, X is a di- or trivalent radical

$$—Z_1—CO—NH—R_4—(NH—CO—)_v$$

wherein v=1 or 2, $Z_1$ is oxygen, sulfur or $NR_5$, wherein $R_5$ is hydrogen or lower ($C_1$—$C_4$) alkyl, $Z_1$ is connected to $R_1$; and $R_4$ is a di- or trivalent radical obtained by removing the NCO-groups from an aliphatic, cycloaliphatic or aromatic di- or triisocyanate; Y is

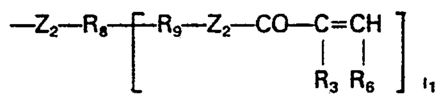

(I)

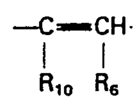

(II)

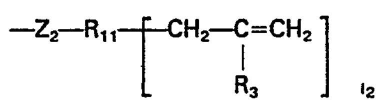

(III)

or

$$—O—R_7—O—CH=CH_2 \qquad (IV)$$

wherein $R_6$ is hydrogen, methyl, $—COOR_5$ or $—COOR_7OH$, with the proviso that if $R_6$ is other than hydrogen, m and $l_1=1$ and $R_8$ is a direct bond; $Z_2$ is oxygen or $—NR_5—$ and $R_7$ is a linear or branched alkylene of 2 to 10 carbon atoms, phenylene or phenylalkylene with 2 to 10 carbon atoms in the alkylene, or polyoxyalkylene of formula G, $R_8$ is $R_7$ or a tri- or tetravalent radical of 2 to 4 carbon atoms; $l_1$ is 1 to 3; $R_9$ is an alkylene group of 2 to 4 carbon atoms or a direct bond, with the proviso that if $l_1=1$, $R_9$ is a direct bond, and it follows that $R_8$ is a divalent radical; $R_{10}$ is hydrogen, methyl or $—CH_2COOH$, with the proviso that if $R_{10}$ is $—CH_2COOH$, $R_6$ is hydrogen; $R_{11}$ is a direct bond or an aliphatic di-, tri- or tetravalent radical of 1 to 6 carbon atoms, and $l_2$ is 1 to 3, with the proviso that if $R_{11}$ is a direct bond, $l_2$ is 1, and

(B) about 92 to about 30% by weight, based on said polymer, of a mixture of water-soluble and water-insoluble monomers or water-insoluble monomers, said monomers being monoolefinic, diolefinic or a mixture of monoolefinic and diolefinic monomers, with from 85 to 100% by weight of the total monomers being water-insoluble.

2. A process according to claim 1, wherein in the polysiloxane of formula $A_1$ or $A_2$, $R_1$ is alkylene of 3 or 4 carbon atoms, each of $R_2$, $R_a$, $R_b$, $R_c$, $R_d$, $R_e$, $R_f$, $R_g$, $R_h$, $R_i$, $R_j$ and $R_k$ is methyl, $x_1+x_2$ is 10 to 100, $y_1$ is 0 to 2, $y_2$ is 1 to 3, m is 1, each of $E_1$, $E_2$, $E_3$, $T_1$ and $T_2$ is a direct bond and X is $—Z_1—CONH—R_4—NHCO—$, where $Z_1$ is —O— or —NH— and $R_4$ is a divalent aliphatic or cycloaliphatic diisocyanate radical of 6 to 10 carbon atoms, and Y is

$$-Z_2-R_8-\left[\begin{array}{l} R_9-Z_2-CO-\underset{R_3}{\underset{|}{C}}=\underset{R_6}{\underset{|}{CH}} \end{array}\right]_{l_1}$$

wherein $R_6$ is hydrogen, $R_8$ is ethylene, $R_9$ is a direct bond, $l_1$ is 1 and $Z_2$ is —O— or $—NC(CH_3)_3—$.

3. A process according to claim 2, wherein the polysiloxane is of formula $A_2$, $R_4$ is the divalent radical derived from isophorone diisocyanate, each of $Z_1$ and $Z_2$ is —O—, and $y_2$ is 1 or 2.

4. A process according to claim 1, wherein the component (B) is present at the 85 to 50% by weight level of the total polymer.

5. A process according to claim 1, wherein monomer B is a water insoluble monomer $B_1$ which is an acrylate or methacrylate of formula $CH_2=CR_3COOR_{12}$, an acrylamide or methacrylamide of formula $CH_2=CR_3CONHR_{12}$, a maleate or fumarate of formula $R_{12}OCOCH=CHCOOR_{12}$, an itaconate of formula $R_{12}OCOC(=CH_2)CH_2COOR_{12}$, a vinyl ester of formula $R_{12}COOCH=CH_2$, a vinyl ether of formula $CH_2=CHOR_{12}$, or a mixture of said monomers, in which formulae $R_3$ is hydrogen or methyl, and $R_{12}$ is a linear or branched aliphatic, cycloaliphatic or aromatic alkyl group of 1 to 21 carbon atoms, which alkyl group may contain ether or thioether linkages or a —CO— group; or is a heterocyclic alkyl group containing oxygen, sulfur or nitrogen atoms, or a polypropylene oxide or poly-n-butylene oxide group with 2 to 50 recurring alkoxy units; or is perfluorinated alkyl groups of 1 to 12 carbon atoms; or is alkyl containing siloxane groups of one to six Si atoms; or —SO— and $—SO_2—$ groups.

6. A process according to claim 5, wherein the water insoluble monomer $B_1$ is selected from the group consisting of methyl methacrylate, isopropyl methacrylate, isobutyl methacrylate, tert-butyl methacrylate, isobornyl methacrylate, cyclohexyl methacrylate, hexafluoroisopropyl methacrylate and mixtures thereof.

7. A process according to claim 6, wherein the water insoluble monomer $B_1$ is selected from the group consisting of methyl methacrylate, isopropyl methacrylate, isobutyl methacrylate, isobornyl methacrylate and mixtures thereof.

8. A process according to claim 1, wherein component (B) contains 1 to 25%, based on the total weight of monomer, of a diolefinic monomer ($B_x$) as crosslinking agent.

9. A process according to claim 1, wherein diolefinic monomer ($B_x$) of component B is the acrylate or methacrylate of allyl alcohol, of a straight or branched chain alkylene glycol of 2 to 6 carbon atoms, of poly(ethylene oxide)glycol, of poly(propylene oxide)glycol, of poly(n-butylene oxide)glycol, of thiodiethylene glycol, of neopentyl glycol, of trimethylolpropane, or of pentaerythritol; or the reaction product obtained by reacting one mole of a di- or triisocyanate of formula $OCN—R_4—(NCO)_v$, where $R_4$ is defined as in claim 1 and v is 1 or 2, with 2 or 3 moles of a hydroxyalkyl acrylate or methacrylate.

10. A process according to claim 1, wherein component B is a mixture of methyl methacrylate and 1 to 25% by weight, based on the total monomer, of neopentylene glycol diacrylate, ethylene glycol dimethacrylate or the reaction product of one mole of isophorone diisocyanate and two moles of 2-hydroxyethyl methacrylate.

11. A process according to claim 5, wherein the water insoluble monomer $B_1$ is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or mixtures thereof.

12. A process according to claim 5, wherein the water insoluble monomer $B_1$ is selected from the group consisting of 2-ethylhexyl acrylate, 2-ethylhexyl methacrylate, n-butyl acrylate, n-butyl methacrylate, n-octyl acrylate, n-octyl methacrylate, n-decyl acrylate, n-decyl methacrylate, perfluoroalkyl ($C_6—C_{10}$) substituted alkyl acrylate or methacrylate; and mixtures thereof.

13. A process according to claim 1, wherein in monomer B the water soluble monomer $B_2$ is an acrylate or methacrylate of formula $CH_2=CR_3COOR_{13}$, an acrylamide or methacrylamide of formula $CH_2=CR_3CONHR_{14}$ or $CH_2=CR_3CON(R_5)_2$, a maleate or fumarate of formula $R_{13}OCOCH=CHCOOR_{13}$, a vinyl ether of formula $CH_2=CHOR_{13}$, an N-vinyl lactam; or a mixture of said monomers, in which formulae $R_3$ is hydrogen or methyl, $R_5$ is hydrogen or lower ($C_1—C_4$) alkyl, $R_{13}$ is a hydrocarbon radical of 1 to 10 carbon atoms, which radical is substituted by one or more water solubilizing groups such as carboxy, hydroxy or tert-amino, or a polyethylene oxide group with 2 to 100 recurring units, or a group which contains sulfate, phosphate, sulfonate or phosphonate groups, and $R_{14}$ is defined as $R_{13}$ or as $R_5$.

14. A process according to claim 13, wherein the water soluble monomer $B_2$ is selected from the group consisting of 2-hydroxyethyl methacrylate, N,N-dimethylacrylamide, acrylic acid, methacrylic acid and N-vinyl-2-pyrrolidone.

15. A process according to claim 1, wherein component A is a polysiloxane of formula $A_1$ or $A_2$, $R_1$ is alkylene of 3 or 4 carbon atoms, each of $R_2$, $R_a$, $R_b$, $R_c$, $R_d$, $R_e$, $R_f$, $R_g$, $R_h$, $R_i$, $R_j$ and $R_k$ is methyl, $x_1+x_2$ is 10 to 100, $y_1$ is 0 to 2, $y_2$ is 1 to 3, m is 1, each of $E_1$, $E_2$, $E_3$, $T_1$ and $T_2$ is a direct bond, X is

$-Z_1-CONH-R_4-NHCO-$, where $Z_1$ is $-O-$ or $-NH-$ and $R_4$ is a divalent aliphatic or cycloaliphatic diisocyanate radical of 6 to 10 carbon atoms, and Y is

$$-Z_2-R_8-\left[\begin{array}{l} R_9-Z_2-CO-\underset{R_3}{\underset{|}{C}}=\underset{R_6}{\underset{|}{CH}} \end{array}\right]_{l_1}$$

wherein $R_6$ is hydrogen, $R_8$ is ethylene, $R_9$ is a direct bond, $l_1$ is 1 and $Z_2$ is $-O-$ or $-NC(CH_3)_3-$, and component B contains as crosslinking diolefinic monomer ($B_x$) from 1 to 25%, based on total monomer, of the acrylate or methacrylate of allyl alcohol, of a straight or branched chain alkylene glycol of 2 to 6 carbon atoms, of poly(ethylene oxide)glycol, of poly(propylene oxide)glycol, of poly(n-butylene oxide)glycol, of thiodiethylene glycol, of neopentyl glycol, of trimethylolpropane, or of pentaerythritol; or the reaction product obtained by reacting one mole of a di- or triisocyanate of formula $OCN-R_4-(NCO)_v$, where $R_4$ is defined as in claim 1 and v is 1 or 2, with 2 or 3 moles of a hydroxyalkyl acrylate or methacrylate.

16. A process according to claim 15, wherein $B_x$ is neopentyl glycol diacrylate, ethylene glycol dimethacrylate or the rection product of one mole of isophorone diisocyanate and two moles of 2-hydroxyethyl methacrylate.

17. A process according to claim 15, wherein component B contains a water insoluble monomer $B_1$ selected from the group consisting of methyl methacrylate, isopropyl methacrylate, isobutyl methacrylate, tert-butyl methacrylate, isobornyl methacrylate, cyclohexyl methacrylate, hexafluoroisopropyl methacrylate and mixtures thereof.

18. A process according to claim 17, wherein component B contains a water insoluble monomer $B_1$ selected from the group consisting of methyl methacrylate, isopropyl methacrylate, isobutyl methacrylate, cyclohexyl methacrylate, isobornyl methacrylate and mixtures thereof.

19. A process according to claim 18, wherein component B contains as the water insoluble monomer $B_1$ methyl methacrylate, isobornyl methacrylate or mixtures thereof.

20. A process according to claim 15, wherein component B contains a water insoluble monomer $B_1$ which is a mixture of vinyl acetate and dimethyl maleate in a 2/1 to 5/1 molar ratio plus methyl methacrylate, isopropyl methacrylate, isobutyl methacrylate, tert-butyl methacrylate, cyclohexyl methacrylate or hexafluoroisopropyl methacrylate or mixtures thereof.

21. A process according to claim 15, wherein component B contains a water insoluble monomer $B_1$ selected from the group consisting of 2-ethylhexyl acrylate, n-butyl acrylate, n-butyl methacrylate, n-octyl acrylate, n-oxtyl methacrylate, n-decyl acrylate, n-decyl methacrylate, perfluoroalkyl ($C_6-C_{10}$) substituted alkyl acrylate or methacrylate; and mixtures thereof.

22. A process according to claim 15, wherein component B contains a water soluble monomer $B_2$ selected from the group consisting of 2-hydroxyethyl methacrylate, N,N-dimethylacrylamide, acrylic acid, methacrylic acid and N-vinyl-2-pyrrolidone.

23. A process according to claim 15, which process comprises copolymerising (A) from about 15 to about 35% by weight of a polysiloxane of formula $A_2$, $R_4$ being the divalent radical derived from isophorone diisocyanate, each of $Z_1$ and $Z_2$ being $-O-$, and $y_2$ being 1 or 2, and (B) from about 85 to about 65% by weight of a mixture of a water-insoluble monomer ($B_1$), of a water-soluble monomer ($B_2$), and of a diolefinic monomer ($B_x$), wherein, based on percent by weight of the total weight of monomers, $B_1$ is from about 60 to about 95% of a water-insoluble monomer selected from the group consisting of methyl methacrylate, isopropyl methacrylate, isobutyl methacrylate, tert-butyl methacrylate, cyclohexyl methacrylate, isobornyl methacrylate and mixtures thereof, $B_2$ is from about 15 to about 0% of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and $B_x$ is from about 25 to about 5% of a diolefinic monomer selected from the group consisting of neopentyl glycol diacrylate, ethylene glycol dimethacrylate and the reaction product of one mole of isophorone diisocyanate and two moles of 2-hydroxyethyl methacrylate.

24. A process according to claim 15, which process comprises copolymerising (A) from about 40 to 60% by weight of a polysiloxane of formula $A_2$, $R_4$ being the divalent radical derived from isophorone diisocyanate, each of $Z_1$ and $Z_2$ being $-O-$, and $y_2$ being 1 or 2, and (B) from about 60 to about 40% by weight of a mixture of a water insoluble monomer ($B_1$), of a water-soluble monomer ($B_2$), and of a diolefinic monomer ($B_x$), wherein, based on percent by weight of the total weight of monomers, $B_1$ is from about 75 to about 100% of a water-insoluble monomer selected from the group consisting of ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate or methacrylate and mixtures thereof and with mixtures thereof with methyl or isobornyl methacrylate, $B_2$ is from about 25 to about 0% of a water-soluble monomer selected from the group consisting of 2-hydroxyethyl methacrylate, N,N-dimethylacrylamide, acrylic acid, methacrylic acid, N-vinyl-2-pyrrolidone and mixtures thereof, and $B_x$ is from about 5 to about 0% of a diolefinic monomer selected from the group consisting of neopentyl glycol diacrylate, ethylene glycol dimethacrylate and the reaction product of one mole of isophorone diisocyanate and two moles of 2-hydroxyethyl methacrylate.

25. A process according to claim 1, in which the copolymerisation is carried out by radical copolymerisation, in bulk or in the presence of a solvent.

26. A process according to claim 25, in which the radical copolymerisation is carried out by heat or irradiation.

27. A process according to claim 26, in which the copolymerisation is carried out by heat in the temperature range from 40°C to 105°C in the presence of a radical generating initiator.

28. A process according to claim 26, in which the copolymerisation is carried out by UV irradiation in the presence of a photoinitiator.